# EUROPEAN PATENT SPECIFICATION

(11) **EP 3 369 899 B1**
(45) Date of publication and mention of the grant of the patent: **03.06.2020**
(21) Application number: 16878684.6
(22) Date of filing: 20.12.2016
(51) Int. Cl.: F01N 3/18, F01N 3/22, F01N 3/30, F01N 3/34, F02D 41/04, F02D 41/22, F02D 43/00, F02D 45/00, F01N 9/00, F01N 11/00, F01N 13/10

(54) **SADDLE-TYPE VEHICLE**
SATTELFAHRZEUG
VÉHICULE DU TYPE À SELLE

(30) Priority: 22.12.2015 JP 2015249476
(43) Date of publication of application: 05.09.2018
(73) Proprietor: Yamaha Hatsudoki Kabushiki Kaisha, Iwata-shi, Shizuoka 438-8501 (JP)
(72) Inventor: NISHIGAKI, Masato, Iwata-shi Shizuoka 438-8501 (JP); HARA, Takahiko, Iwata-shi Shizuoka 438-8501 (JP)
(74) Representative: Stöckeler, Ferdinand
(86) International application number: PCT/JP2016/087918
(87) International publication number: WO 2017/110795

(56) References cited:
- EP-A2- 0 694 680
- EP-A2- 1 293 648
- JP-A- H0 842 334
- JP-A- 2006 063 944
- JP-A- 2010 090 904
- JP-A- 2011 196 295
- JP-A- 2011 220 248
- US-A1- 2014 114 551

## Description

### [Technical Field]

The present invention relates to a straddled vehicle.

### [Background Art]

An engine unit of a straddled vehicle, in which at least one combustion chamber is formed in an engine main body, has been known. A dedicated exhaust passage member is connected to each combustion chamber. Exhaust gas exhausted from each combustion chamber flows into this dedicated exhaust passage member. The exhaust gas having passed the dedicated exhaust passage member is purified by a catalyst in an exhaust passage member which includes the dedicated exhaust passage member. In the engine unit of the straddled vehicle, furthermore, a fuel supply amount of fuel supplied to the combustion chamber is controlled in accordance with a required engine performance.

In connection with such an engine unit, a secondary air supplier configured to supply secondary air to exhaust gas has been proposed (Patent Literature 1). The secondary air supplier is configured to purify exhaust gas by burning unburned substances included in the exhaust gas by the secondary air. To be more specific, the secondary air supplier of the straddled vehicle supplies secondary air to the dedicated exhaust passage member corresponding to each combustion chamber. Each dedicated exhaust passage member is connected to a dedicated secondary air supply passage member which allows secondary air to pass therethrough. The dedicated secondary air supply passage member includes a dedicated reed valve which is provided for each combustion chamber. The dedicated secondary air supply passage member is provided downstream of the dedicated reed valve. With this arrangement, secondary air for burning unburned substances is secured for each combustion chamber. In this way, in the straddled vehicle of Patent Literature 1, the engine performance required for the straddled vehicle and the purification performance of purifying the exhaust gas are both achieved.

EP 1 293 648 A2 discloses a secondary air supply apparatus to control emissions from an engine through secondary combustion of combustible matters in exhaust gas. Air is supplied to an exhaust pipe upstream of an emission control device. A pressure behavior pattern is determined from a pressure value detected by a pressure sensor disposed between an air pump and an open-close valve. The secondary air supply apparatus determines operational states of the air pump and the open-close valve based on variations of the pressure behavior pattern at the time of a secondary air supply control and at the time of a secondary air stop control.

US 2014/114551 A1 discloses a diagnostic system for a vehicle. A first difference module generates a first difference based on a first pressure measured at a first secondary air injection valve and a previous value of the first pressure. A first summer module generates a first accumulated difference based on a sum of values of the first difference generated during a predetermined period. A second difference module generates a second difference based on a second pressure measured at a second secondary air injection valve and a previous value of the second pressure. A second summer module generates a second accumulated difference based on a sum of values of the second difference generated during the predetermined period. A fault indication module selectively indicates that a fault is present downstream of one of the first and second secondary air injection valves based on the first and second accumulated differences.

### [Citation List]

### [Patent Literatures]

[PTL 1] Japanese Unexamined Patent Publication No. H8-42334

### [Summary of Invention]

### [Technical Problem]

Recently, it has been required for straddled vehicles to further improve a purification performance of purifying exhaust gas while maintaining an engine performance. In this connection, it has been found that the purification performance of purifying exhaust gas is deteriorated after long time use. On this account, it has been required to maintain an initial engine performance of a straddled vehicle for a longest possible time, while improving the purification performance of purifying exhaust gas.

The present teaching provides a straddled vehicle in which an engine performance and a purification performance of purifying an exhaust gas are both achieved in an engine unit including a dedicated reed valve and a dedicated secondary air supply passage member downstream of the dedicated reed valve.

### [Solution to Problem]

The purification performance of purifying exhaust gas in a straddled vehicle including a secondary air supplier typically deteriorates after long time use of the straddled vehicle. A cause of this problem was examined. In the straddled vehicle of Patent Literature 1, a plurality of combustion chambers are formed in the engine main body. Exhaust gas exhausted from each combustion chamber passes through a dedicated exhaust passage member formed for each combustion chamber. A secondary air supplier of the straddled vehicle supplies secondary air when the engine main body is at least under a cold state. The secondary air supplier of the straddled vehicle supplies secondary air to the dedicated exhaust passage member corresponding to each combustion chamber. To be more specific, the secondary air is sucked through an air inlet. The secondary air supplier includes a secondary air supply passage member by which the secondary air flows from the air inlet to each dedicated exhaust passage member. A dedicated secondary air supply passage is formed in the secondary air supply passage member. The dedicated secondary air supply passage is formed for each combustion chamber. The secondary air supply passage member is provided for each combustion chamber and includes a dedicated secondary air supply passage member which allows the secondary air to pass. The dedicated secondary air supply passage member is connected to each dedicated exhaust passage member. A dedicated reed valve is provided in the dedicated secondary air supply passage member. A secondary air supply valve for allowing or stopping the supply of the secondary air is provided in the secondary air supply passage member upstream of the dedicated reed valve. With this arrangement, secondary air for burning unburned substances is secured for each combustion chamber. Meanwhile, the dedicated secondary air supply passage is formed for each combustion chamber. On this account, a cross sectional area of the dedicated secondary air supply passage member cut along the direction orthogonal to the flow direction of the secondary air is small. Furthermore, a cross sectional area of the passage cut along the direction orthogonal to the flow direction of the secondary air, in which the dedicated reed valve is provided, is small. In other words, a cross sectional area of the dedicated secondary air supply passage member downstream of the dedicated reed valve, which is cut along the direction orthogonal to the flow direction of the secondary air, is small. On this account, deposits such as soot tend to be adhered to the inside of the dedicated secondary air supply passage member downstream of the dedicated reed valve. It has therefore been known that the dedicated secondary air passage member downstream of the dedicated reed valve tends to clog. When the dedicated secondary air supply passage member downstream of the dedicated reed valve clogs, secondary air is not supplied to the dedicated exhaust passage member. The purification performance of purifying exhaust gas by a catalyst is improved by burning unburned substances in exhaust gas before passing the catalyst and by resolving oxygen deficiency in the catalyst. The unburned substances in the exhaust gas are therefore not burned unless the secondary air is supplied. Furthermore, oxygen deficiency occurs in the catalyst. The purification performance of purifying the exhaust gas is therefore deteriorated.

When clogging of the dedicated secondary air supply passage member downstream of the dedicated reed valve is detectable, it is possible to perform maintenance in the dedicated secondary air supply passage member downstream of the dedicated reed valve. That is to say, when the clogging of the dedicated secondary air supply passage member downstream of the dedicated reed valve is detected, the information is notified or recorded. Based on this information, it is possible to prompt a rider, etc. to perform maintenance in the dedicated secondary air supply passage downstream of the dedicated reed valve. Deposits in the dedicated secondary air supply passage downstream of the dedicated reed valve are removed by performing maintenance in the dedicated secondary air supply passage downstream of the dedicated reed valve. The purification performance of purifying the exhaust gas is therefore recovered. In this way, the engine performance of the engine unit including the dedicated reed valve and the dedicated secondary air supply passage member downstream of the dedicated reed valve and the purification performance of purifying the exhaust gas are both achieved.

Under this circumstance, the inventors of the subject application tried to find a way to detect the clogging of the dedicated secondary air supply passage member downstream of the dedicated reed valve. To begin with, the inventors tried to directly detect the state of clogging of the dedicated secondary air supply passage member downstream of the dedicated reed valve by providing a device configured to detect an index indicating the state of gas in the dedicated secondary air supply passage member downstream of the dedicated reed valve. However, providing the device configured to detect an index indicating the state of gas in some cases accelerated the accumulation of deposits in the dedicated secondary air supply passage member downstream of the dedicated reed valve. The inventors then tried to detect the state of clogging of the dedicated secondary air supply passage member downstream of the dedicated reed valve by providing a device configured to detect an index indicating the state of gas at a position other than the dedicated secondary air supply passage member. The inventors found to detect the clogging of the dedicated secondary air supply passage member downstream of the dedicated reed valve based on an index indicating the state of gas detected by the device.

The secondary air supplier including the dedicated secondary air supply passage member downstream of the dedicated reed valve functions as follows. The secondary air supplier including the dedicated secondary air supply passage member downstream of the dedicated reed valve is provided in the dedicated exhaust passage member. For this reason, the secondary air supplier is relatively close to the combustion chamber as compared to a case where, for example, the secondary air supplier is provided in an exhaust passage member connected to a plurality of dedicated exhaust passage members. Secondary air is supplied to the dedicated exhaust passage member from the dedicated secondary air supply passage member downstream of the dedicated reed valve, by utilizing pressure pulsation in the dedicated exhaust passage member. Furthermore, secondary air is supplied to hot exhaust gas in the dedicated exhaust passage member which is relatively close to the combustion chamber. This makes it possible to burn a large amount of unburned substances in the exhaust gas, before reaching the catalyst. The purification performance of purifying the exhaust gas is therefore maintained for a long time. Because more unburned substances in the exhaust gas are burned before reaching the catalyst, it is possible to maintain the purification performance of purifying the exhaust gas even when the engine main body is under the cold state and the temperature of the catalyst is low.

Under this circumstance, the inventors of the subject application compared a normal state in which the dedicated secondary air supply passage member downstream of the dedicated reed valve did not clog with a clogged state in which the dedicated secondary air supply passage member downstream of the dedicated reed valve clogged, when the engine main body was under the cold state. The inventors then investigated a position where a difference between physical amounts was large and the physical amounts, in the normal state and the clogged state.

To begin with, the inventors investigated a difference in oxygen density between the normal state and the clogged state. The secondary air supplier including the dedicated secondary air supply passage member downstream of the dedicated reed valve is relatively close to the combustion chamber. It is therefore possible to secure a sufficient amount of secondary air supplied to the dedicated exhaust passage member from the dedicated secondary air supply passage member downstream of the dedicated reed valve, by utilizing pressure pulsation in the dedicated exhaust passage member. When the engine main body is under the cold state, fuel is often supplied so that the air-fuel ratio is equal to the stoichiometric air-fuel ratio or is rich as compared to the stoichiometric air-fuel ratio. On this account, in the normal state, when the secondary air supply valve is operated so that the secondary air supplier supplies secondary air, the secondary air is supplied to the dedicated exhaust passage member from the dedicated secondary air supply passage member downstream of the dedicated reed valve. The oxygen density therefore becomes lean as compared to the stoichiometric air-fuel ratio. Meanwhile, in the clogged state, even if the secondary air supply valve is operated so that the secondary air supplier supplies secondary air, the secondary air is not supplied to the dedicated exhaust passage member from the dedicated secondary air supply passage member downstream of the dedicated reed valve. The oxygen density therefore becomes rich in comparison with the oxygen density in the normal state. As such, a difference in oxygen density between the normal state and the clogged state is easily detectable. The inventors found that the clogging of the dedicated secondary air supply passage member downstream of the dedicated reed valve was detectable by, for example, providing a device configured to detect oxygen density provided in the exhaust passage member upstream of the catalyst. The inventors further found that fixation of the dedicated reed valve or the secondary air supply valve to the closed state was detectable by the device configured to detect oxygen density provided in the exhaust passage member upstream of the catalyst. The inventors further found that fixation of the secondary air supply valve to the open state was detectable by detecting the oxygen density when the secondary air supplier operated the secondary air supply valve to stop the supply of the secondary air, by the device configured to detect oxygen density provided in the exhaust passage member upstream of the catalyst. Furthermore, the inventors found that it was possible to detect that the dedicated secondary air supply passage member downstream of the dedicated reed valve was about to clog, depending on the type of the engine and a position of the device detecting the oxygen density.

In addition to the above, a difference in temperature between the normal state and the clogged state was investigated. In the secondary air supplier, secondary air is supplied to the dedicated exhaust passage member from the dedicated secondary air supply passage member downstream of the dedicated reed valve. This makes it possible to burn a large amount of unburned substances in the exhaust gas, before reaching the catalyst. Pulsation of the pressure is significant in the dedicated exhaust passage member. On this account, backward flow of hot exhaust gas from the dedicated exhaust passage member to the dedicated secondary air supply passage member downstream of the dedicated reed valve tends to occur. Furthermore, when the engine main body is under the cold state, the temperatures of components of the engine main body are basically low. For this reason, the temperatures of the components of the engine main body significantly vary in the normal state. Meanwhile, variations in temperature of the components of the engine main body are restrained in the clogged state. As such, a difference in temperature between the normal state and the clogged state is easily detectable. The inventors found that the clogging of the dedicated secondary air supply passage member downstream of the dedicated reed valve was detectable by, for example, providing a device configured to detect temperature in at least one of the following locations. The location where the device for detecting temperature is, for example, (1) the exhaust passage member on which the catalyst is provided or the exhaust passage member downstream of the catalyst, (2) the secondary air supply passage member upstream of the dedicated reed valve and downstream of the secondary air supply valve, or (3) the secondary air supply passage member upstream of the secondary air supply valve. The inventors further found that fixation of the dedicated reed valve or the secondary air supply valve to the closed state was detectable by the device detecting temperature provided at one of these locations. The inventors further found that fixation of the dedicated reed valve or the secondary air supply valve to the open state was detectable by detecting the temperature when the secondary air supplier operated the secondary air supply valve to stop the supply of the secondary air by the device detecting temperature provided at one of these locations. Furthermore, the inventors found that it was possible to detect that the dedicated secondary air supply passage member downstream of the dedicated reed valve was about to clog, depending on the type of the engine and a position of the device detecting the temperature.

In addition to the above, a difference in pressure between the normal state and the clogged state was investigated. Pulsation of the pressure is significant in the dedicated exhaust passage member. The pulsation of pressure tends to reach the dedicated secondary air supply passage member downstream of the dedicated reed valve from the dedicated exhaust passage member pressure. Furthermore, when the engine main body is under the cold state, the intake air amount of the engine main body is increased by, for example, increasing the throttle opening degree as compared to a case where the engine main body is under the warm-up state. The amount of the exhaust gas exhausted to the dedicated exhaust passage member therefore increases. On this account, when the engine main body is under the cold state, the pulsation is significant as compared to a case where the engine main body is under the warm-up state. Therefore, when the engine main body is under the cold state, the pulsation of pressure tends to reach the dedicated secondary air supply passage member downstream of the dedicated reed valve from the dedicated exhaust passage member as compared to a case where the engine main body is under the warm-up state. In the normal state, the pressure in the dedicated secondary air supply passage member downstream of the dedicated reed valve significantly varies. Meanwhile, in the clogged state, the pressure in the dedicated secondary air supply passage member clogged state downstream of the dedicated reed valve does not greatly vary. As such, a difference in pressure between the normal state and the clogged state is easily detectable. The inventors found that the clogging of the dedicated secondary air supply passage member downstream of the dedicated reed valve was detectable by, for example, providing a device configured to detect pressure in at least one of the following locations. The location where the device for detecting pressure is, for example, (1) the secondary air supply passage member upstream of the dedicated reed valve and downstream of the secondary air supply valve or (2) the secondary air supply passage member upstream of the secondary air supply valve. The inventors further found that fixation of the dedicated reed valve or the secondary air supply valve to the closed state was detectable by the device detecting pressure provided at one of these locations. The inventors further found that fixation of the dedicated reed valve or the secondary air supply valve to the open state was detectable by detecting the pressure when the secondary air supplier operated the secondary air supply valve to stop the supply of the secondary air by the device detecting pressure provided at one of these locations.

In addition to the above, a difference in flow rate between the normal state and the clogged state was investigated. Pulsation of the pressure is significant in the dedicated exhaust passage member. It is therefore possible to secure a sufficient flow rate of secondary air supplied to the dedicated exhaust passage member from the dedicated secondary air supply passage member downstream of the dedicated reed valve, by utilizing pressure pulsation in the dedicated exhaust passage member. Furthermore, when the engine main body is under the cold state, the intake air amount of the engine main body is increased by, for example, increasing the throttle opening degree as compared to a case where the engine main body is under the warm-up state. The amount of the exhaust gas exhausted to the dedicated exhaust passage member therefore increases. On this account, when the engine main body is under the cold state, the pulsation is significant as compared to a case where the engine main body is under the warm-up state. Therefore, when the engine main body is under the cold state, the flow rate of the secondary air supplied to the dedicated exhaust passage member from the dedicated secondary air supply passage member downstream of the dedicated reed valve is further secured as compared to a case where the engine main body is under the warm-up state. In the normal state, the flow rate of the secondary air passing the secondary air supply passage member significantly varies. Meanwhile, in the clogged state, the flow rate of the secondary air in the dedicated secondary air supply passage member downstream of the dedicated reed valve is zero. As such, it is easy to detect a difference in flow rate of secondary air between the normal state and the clogged state. The inventors found that the clogging of the dedicated secondary air supply passage member downstream of the dedicated reed valve was detectable by, for example, providing a device configured to detect flow rate in at least one of the following locations. The location where the device for detecting flow rate is, for example, (1) the secondary air supply passage member upstream of the dedicated reed valve and downstream of the secondary air supply valve or (2) the secondary air supply passage member upstream of the secondary air supply valve. The inventors further found that fixation of the dedicated reed valve or the secondary air supply valve to the closed state was detectable by the device detecting flow rate provided at one of these locations. The inventors further found that fixation of the secondary air supply valve to the open state was detectable by detecting the flow rate when the secondary air supplier operated the secondary air supply valve to stop the supply of the secondary air by the device detecting flow rate provided at one of these locations. Furthermore, the inventors found that it was possible to detect that the dedicated secondary air supply passage member downstream of the dedicated reed valve was about to clog, depending on the type of the engine and a position of the device detecting flow rate.

According to one aspect of the present teaching, a straddled vehicle includes: a vehicle body frame; a seat supported by the vehicle body frame; and an engine unit provided below an upper end of the seat and supported by the vehicle body frame.
The engine unit includes: at least one combustion chamber formed inside the engine main body; a fuel supplier provided for each of the at least one combustion chamber and configured to supply fuel to the corresponding combustion chamber; and a catalyst configured to purify exhaust gas passing a dedicated exhaust passage which is provided for each combustion chamber and between the combustion chamber and a discharge port though which the exhaust gas is discharged to atmosphere. The engine unit includes a dedicated reed valve which is provided for each of the at least one combustion chamber and in a dedicated secondary air supply passage supplying, as secondary air, air sucked through an air inlet through which air is sucked from the atmosphere to the dedicated exhaust passage, the dedicated reed valve being in an open state when a pressure difference by subtracting a pressure in the dedicated secondary air supply passage downstream of the dedicated reed valve in a flow direction of the secondary air from a pressure in the dedicated secondary air supply passage upstream of the dedicated reed valve in the flow direction of the secondary air is equal to or higher than a predetermined pressure and opening the dedicated secondary air supply passage, and the dedicated reed valve being in a closed state when the pressure difference by subtracting the pressure in the dedicated secondary air supply passage downstream of the dedicated reed valve in the flow direction of the secondary air from the pressure in the dedicated secondary air supply passage upstream of the dedicated reed valve in the flow direction of the secondary air is lower than the predetermined pressure and closing the dedicated secondary air supply passage.
The engine unit includes a secondary air supply valve which is provided in the dedicated secondary air supply passage upstream of the dedicated reed valve in the flow direction of the secondary air, the secondary air supply valve in an open state opening the dedicated secondary air supply passage to allow the secondary air to be supplied to the dedicated secondary air supply passage, and the secondary air supply valve in a closed state closing the dedicated secondary air supply passage to stop supply of the secondary air to the dedicated secondary air supply passage.
The engine unit includes: a dedicated exhaust passage member which is provided for each of the at least one combustion chamber and is connected to the combustion chamber at an upstream end portion of the dedicated exhaust passage member in a flow direction of the exhaust gas, a part of the dedicated exhaust passage being formed inside the dedicated exhaust passage member; an upstream exhaust passage member which is connected to the dedicated exhaust passage member at an upstream end portion of the upstream exhaust passage member in the flow direction of the exhaust gas and is provided upstream of the catalyst in the flow direction of the exhaust gas, a part of the dedicated exhaust passage being formed inside the upstream exhaust passage member; a catalyst exhaust passage member which is connected to the upstream exhaust passage member at an upstream end portion of the catalyst exhaust passage member in the flow direction of the exhaust gas and includes the catalyst in which a part of the dedicated exhaust passage is formed; and a downstream exhaust passage member which is connected to the catalyst exhaust passage member at an upstream end portion of the downstream exhaust passage member in the flow direction of the exhaust gas, includes the discharge port at a downstream end portion of the downstream exhaust passage member in the flow direction of the exhaust gas, and is provided downstream of the catalyst in the flow direction of the exhaust gas, a part of the dedicated exhaust passage being formed in the downstream exhaust passage member.
The engine unit includes: a dedicated secondary air supply passage member which is provided for each of the at least one combustion chamber, is connected to the dedicated exhaust passage member at a downstream end portion of the dedicated secondary air supply passage member in the flow direction of the secondary air, is connected to the dedicated reed valve at an upstream end portion of the dedicated secondary air supply passage member in the flow direction of the secondary air, and is provided downstream of the dedicated reed valve in the flow direction of the secondary air, a part of the dedicated secondary air supply passage being formed in the dedicated secondary air supply passage member; a downstream secondary air supply passage member which is connected to the dedicated reed valve at a downstream end portion of the downstream secondary air supply passage member in the flow direction of the secondary air, is connected to the secondary air supply valve at an upstream end portion of the downstream secondary air supply passage member in the flow direction of the secondary air, and is downstream of the secondary air supply valve in the flow direction of the secondary air, a part of the dedicated secondary air supply passage being formed in the downstream secondary air supply passage member; and an upstream secondary air supply passage member connected to the secondary air supply valve at a downstream end portion of the upstream secondary air supply passage member in the flow direction of the secondary air, includes the air inlet at an upstream end portion of the upstream secondary air supply passage member in the flow direction of the secondary air, and is upstream of the secondary air supply valve in the flow direction of the secondary air, a part of the dedicated secondary air supply passage being formed in the upstream secondary air supply passage member.
The engine unit includes a gas state detection device which is not for the dedicated secondary air supply passage member and is configured to detect an index indicating a state of gas in a passage member other than the dedicated secondary air supply passage member downstream of the dedicated reed valve, the index indicating the state of the gas being at least one of (1) oxygen density of gas in the dedicated exhaust passage member and the upstream exhaust passage member, (2) a temperature of gas in the downstream secondary air supply passage member, the upstream secondary air supply passage member, the catalyst exhaust passage member, and the downstream exhaust passage member, (3) a pressure of gas in the downstream secondary air supply passage member and the upstream secondary air supply passage member, or (4) a flow rate of gas in the downstream secondary air supply passage member and the upstream secondary air supply passage member.
The engine unit includes a controller which includes (a) a fuel supply amount control unit configured to control an amount of fuel supplied by the fuel supplier; (b) a secondary air supply control unit which is configured to control the secondary air supply valve to be in the open state or the closed state and control the secondary air supply valve to be in the open state when the engine main body is driven at least under a cold state; and (c) a detection unit configured to be able to detect clogging of the dedicated secondary air supply passage member downstream of the dedicated reed valve based on a signal of the gas state detection device which is not for the dedicated secondary air supply passage member, when the secondary air supply control unit controls the secondary air supply valve to be in the open state.

According to the arrangement above, the dedicated reed valve is provided for each combustion chamber. The dedicated reed valve is connected to the downstream secondary air supply passage member and the dedicated secondary air supply passage member downstream of the dedicated reed valve. The secondary air supply valve is connected to the upstream end portion of the downstream secondary air supply passage member in the flow direction of the secondary air and the downstream end portion of the upstream secondary air supply passage member in the flow direction of the secondary air. The fuel supply amount control unit of the controller is configured to control the secondary air supply valve to be in the open state when the engine main body is driven at least under the cold state. In the open state, the secondary air supply valve causes the downstream secondary air supply passage member to communicate with the upstream secondary air supply passage member. In the closed state, the secondary air supply valve disconnects the downstream secondary air supply passage member from the upstream secondary air supply passage member. The control of the secondary air supply valve to be in the open state indicates that a signal instructing the secondary air supply valve to open has been sent from the controller to the secondary air supply valve. It does not matter whether the secondary air supply valve has properly opened or not. The dedicated reed valve is in the open state in the following case. A pressure difference by subtracting the pressure in the dedicated secondary air supply passage in the dedicated secondary air supply passage member downstream of the dedicated reed valve from the pressure in the dedicated secondary air supply passage in the downstream secondary air supply passage member is equal to or higher than a predetermined pressure. In the open state, the dedicated reed valve causes the downstream secondary air supply passage member to communicate with the dedicated secondary air supply passage member downstream of the dedicated reed valve. The dedicated reed valve is in the closed state in the following case. The pressure difference by subtracting the pressure in the dedicated secondary air supply passage in the dedicated secondary air supply passage member downstream of the dedicated reed valve from the pressure in the dedicated secondary air supply passage in the downstream secondary air supply passage member is lower than the predetermined pressure. In the closed state, the dedicated reed valve disconnects the downstream secondary air supply passage member from the dedicated secondary air supply passage member downstream of the dedicated reed valve. In this way, the dedicated reed valve is opened or closed based on the pressure difference between the pressure in the dedicated secondary air supply passage in the downstream secondary air supply passage member and the pressure in the dedicated secondary air supply passage in the dedicated secondary air supply passage member downstream of the dedicated reed valve. The exhaust gas is periodically exhausted from the combustion chamber to the dedicated exhaust passage member. For this reason, the pressure in the dedicated exhaust passage member periodically varies on account of the exhaust gas. In other words, the pressure in the dedicated exhaust passage member pulsates. This is termed exhaust pulse. Accordingly, the pressure in the dedicated secondary air supply passage member downstream of the dedicated reed valve and connected to the dedicated exhaust passage member periodically varies. Meanwhile, the pressure in the downstream secondary air supply passage member downstream of the dedicated reed valve and connected to the upstream end portion of the dedicated secondary air supply passage member in the flow direction of the secondary air is equal to the atmospheric pressure. On this account, the dedicated reed valve is opened and closed when the secondary air supply valve is in the open state. When the dedicated reed valve is in the open state, the secondary air is supplied to the dedicated exhaust passage member via the dedicated secondary air supply passage member downstream of the dedicated reed valve. Unburned substances in the exhaust gas are burned by using the secondary air supplied to the dedicated exhaust passage member. Furthermore, oxygen deficiency in the catalyst is resolved. Because the oxygen density in the exhaust gas supplied to the catalyst increases, the oxidation of the catalyst is facilitated. It is therefore possible to further increase the temperature of the catalyst. The secondary air is not supplied to the dedicated exhaust passage member when the dedicated reed valve is in the closed state or when the secondary air supply valve is in the closed state.

In addition to the above, the gas state detection device which is not for the dedicated secondary air supply passage member is configured to detect an index indicating the state of gas in a passage member other than the dedicated secondary air supply passage member downstream of the dedicated reed valve. The gas in the passage member except the dedicated secondary air supply passage member downstream of the dedicated reed valve is gas in at least one of the dedicated exhaust passage member, the upstream exhaust passage member, the catalyst exhaust passage member, the downstream exhaust passage member, the downstream secondary air supply passage member, or the upstream secondary air supply passage member. The index indicating the state of gas to be detected indicates at least one of the oxygen density of the gas, the temperature of the gas, the pressure of the gas, or the flow rate of the gas.

The fuel supply amount control unit of the controller is configured to control the fuel supplier in accordance with a required engine performance.

In addition to the above, the detection unit of the controller is configured to be able to detect clogging of the dedicated secondary air supply passage member downstream of the dedicated reed valve based on a signal from the gas state detection device which is not for the dedicated secondary air supply passage member, when the secondary air supply control unit controls the secondary air supply valve to be in the open state. In this specification, when the dedicated secondary air supply passage member downstream of the dedicated reed valve clogs, the effective flow area of the dedicated secondary air supply passage member is zero. When the dedicated secondary air supply passage member downstream of the dedicated reed valve clogs, secondary air is not supplied from the dedicated secondary air supply passage member downstream of the dedicated reed valve to the dedicated exhaust passage member. In other words, the secondary air supplied to the dedicated exhaust passage member becomes insufficient. The secondary air includes oxygen and is colder than the exhaust gas. Furthermore, the dedicated secondary air supply passage member downstream of the dedicated reed valve is disconnected from the downstream secondary air supply passage member. For this reason, backward flow of the exhaust gas in the dedicated exhaust passage member to the downstream secondary air supply passage member via the dedicated secondary air supply passage member downstream of the dedicated reed valve does not occur on account of exhaust pulse in the dedicated exhaust passage member. When the dedicated secondary air supply passage member downstream of the dedicated reed valve clogs, the following changes occur as compared to a normal state in which the dedicated secondary air supply passage member downstream of the dedicated reed valve does not clog. The air-fuel ratio estimated based on the oxygen densities of the exhaust gas in the dedicated exhaust passage member and the upstream exhaust passage member becomes a value on the rich side. When an air-fuel ratio is rich, fuel is excessive as compared to the stoichiometric air-fuel ratio. As such, the air-fuel ratio estimated from the oxygen densities of the exhaust gas in the dedicated exhaust passage member and the upstream exhaust passage member is lower than the stoichiometric air-fuel ratio. The stoichiometric air-fuel ratio indicates an air-fuel ratio at which oxygen and fuel in air-fuel mixture fully react with each other. The temperatures of the gas in the downstream secondary air supply passage member, the upstream secondary air supply passage member, the dedicated exhaust passage member, the upstream exhaust passage member, the catalyst exhaust passage member, and the downstream exhaust passage member are lowered. Ranges of variations of the pressures of the gas in the downstream secondary air supply passage member and the upstream secondary air supply passage member are eliminated or decreased. The flow rates of the gas in the downstream secondary air supply passage member and the upstream secondary air supply passage member are eliminated or decreased. The oxygen density, the temperature, the pressure, and the flow rate of the gas are indexes indicating the state of the gas in the passage members other than the dedicated secondary air supply passage member downstream of the dedicated reed valve. The gas state detection device which is not for the dedicated secondary air supply passage member is configured to detect an index which indicates the state of gas including at least one of the indexes and indicates the state of gas in the passage members other than the dedicated secondary air supply passage member downstream of the dedicated reed valve. The detection unit of the controller is therefore able to detect clogging of the dedicated secondary air supply passage member downstream of the dedicated reed valve, by using a signal of the gas state detection device which is not for the dedicated secondary air supply passage member. The detected information may be recorded on the controller. Based on the recorded information, it is possible to prompt a rider, etc. to perform maintenance of the dedicated secondary air supply passage. As a result of maintenance inside the dedicated secondary air supply passage, the clogging of the dedicated secondary air supply passage member downstream of the dedicated reed valve is resolved. Consequently, the insufficiency of the secondary air supplied to the dedicated exhaust passage member is resolved. The purification performance of purifying the exhaust gas is therefore recovered. In this way, the engine performance of the engine unit including the dedicated reed valve and the dedicated secondary air supply passage member downstream of the dedicated reed valve and the purification performance of purifying the exhaust gas are both achieved.

According to one aspect of the present teaching, the straddled vehicle is further arranged so that the secondary air supply control unit controls the secondary air supply valve to be in the open state when the engine main body is under a warm-up state and is driven in a driving range which is at least a part of a low-load range.

According to this arrangement, the secondary air supply control unit further controls the secondary air supply valve to be in the open state when the engine main body is under a warm-up state and is driven in a driving range which is at least a part of a low-load range. The detection unit is therefore able to detect clogging of the dedicated secondary air supply passage member downstream of the dedicated reed valve, by using a signal of the gas state detection device which is not for the dedicated secondary air supply passage member, even when the engine main body is driven under the warm-up state and in a driving range which is at least a part of the low-load range.

According to one aspect of the present teaching, the straddled vehicle is arranged such that, in the controller, when the secondary air supply control unit controls the secondary air supply valve to be in the open state, the fuel supply amount control unit controls the fuel supplier so that, in a normal state in which the dedicated secondary air supply passage member downstream of the dedicated reed valve does not clog, (i) an air-fuel ratio estimated from a signal of the gas state detection device which is not for the dedicated secondary air supply passage member and detects at least one of oxygen densities of gas in the dedicated exhaust passage member or the upstream exhaust passage member is lean as compared to a stoichiometric air-fuel ratio and (ii) an air-fuel ratio estimated from oxygen density of gas obtained by removing the secondary air supplied to the dedicated exhaust passage member from exhaust gas passing the gas state detection device which is not for the dedicated secondary air supply passage member and detects at least one of oxygen densities of the gas in the dedicated exhaust passage member or the upstream exhaust passage member is rich as compared to an air-fuel ratio in the normal state, and the detection unit is configured to be able to detect the clogging of the dedicated secondary air supply passage member downstream of the dedicated reed valve based on a signal of the gas state detection device which is not for the dedicated secondary air supply passage member and detects at least one of oxygen densities of the gas in the dedicated exhaust passage member or the upstream exhaust passage member.

According to this arrangement, the gas state detection device which is not for the dedicated secondary air supply passage member detects at least one of the oxygen densities of the gas in the dedicated exhaust passage member or the upstream exhaust passage member. When the secondary air supply control unit controls the secondary air supply valve to be in the open state, the fuel supply amount control unit controls the fuel supplier as follows. To begin with, assume that the normal state is set and the dedicated secondary air supply passage member downstream of the dedicated reed valve does not clog. An air-fuel ratio estimated from a signal of the gas state detection device which is not for dedicated secondary air supply passage member is referred to as an air-fuel ratio X1. A stoichiometric air-fuel ratio is referred to as a stoichiometric air-fuel ratio S. The fuel supply amount control unit is configured to control the fuel supplier so that the air-fuel ratio X1 is lean as compared to the stoichiometric air-fuel ratio S. In the normal state in which the dedicated secondary air supply passage member downstream of the dedicated reed valve does not clog, the air-fuel ratio X1 estimated from the oxygen density of the exhaust gas flowing into the catalyst is lean as compared to the stoichiometric air-fuel ratio S. In other words, when the secondary air supplied to the dedicated exhaust passage member is not insufficient, the air-fuel ratio estimated from the oxygen density of the exhaust gas flowing into the catalyst is lean as compared to the stoichiometric air-fuel ratio S. The term "lean" indicates a state in which an amount of air is excessive in comparison with the stoichiometric air-fuel ratio and an air-fuel ratio estimated based on the oxygen density of the exhaust gas detected by the oxygen sensor is higher than the stoichiometric air-fuel ratio. A stoichiometric air-fuel ratio is referred to as a stoichiometric air-fuel ratio S. Furthermore, assume that the secondary air supplied to the dedicated exhaust passage member is removed from the exhaust gas passing the gas state detection device which is not for the dedicated secondary air supply passage member. In other words, the secondary air is not supplied to the dedicated exhaust passage member. An air-fuel ratio estimated from the oxygen density of the gas from which the secondary air has been removed is referred to as an air-fuel ratio X0. The fuel supply amount control unit is configured to control the fuel supplier so that the air-fuel ratio X0 is rich as compared to the air-fuel ratio X1. In other words, when the secondary air is not supplied to the dedicated exhaust passage member, the air-fuel ratio X0 estimated from the oxygen density of the exhaust gas flowing into the catalyst is rich. On this account, the stoichiometric air-fuel ratio S is sandwiched between the air-fuel ratio X1 and the air-fuel ratio X0. Therefore, there is a difference W between the air-fuel ratio X1 and the air-fuel ratio X0. The difference W is calculated by subtracting the air-fuel ratio X0 from the air-fuel ratio X1. To put it differently, there is a difference between an air-fuel ratio when the secondary air supplied to the dedicated exhaust passage member is not insufficient and an air-fuel ratio when the secondary air is not supplied to the dedicated exhaust passage member.

The detection unit is configured to detect clogging of the dedicated secondary air supply passage member downstream of the dedicated reed valve based on a signal of the gas state detection device which is not for the dedicated secondary air supply passage member. In this connection, when the dedicated secondary air supply passage member downstream of the dedicated reed valve clogs, no secondary air is supplied to the dedicated exhaust passage member. When the dedicated secondary air supply passage member clogs, the air-fuel ratio estimated from a signal of the gas state detection device which is not for the dedicated secondary air supply passage member becomes rich as compared to the air-fuel ratio X1. In other words, as described above, the air-fuel ratio estimated from a signal of the gas state detection device which is not for dedicated secondary air supply passage member becomes the air-fuel ratio X0. The detection unit is therefore able to detect that no secondary air is supplied to the dedicated exhaust passage member downstream of the dedicated reed valve, based on the air-fuel ratio estimated from the signal of the gas state detection device which is not for the dedicated secondary air supply passage member. The detection unit is therefore able to certainly detect clogging of the dedicated secondary air supply passage member downstream of the dedicated reed valve based on a signal of the gas state detection device which is not for the dedicated secondary air supply passage member.

According to one aspect of the present teaching, the straddled vehicle is arranged such that, in the controller, when the secondary air supply control unit controls the secondary air supply valve to be in the open state, the fuel supply amount control unit controls the fuel supplier so that, in a normal state in which the dedicated secondary air supply passage member downstream of the dedicated reed valve does not clog, a difference between the air-fuel ratio estimated from the signal of the gas state detection device which is not for the dedicated secondary air supply passage member and detects at least one of oxygen densities of the gas in the dedicated exhaust passage member or the upstream exhaust passage member and the air-fuel ratio estimated from the oxygen density of the gas obtained by removing the secondary air supplied to the dedicated exhaust passage member from the exhaust gas passing the gas state detection device which is not for the dedicated secondary air supply passage member and detects at least one of oxygen densities of the gas in the dedicated exhaust passage member or the upstream exhaust passage member is one or more.

According to this arrangement, the gas state detection device which is not for the dedicated secondary air supply passage member detects at least one of the oxygen densities of the gas in the dedicated exhaust passage member or the upstream exhaust passage member. When the secondary air supply control unit controls the secondary air supply valve to be in the open state, the fuel supply amount control unit controls a fuel controller as follows. As described above, an air-fuel ratio estimated from a signal of the gas state detection device which is not for the dedicated secondary air supply passage member in the normal state in which the dedicated secondary air supply passage member downstream of the dedicated reed valve does not clog is referred to as an air-fuel ratio X1. Furthermore, an air-fuel ratio estimated from the oxygen density of gas by removing the secondary air supplied to the dedicated exhaust passage member through the dedicated secondary air supply passage from the exhaust gas passing the gas state detection device which is not for the dedicated secondary air supply passage member, in the normal state in which the dedicated secondary air supply passage member downstream of the dedicated reed valve does not clog, is referred to as an air-fuel ratio X0. The fuel supply amount control unit is configured to control the fuel supplier so that a difference between the air-fuel ratio X1 and the air-fuel ratio X0 is one or more. As a result, the air-fuel ratio estimated from the signal of the gas state detection device which is not for the dedicated secondary air supply passage member further varies during a period from the normal state in which the dedicated secondary air supply passage member downstream of the dedicated reed valve does not clog to the occurrence of clogging of the dedicated secondary air supply passage member downstream of the dedicated reed valve. The fuel supply amount control unit is therefore able to easily detect clogging of the dedicated secondary air supply passage member downstream of the dedicated reed valve based on a signal of the gas state detection device which is not for the dedicated secondary air supply passage member.

According to one aspect of the present teaching, the straddled vehicle is arranged such that, in the controller, when the secondary air supply control unit controls the secondary air supply valve to be in the open state, the fuel supply amount control unit controls the fuel supplier so that, in a normal state in which the dedicated secondary air supply passage member downstream of the dedicated reed valve does not clog, a difference between the air-fuel ratio estimated from the signal of the gas state detection device detecting at least one of oxygen densities of the gas in the dedicated exhaust passage member or the upstream exhaust passage member and the stoichiometric air-fuel ratio is larger than a difference between the air-fuel ratio estimated from the oxygen density of the gas obtained by removing the secondary air supplied to the dedicated exhaust passage member from the exhaust gas passing the gas state detection device which is not for the dedicated secondary air supply passage member and detects at least one of oxygen densities of the gas in the dedicated exhaust member or the upstream exhaust passage member and the stoichiometric air-fuel ratio.

According to this arrangement, the gas state detection device which is not for the dedicated secondary air supply passage member detects at least one of the oxygen densities of the gas in the dedicated exhaust passage member or the upstream exhaust passage member. When the secondary air supply control unit controls the secondary air supply valve to be in the open state, the fuel supply amount control unit controls a fuel controller as follows. As described above, an air-fuel ratio estimated from a signal of the gas state detection device which is not for the dedicated secondary air supply passage member, in the normal state in which the dedicated secondary air supply passage member downstream of the dedicated reed valve does not clog, is referred to as an air-fuel ratio X1. Furthermore, an air-fuel ratio estimated from the oxygen density of gas by removing the secondary air supplied to the dedicated exhaust passage member through the dedicated secondary air supply passage from the exhaust gas passing the gas state detection device which is not for the dedicated secondary air supply passage member, in the nonnal state in which the dedicated secondary air supply passage member downstream of the dedicated reed valve does not clog, is referred to as an air-fuel ratio X0. The fuel supply amount control unit controls the fuel supplier so that the difference between the air-fuel ratio X1 and the stoichiometric air-fuel ratio S is larger than the difference between the air-fuel ratio X0 and the stoichiometric air-fuel ratio S. As a result, the air-fuel ratio estimated from the signal of the gas state detection device which is not for the dedicated secondary air supply passage member further varies during a period from the nonnal state in which the dedicated secondary air supply passage member downstream of the dedicated reed valve does not clog to the occurrence of clogging of the dedicated secondary air supply passage member downstream of the dedicated reed valve. The detection unit is therefore able to easily detect clogging of the dedicated secondary air supply passage member downstream of the dedicated reed valve based on a signal of the gas state detection device which is not for the dedicated secondary air supply passage member.

According to one aspect of the present teaching, the straddled vehicle is arranged such that, in the controller, when the secondary air supply control unit controls the secondary air supply valve to be in the open state, the fuel supply amount control unit controls the fuel supplier so that, in a normal state in which the dedicated secondary air supply passage member downstream of the dedicated reed valve does not clog, a difference between the air-fuel ratio estimated from the oxygen density of the gas obtained by removing the secondary air supplied to the dedicated exhaust passage member from the exhaust gas passing the gas state detection device detecting at least one of oxygen densities of the gas in the dedicated exhaust member or the upstream exhaust passage member and the stoichiometric air-fuel ratio is one or more.

According to this arrangement, the gas state detection device which is not for the dedicated secondary air supply passage member detects at least one of the oxygen densities of the gas in the dedicated exhaust passage member or the upstream exhaust passage member. When the secondary air supply control unit controls the secondary air supply valve to be in the open state, the fuel supply amount control unit controls a fuel controller as follows. As described above, an air-fuel ratio estimated from the oxygen density of gas by removing the secondary air supplied to the dedicated exhaust passage member from the exhaust gas passing the gas state detection device which is not for the dedicated secondary air supply passage member, in the normal state in which the dedicated secondary air supply passage member downstream of the dedicated reed valve does not clog, is referred to as an air-fuel ratio X0. The fuel supply amount control unit is configured to control the fuel supplier so that the difference between the air-fuel ratio X0 and the stoichiometric air-fuel ratio S is one or more. The difference in oxygen density is large between the state in which the secondary air is not supplied and the state in the stoichiometric air-fuel ratio. As a result, the air-fuel ratio estimated from the signal of the gas state detection device which is not for the dedicated secondary air supply passage member further varies during a period from the normal state in which the dedicated secondary air supply passage member downstream of the dedicated reed valve does not clog to the occurrence of clogging of the dedicated secondary air supply passage member downstream of the dedicated reed valve. The detection unit is therefore able to easily detect clogging of the dedicated secondary air supply passage member downstream of the dedicated reed valve based on a signal of the gas state detection device which is not for the dedicated secondary air supply passage member.

According to one aspect of the present teaching, the straddled vehicle is arranged such that, in the controller, when the secondary air supply control unit controls the secondary air supply valve to be in the open state, the detection unit is able to detect fixation of the dedicated reed valve to the closed state based on a signal of the gas state detection device which is not for the dedicated secondary air supply passage member.

According to this arrangement, in the controller, when the secondary air supply control unit controls the secondary air supply valve to be in the open state, the detection unit is able to detect fixation of the dedicated reed valve to the closed state. When the dedicated reed valve is fixed to the closed state, no secondary air is supplied to the dedicated exhaust passage member from the dedicated secondary air supply passage member downstream of the dedicated reed valve. In other words, the secondary air supplied to the dedicated exhaust passage member becomes insufficient as compared to the normal state in which the dedicated reed valve is not fixed to the closed state. When the dedicated reed valve is fixed to the closed state, the state of the gas in passage members other than the dedicated secondary air supply passage member downstream of the dedicated reed valve becomes identical with the state when the dedicated secondary air supply passage member downstream of the dedicated reed valve clogs. The detection unit of the controller is therefore able to detect the fixation of the dedicated reed valve to the closed state by using a signal of the gas state detection device which is not for the dedicated secondary air supply passage member and is configured to detect an index indicating the state of the gas in the passage members other than the dedicated secondary air supply passage member downstream of the dedicated reed valve. The detected information can be recorded on the controller. Based on the recorded information, it is possible to prompt a rider, etc. to perform maintenance of the dedicated secondary air supply passage. As a result of maintenance of the dedicated secondary air supply passage, the fixation of the dedicated reed valve to the closed state is resolved. Consequently, the insufficiency of the secondary air supplied to the dedicated exhaust passage member is resolved. The purification performance of purifying the exhaust gas is therefore recovered. In this way, the engine performance of the engine unit including the dedicated reed valve and the dedicated secondary air supply passage member downstream of the dedicated reed valve and the purification performance of purifying the exhaust gas are both achieved.

According to one aspect of the present teaching, the straddled vehicle is arranged such that, in the controller, when the secondary air supply control unit controls the secondary air supply valve to be in the open state, the detection unit is able to detect fixation of the secondary air supply valve to the closed state based on a signal of the gas state detection device which is not for the dedicated secondary air supply passage member.

According to this arrangement, in the controller, when the secondary air supply control unit controls the secondary air supply valve to be in the open state, the detection unit is able to detect fixation of the secondary air supply valve to the closed state. When the secondary air supply valve is fixed to the closed state, even if the secondary air supply control unit controls the secondary air supply valve to be in the open state, the secondary air is not supplied to the dedicated secondary air supply passage member downstream of the secondary air supply valve in the flow direction of the secondary air. In other words, no secondary air is supplied to the dedicated exhaust passage member. The secondary air includes oxygen and is colder than the exhaust gas. Furthermore, because the dedicated exhaust passage member communicates with the dedicated secondary air supply passage member, backward flow of the exhaust gas in the dedicated exhaust passage member to the dedicated secondary air supply passage member occurs on account of exhaust pulse in the dedicated exhaust passage member. On this account, when the secondary air supply valve is fixed to the closed state, the following changes occur as compared to the normal state in which the secondary air supply valve is not fixed to the closed state. The air-fuel ratio estimated based on the oxygen densities of the gas in the dedicated exhaust passage member and the upstream exhaust passage member becomes a value on the rich side. The temperatures of the gas in the dedicated exhaust passage member, the upstream exhaust passage member, the catalyst exhaust passage member, and the downstream exhaust passage member become low. The temperature of the downstream secondary air supply passage member becomes high. The flow rates of the gas in the downstream secondary air supply passage member and the upstream secondary air supply passage member are eliminated. The pressure of the gas in the upstream secondary air supply passage member becomes high. The pressure of the gas in the downstream secondary air supply passage member may become high. The oxygen density, the temperature, the flow rate, and the pressure of the gas are indexes indicating the state of the gas in the passage members other than the dedicated secondary air supply passage member downstream of the dedicated reed valve. The detection unit is therefore able to detect the fixation of the secondary air supply valve to the closed state by using a signal of the gas state detection device which is not for the dedicated secondary air supply passage member and is configured to detect indexes indicating the state of the gas, including at least one of the indexes above. The detected information can be recorded on the controller. Based on the recorded information, it is possible to prompt a rider, etc. to perform maintenance of the dedicated secondary air supply passage. As a result of maintenance of the dedicated secondary air supply passage, the fixation of the secondary air supply valve to the closed state is resolved. Consequently, the missing of the secondary air supplied to the dedicated exhaust passage member is resolved. The purification performance of purifying the exhaust gas is therefore further recovered. In this way, the engine performance of the engine unit including the dedicated reed valve and the dedicated secondary air supply passage member downstream of the dedicated reed valve and the purification performance of purifying the exhaust gas are both achieved.

According to one aspect of the present teaching, the straddled vehicle is arranged such that, in the controller, when the secondary air supply control unit controls the secondary air supply valve to be in the closed state, the detection unit is able to detect fixation of the secondary air supply valve to the open state based on a signal of the gas state detection device which is not for the dedicated secondary air supply passage member.

According to this arrangement, in the controller, when the secondary air supply control unit controls the secondary air supply valve to be in the closed state, the detection unit is able to detect fixation of the secondary air supply valve to the open state. When the secondary air supply valve is fixed to the open state, even if the secondary air supply control unit controls the secondary air supply valve to be in the closed state, the secondary air is supplied to the dedicated exhaust passage member. On this account, when the secondary air supply valve is fixed to the open state, the following changes occur as compared to the normal state in which the secondary air supply valve is not fixed to the open state. A correction amount of the fuel supply amount, which is calculated based on the oxygen densities of the gas in the dedicated exhaust passage member and the upstream exhaust passage member, continues to vary without converging. The temperatures of the gas in the downstream secondary air supply passage member and the upstream secondary air supply passage member become low. The pressures of the gas in the downstream secondary air supply passage member and the upstream secondary air supply passage member change to negative pressures and become low. A negative pressure indicates a pressure lower than the atmospheric pressure. The flow rates of the gas in the downstream secondary air supply passage member and the upstream secondary air supply passage become high The oxygen density, the temperature, the pressure, and the flow rate of the gas are indexes indicating the state of the gas in the passage members other than the dedicated secondary air supply passage member downstream of the dedicated reed valve. The detection unit is therefore able to detect the fixation of the secondary air supply valve to the open state by using a signal of the gas state detection device which is not for the dedicated secondary air supply passage member and is configured to detect indexes indicating the state of the gas, including at least one of the indexes above. The detected information can be recorded on the controller. Based on the recorded information, it is possible to prompt a rider, etc. to perform maintenance of the dedicated secondary air supply passage. As a result of maintenance of the dedicated secondary air supply passage, the fixation of the secondary air supply valve to the open state is resolved. In this way, the engine performance of the engine unit including the dedicated reed valve and the dedicated secondary air supply passage member downstream of the dedicated reed valve and the purification performance of purifying the exhaust gas are both achieved.

According to one aspect of the present teaching, the straddled vehicle is arranged such that, in the controller, when the secondary air supply control unit controls the secondary air supply valve to be in the closed state, the detection unit is able to detect fixation of the dedicated reed valve to the open state based on a signal of the gas state detection device which is not for the dedicated secondary air supply passage member.

According to this arrangement, in the controller, when the secondary air supply control unit controls the secondary air supply valve to be in the closed state, the detection unit is able to detect fixation of the dedicated reed valve to the open state. In this regard, if the dedicated reed valve is fixed to the open state, backward flow of exhaust gas from the dedicated exhaust passage member to the dedicated secondary air supply passage member occurs, even if the secondary air supply valve is controlled to be in the closed state. On this account, when the dedicated reed valve is fixed to the open state, the following changes occur as compared to the normal state in which the dedicated reed valve is not fixed to the open state. The temperatures of the gas in the downstream secondary air supply passage member and the upstream secondary air supply passage member become high. The pressure in the downstream secondary air supply passage member varies not only to a negative pressure but also to a positive pressure and becomes high. A positive pressure indicates a pressure higher than the atmospheric pressure. The detection unit is therefore able to detect the fixation of the dedicated reed valve to the open state by using a signal of the gas state detection device which is not for the dedicated secondary air supply passage member and is configured to detect an index indicating the state of the gas in the passage members other than the dedicated secondary air supply passage member downstream of the dedicated reed valve. The detected information can be recorded on the controller. Based on the recorded information, it is possible to prompt a rider, etc. to perform maintenance of the dedicated secondary air supply passage. As a result of maintenance of the dedicated secondary air supply passage, the fixation of the dedicated reed valve to the open state is resolved. In this way, the engine performance of the engine unit including the dedicated reed valve and the dedicated secondary air supply passage member downstream of the dedicated reed valve and the purification performance of purifying the exhaust gas are both achieved.

According to one aspect of the present teaching, the straddled vehicle is arranged such that, in the controller, when the secondary air supply control unit controls the secondary air supply valve to be in the open state, the detection unit is able to detect that the dedicated secondary air supply passage member downstream of the dedicated reed valve is about to clog based on a signal of the gas state detection device which is not for the dedicated secondary air supply passage member.

According to this arrangement, when the secondary air supply control unit controls the secondary air supply valve to be in the open state, the controller detects that the dedicated secondary air supply passage member downstream of the dedicated reed valve is about to clog. In this specification, when the dedicated secondary air supply passage member downstream of the dedicated reed valve is about to clog, the effective flow area of the dedicated secondary air supply passage member downstream of the dedicated reed valve has been narrowed. In this regard, the expression "the effective flow area has been narrowed" does not encompass a case where the effective flow area is zero. When the dedicated secondary air supply passage member downstream of the dedicated reed valve is about to clog, the flow rate of the secondary air supplied to the dedicated exhaust passage member through the dedicated secondary air supply passage member becomes smaller than a predetermined flow rate. The predetermined flow rate is stored in advance in the controller, based on a required flow rate. In this specification, the required flow rate is a flow rate of secondary air supplied to the dedicated exhaust passage member in the normal state in which the dedicated secondary air supply passage member downstream of the dedicated reed valve is not about to clog. The detection unit is therefore able to detect that the dedicated secondary air supply passage member downstream of the dedicated reed valve is about to clog by using a signal of the gas state detection device which is not for the dedicated secondary air supply passage member and is configured to detect an index indicating the state of the gas in the passage members other than the dedicated secondary air supply passage member downstream of the dedicated reed valve. The detected information can be recorded on the controller. Based on the recorded information, it is possible to prompt a rider, etc. to perform maintenance of the dedicated secondary air supply passage. As a result of maintenance inside the dedicated secondary air supply passage, the problem that the dedicated secondary air supply passage member downstream of the dedicated reed valve is about to clog is resolved. Consequently, the insufficiency of the secondary air supplied to the dedicated exhaust passage member is resolved. The purification performance of purifying the exhaust gas is therefore recovered. In this way, the engine performance of the engine unit including the dedicated reed valve and the dedicated secondary air supply passage member downstream of the dedicated reed valve and the purification performance of purifying the exhaust gas are both achieved.

According to one aspect of the present teaching, in the straddled vehicle, the engine main body includes a plurality of the combustion chambers.

According to this arrangement, the engine main body includes a plurality of combustion chambers. In other words, the engine main body is a multi-cylinder engine. There are therefore plural dedicated exhaust passage members. The detection unit of the controller is able to detect that the dedicated secondary air supply passage member downstream of one or plural dedicated reed valve clogs or is about to clog, that one or plural dedicated reed valve is fixed to the closed state or the open state, and that one or plural secondary air supply valve is fixed to the closed state or the open state.

According to one aspect of the present teaching, in the straddled vehicle, the engine main body includes one combustion chamber.

According to this arrangement, the engine main body includes one combustion chamber. In other words, the engine main body is a single-cylinder engine. There is therefore one dedicated exhaust passage member. The detection unit of the controller is able to detect that the dedicated secondary air supply passage member downstream of one dedicated reed valve clogs or is about to clog, that one dedicated reed valve is fixed to the closed state or the open state, and that one secondary air supply valve is fixed to the closed state or the open state.

According to one aspect of the present teaching, the straddled vehicle further includes a notification unit, the controller further including a notification command unit which is configured to send, to the notification unit, at least a signal notifying clogging of the dedicated secondary air supply passage member downstream of the dedicated reed valve, when the detection unit detects the clogging of the dedicated secondary air supply passage member downstream of the dedicated reed valve.

According to this arrangement, the straddled vehicle further includes the notification unit. The controller further includes the notification command unit. The notification command unit sends, to the notification unit, a signal notifying the clogging of the dedicated secondary air supply passage member downstream of the dedicated reed valve. The notification command unit sends the notification signal when the detection unit detects at least the clogging of the dedicated secondary air supply passage member downstream of the dedicated reed valve. This allows the rider or a maintenance personnel to recognize the clogging of the dedicated secondary air supply passage member downstream of the dedicated reed valve. The notification command unit may send a notification signal when fixation of the dedicated reed valve to the closed state is detected. The notification command unit may send a notification signal when fixation of the secondary air supply valve to the closed state is detected. The notification command unit may send a notification signal when fixation of the dedicated reed valve to the open state is detected. The notification command unit may send a notification signal when fixation of the secondary air supply valve to the open state is detected. The notification command unit may send a notification signal when it is detected that the dedicated secondary air supply passage member downstream of the dedicated reed valve is about to clog.

According to one aspect of the present teaching, the straddled vehicle is arranged such that, a timing at which the detection unit determines whether the dedicated secondary air supply passage member downstream of the dedicated reed valve clogs based on a signal of the gas state detection device which is not for the dedicated secondary air supply passage member is a timing at which the secondary air supply control unit controls the secondary air supply valve to be in the open state and the fuel supply amount control unit causes the engine main body to be driven in a predetermined driving range.

According to this arrangement, the timing at which the detection unit determines whether the dedicated secondary air supply passage member downstream of the dedicated reed valve clogs based on a signal of the gas state detection device which is not for the dedicated secondary air supply passage member is as follows. The timing is a timing at which the secondary air supply control unit controls the secondary air supply valve to be in the open state and the fuel supply amount control unit causes the engine main body to be driven in a predetermined driving range. When the fuel supply amount control unit causes the engine main body to be driven under the cold state, the controller causes the secondary air supply control unit to control the secondary air supply valve to be in the open state, so as to supply secondary air to the dedicated exhaust passage member. In other words, the secondary air supply control unit typically controls the secondary air supply valve to be in the open state when the fuel supply amount control unit causes the engine main body to be driven at least under the cold state and in the predetermined driving range. The detection unit is able to detect the clogging of the dedicated secondary air supply passage member downstream of the dedicated reed valve by using a signal of the gas state detection device which is not for the dedicated secondary air supply passage member, when the secondary air supply control unit typically supplies secondary air to the dedicated exhaust passage member.

According to one aspect of the present teaching, the straddled vehicle is arranged such that a timing at which the detection unit determines whether the dedicated secondary air supply passage member downstream of the dedicated reed valve clogs based on a signal of the gas state detection device which is not for the dedicated secondary air supply passage member is a timing at which the fuel supply amount control unit controls the engine main body to be driven in the warm-up state and in a predetermined driving range different from the driving range which is at least a part of the low-load range, and the secondary air supply control unit controls the secondary air supply valve to be in the open state.

According to this arrangement, the timing at which the detection unit determines whether the dedicated secondary air supply passage member downstream of the dedicated reed valve clogs based on a signal of the gas state detection device which is not for the dedicated secondary air supply passage member is as follows. This timing is a timing at which the fuel supply amount control unit controls the engine main body to be driven in the warm-up state and in a predetermined driving range different from the driving range which is at least a part of the low-load range, and the secondary air supply control unit controls the secondary air supply valve to be in the open state. In such a case, the secondary air supply control unit typically controls the secondary air supply valve to be in the closed state so as not to supply secondary air to the dedicated exhaust passage member. However, in the case above, the secondary air supply control unit controls the secondary air supply valve to be in the open state to supply the secondary air to the dedicated exhaust passage member. Then the detection unit detects the clogging of the dedicated secondary air supply passage member downstream of the dedicated reed valve. In other words, even when the secondary air supply control unit typically does not supply secondary air to the dedicated exhaust passage member, the detection unit of the controller is able to detect the clogging of the dedicated secondary air supply passage member downstream of the dedicated reed valve by supplying the secondary air to the dedicated exhaust passage member. In this way, it is possible to improve both the engine performance of the engine unit including the dedicated reed valve and the dedicated secondary air supply passage member downstream of the dedicated reed valve and the purification performance of purifying the exhaust gas.

In this specification, the term "dedicated" means that a dedicated member is exclusively used for an objective.

In this specification, when the dedicated secondary air supply passage member downstream of the dedicated reed valve clogs, the effective flow area of the dedicated secondary air supply passage member is zero. In this specification, when the dedicated secondary air supply passage member downstream of the dedicated reed valve is about to clog, the effective flow area of the dedicated secondary air supply passage member downstream of the dedicated reed valve has been narrowed. The expression "the effective flow area has been narrowed" does not encompass a case where the effective flow area is zero.

In this specification, the required flow rate is a flow rate of secondary air supplied to the dedicated exhaust passage member in the normal state in which the dedicated secondary air supply passage member downstream of the dedicated reed valve is not about to clog.

In this specification, the normal state is a state in which the secondary air supply valve and the dedicated reed valve operate normally and the dedicated secondary air supply passage member downstream of the dedicated reed valve does not clog or is not about to clog. In other words, the normal state is a state in which the dedicated secondary air supply passage member downstream of the dedicated reed valve does not clog. The normal state is a state in which the dedicated reed valve is not fixed to the closed state. The normal state is a state in which the secondary air supply valve is not fixed to the closed state. The normal state is a state in which the dedicated reed valve is not fixed to the open state. The normal state is a state in which the secondary air supply valve is not fixed to the open state. The normal state is a state in which the dedicated secondary air supply passage member downstream of the dedicated reed valve is not about to clog.

In this specification, a passage indicates a space in which gas passes. In this specification, a passage member is a structure forming a path. In this specification, the full-open state indicates a state in which an opening degree is 100. In this specification, the full-closed state indicates a state in which an opening degree is 0. In this specification, the partially-open state indicates a state in which an opening degree is larger than 0 and smaller than 100. In this specification, the open state indicates a state in which a valve is open. In this specification, the open state encompasses the full-open state and a partially-open state. In this specification, the closed state indicates a state in which a valve is closed. In this specification, the closed state is limited to the full-closed state. In this specification, the control of the secondary air supply valve to be in the open state indicates that a signal instructing the secondary air supply valve to open has been sent from the secondary air supply control unit to the secondary air supply valve. It does not matter whether the secondary air supply valve has properly opened or not. In this specification, the control of the secondary air supply valve to be in the closed state indicates that a signal instructing the secondary air supply valve to be closed has been sent from the secondary air supply control unit to the secondary air supply valve. It does not matter whether the secondary air supply valve has properly been closed or not. In this specification, an air-fuel ratio indicates the ratio of an air mass to a fuel mass in an air-fuel mixture in a combustion chamber. In this specification, the stoichiometric air-fuel ratio indicates an air-fuel ratio at which oxygen and fuel in air-fuel mixture fully react with each other. In this specification, the control of the fuel supply amount includes control of an amount of fuel supplied from the fuel pump and control of time of injecting fuel by the injector (fuel supplier).

In this specification, the dedicated reed valve includes a reed valve body and a housing (passage member) in which the reed valve body is provided. In the present teaching, the secondary air supply valve includes a valve body and a housing (passage member) in which the valve body is provided.

In this specification, the detection timing is a timing at which the detection unit determines whether the dedicated secondary air supply passage member downstream of the dedicated reed valve clogs or not. The detection timing is not only an exact time point but also a predetermined duration from a time point. When the detection timing is a predetermined duration from a time point, a signal detected by a sensor is an average value. This is applicable to the detection timing at which the detection unit detects fixation of the dedicated reed valve to the closed state. This is applicable to the detection timing at which the detection unit detects fixation of the secondary air supply valve to the closed state. This is applicable to the detection timing at which the detection unit detects that the dedicated secondary air supply passage member downstream of the dedicated reed valve is about to clog. This is applicable to the detection timing at which the detection unit detects an abnormality in the secondary air supply valve in the open state. The same applies to the detection timing at which the detection unit detects an abnormality in the dedicated reed valve in the open state.

In this specification, a predetermined driving range is, for example, a predetermined load range and a predetermined rotation range which are set in advance. The predetermined load range indicates that a load falls within a predetermined range of loads. The predetermined rotation range indicates that an engine rotation speed falls within a predetermined range of rotation speeds.

In this specification, the control of the fuel supply amount includes control of an amount of fuel supplied from the fuel pump and control of time of injecting fuel by the injector.

In the present teaching, an end portion of a member indicates a portion constituted by an end and its surroundings of the member.

In this specification, an expression "members A and B are provided side by side in an X direction" indicates the following state. When the members A and B are viewed in a direction orthogonal to the X direction, the members A and B are both provided on a linear line which is parallel to the X direction. In the present teaching, an expression "members A and B are provided side by side in an X direction when viewed in a Y direction" indicates the following state. When the members A and B are viewed in the Y direction, the members A and B are both provided on a linear line which is parallel to the X direction. In this regard, when the members A and B are viewed in a W direction which is different from the Y direction, at least one of the members A or B may not be provided on the linear line which is parallel to the X direction. The members A and B may be in contact with each other. The members A and B may not be in contact with each other. A member C may be provided between the members A and B.

In this specification, an expression "a member A is provided forward of a member B" indicates the following state. The member A is provided in front of a plane which passes the front-most end of the member B and is orthogonal to the front-rear direction. In this connection, the members A and B may or may not be lined up in the front-rear direction. This applies to the directions other than the front-rear direction. (That is to say, this applies to the directions other than "forward of", such as "rearward of", "leftward of", and "rightward of".)

In this specification, an expression "a member A is provided in front of a member B" indicates the following state. The members A and B are lined up in the front-rear direction and a part of the member A, the part facing the member B, is provided in front of the member B. According to this definition, when a part of the front surface of the member B, the part facing the member A, is the front-most end of the member B, the member A is provided forward of the member B. According to the definition, when a part of the front surface of the member B, the part facing the member A, is not the front-most end of the member B, the member A may or may not be provided forward of the member B. This applies to the directions other than the front-rear direction. (That is to say, this applies to the directions other than "in front of', such as "behind", "straight below", "to the left of", and "to the right of".) The front surface of the member B is a surface which is viewable when the member B is viewed from the front side. Depending on the shape of the member B, the front surface of the member B may be formed of plural surfaces, instead of a single continuous surface.

In this specification, an expression "a member A is provided in front of a member B when viewed in the left-right direction" indicates the following state. The members A and B are lined up in the front-rear direction when viewed in the left-right direction and a part of the member A, the part facing the member B, is provided in front of the member B when viewed in the left-right direction. According to this definition, the members A and B may not be lined up in the front-rear direction in three dimensions. This applies to the directions other than the front-rear direction. (That is to say, this applies to the directions other than "in front of", such as "behind", "to the left of", and "to the right of".)

The technical terms in this specification are used only for defining a specific embodiment, and are not used with the intention of restricting the present teaching. The term "and/or" used in this specification encompasses any or all combinations of one constituted feature or plural related constituent features which are listed.

In this specification, the use of the terms "including", "comprising", "having" and their derivatives specify the existence of a feature, a step, an operation, an element, a component, and/or their equivalents, which are described in this specification, but may encompass one or more of a step, an action, an element, a component, and/or a group of each of them. In this specification, the terms "attached", "connected", "coupled", and/or their equivalents are broadly used and encompass both direct and indirect attachment, connection, and coupling. Furthermore, the terms "connected" and "coupled" are not limited to physical or mechanical connection and coupling, and indicate direct or indirect electrical connection or coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. Unless otherwise defined clearly, the terms are not interpreted ideally or excessively formally. In the description of the present teaching, it is understood that the number of technologies and the number of steps are disclosed. Each of them has an individual advantage, and may be used with at least one of the other disclosed technologies, or with all of the other disclosed technologies in some cases. For the purpose of clarity, the description does not unnecessarily recite possible combinations of the technologies and the steps. It, however, should be borne in mind that all of such combinations fall within the range of the present teaching and specification and claims.

In the description below, many specific details will be given to realize full understanding of the present teaching, for the purpose of explanation. It is, however, evident that a person with ordinary skill in the art is able to implement the present teaching without such specific details. The disclosure should be considered as an example of the present teaching, and does not intend to restrict the present teaching to a specific embodiment which is described below with reference to drawings.

### [Advantageous Effects]

According to the present teaching, in a straddled vehicle, an engine performance and a purification performance of purifying an exhaust gas are both achieved in an engine unit including a dedicated reed valve and a dedicated secondary air supply passage member downstream of the dedicated reed valve.

### [Brief Description of Drawings]

[FIG. 1] FIG. 1 is a schematic view of a straddled vehicle of an embodiment of the present teaching.
[FIG. 2] FIG. 2 is a right side view of a motorcycle of the embodiment.
[FIG. 3] FIG. 3 is a cross section taken along the II-II line in FIG. 2.
[FIG. 4] FIG. 4 is a right side view of a part of an engine unit.
[FIG. 5] FIG. 5 is a front view of a part of the engine unit.
[FIG. 6] FIG. 6 is a schematic diagram of a part of the engine unit.
[FIG. 7] FIG. 6 is a schematic diagram of a part of the engine unit.
[FIG. 8] FIG. 8 is a control block diagram of the engine unit.
[FIG. 9] FIG. 9 is a graph showing the relationship between an air-fuel ratio estimated from oxygen density of exhaust gas detected by an oxygen sensor, an air-fuel ratio estimated from oxygen density of gas which is obtained by excluding secondary air supplied to a dedicated exhaust passage member from exhaust gas which is passing the oxygen sensor, and a stoichiometric air-fuel ratio.
[FIG. 10] FIG. 10 is a graph showing a modification of the relationship between an air-fuel ratio estimated from oxygen density of exhaust gas detected by an oxygen sensor, an air-fuel ratio estimated from oxygen density of gas which is obtained by excluding secondary air supplied to a dedicated exhaust passage member from exhaust gas which is passing the oxygen sensor, and a stoichiometric air-fuel ratio.
[FIG. 11] FIG. 11 is a schematic diagram of a part of an engine unit of a modification.

### [Description of Embodiments]

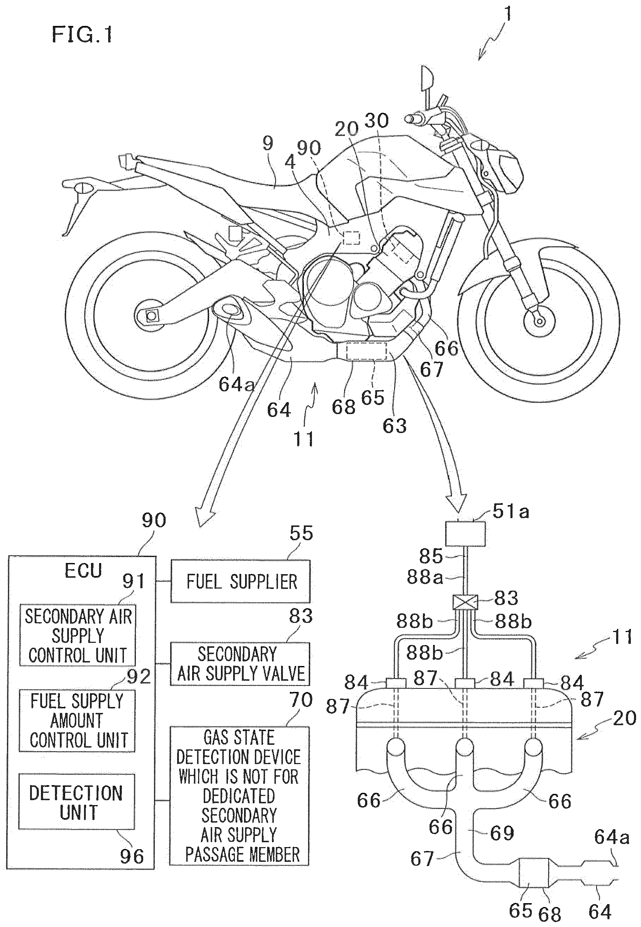

The following will describe a straddled vehicle 1 of an embodiment of the present teaching with reference to the schematic diagram in FIG. 1. The straddled vehicle 1 includes a vehicle body frame 4, a seat 9, and an engine unit 11. The seat 9 is supported by the vehicle body frame 4. The engine unit 11 is provided below the upper end of the seat 9. The engine unit 11 is supported by the vehicle body frame 4.

The engine unit 11 includes at least one combustion chamber 30, a fuel supplier 55 provided for each combustion chamber 30, and a catalyst 65 provided for each combustion chamber 30. The at least one combustion chamber 30 is formed inside an engine main body 20. The fuel supplier 55 is configured to supply fuel to the combustion chamber 30. The catalyst 65 is configured to purify exhaust gas passing a dedicated exhaust passage 69. The dedicated exhaust passage 69 is a passage from the combustion chamber 30 to a discharge port 64a. Exhaust gas is discharged to the atmosphere via the discharge port 64a.

The engine unit 11 includes a dedicated reed valve 84 which is provided for each combustion chamber 30. The dedicated reed valve 84 is provided on a dedicated secondary air supply passage 85. The dedicated secondary air supply passage 85 supplies, as secondary air, air sucked through an air inlet 51a to the dedicated exhaust passage 69. Air is sucked from the atmosphere through the air inlet 51a. The dedicated reed valve 84 is in an open state when a pressure difference by subtracting the pressure in the dedicated secondary air supply passage 85 which is downstream of the dedicated reed valve 84 in the flow direction of the secondary air from the pressure in the dedicated secondary air supply passage 85 which is upstream of the dedicated reed valve 84 in the flow direction of the secondary air is equal to or larger than a predetermined pressure. In the open state, the dedicated reed valve 84 opens the dedicated secondary air supply passage 85. The dedicated reed valve 84 is in a closed state when a pressure difference by subtracting the pressure in the dedicated secondary air supply passage 85 which is downstream of the dedicated reed valve 84 in the flow direction of the secondary air from the pressure in the dedicated secondary air supply passage 85 which is upstream of the dedicated reed valve 84 in the flow direction of the secondary air is smaller than the predetermined pressure. In the closed state, the dedicated reed valve 84 closes the dedicated secondary air supply passage 85.

The engine unit 11 includes a secondary air supply valve 83. The secondary air supply valve 83 is provided upstream, in the flow direction of the secondary air, of the dedicated reed valve 84 on the dedicated secondary air supply passage 85. In an open state, the secondary air supply valve 83 opens the dedicated secondary air supply passage 85 so as to allow supply of the secondary air to the dedicated secondary air supply passage 85. In a closed state, the secondary air supply valve 83 closes the dedicated secondary air supply passage 85 so as to stop supply of the secondary air to the dedicated secondary air supply passage 85.

The engine unit 11 includes a dedicated exhaust passage member 66 which is provided for each combustion chamber 30. The dedicated exhaust passage member 66 is connected to the combustion chamber 30 at an upstream end portion of the dedicated exhaust passage member 66 in the flow direction of the exhaust gas. A part of the dedicated exhaust passage 69 is formed inside the dedicated exhaust passage member 66.

The engine unit 11 includes an upstream exhaust passage member 67. The upstream exhaust passage member 67 is connected to the dedicated exhaust passage member 66 at an upstream end portion of the upstream exhaust passage member 67 in the flow direction of the exhaust gas. The upstream exhaust passage member 67 is provided upstream of the catalyst 65 in the flow direction of the exhaust gas. A part of the dedicated exhaust passage 69 is formed inside the upstream exhaust passage member 67.

The engine unit 11 includes a catalyst exhaust passage member 68. The catalyst exhaust passage member 68 is connected to the upstream exhaust passage member 67 at an upstream end portion of the catalyst exhaust passage member 68 in the flow direction of the exhaust gas. The catalyst exhaust passage member 68 includes the catalyst 65. A part of the dedicated exhaust passage 69 is formed inside the catalyst 65.

The engine unit 11 includes a downstream exhaust passage member 64. The downstream exhaust passage member 64 is connected to the catalyst exhaust passage member 68 at an upstream end portion of the downstream exhaust passage member 64 in the flow direction of the exhaust gas. The downstream exhaust passage member 64 includes the discharge port 64a at a downstream end portion in the flow direction of the exhaust gas. The downstream exhaust passage member 64 is provided downstream of the catalyst 65 in the flow direction of the exhaust gas.

The engine unit 11 includes a dedicated secondary air supply passage member 87 which is downstream of the dedicated reed valve. The dedicated secondary air supply passage member 87 is provided for each combustion chamber 30. The dedicated secondary air supply passage member 87 downstream of the dedicated reed valve is connected to the dedicated exhaust passage member 66 at a downstream end portion of the dedicated secondary air supply passage member 87 in the flow direction of the secondary air. The dedicated secondary air supply passage member 87 downstream of the dedicated reed valve is connected to the dedicated reed valve 84 at an upstream end portion of the dedicated secondary air supply passage member 87 in the flow direction of the secondary air. A part of the dedicated secondary air supply passage 85 is formed inside the dedicated secondary air supply passage member 87 downstream of the dedicated reed valve. The dedicated secondary air supply passage member 87 downstream of the dedicated reed valve is provided downstream of the dedicated reed valve 84 in the flow direction of the secondary air.

The engine unit 11 includes a downstream secondary air supply passage member 88b. The downstream secondary air supply passage member 88b is connected to the dedicated reed valve 84 at a downstream end portion of the downstream secondary air supply passage member 88b in the flow direction of the secondary air. The downstream secondary air supply passage member 88b is connected to the secondary air supply valve 83 at an upstream end portion of the downstream secondary air supply passage member 88b in the flow direction of the secondary air. A part of the dedicated secondary air supply passage 85 is formed inside the downstream secondary air supply passage member 88b. The downstream secondary air supply passage member 88b is provided downstream of the secondary air supply valve 83.

The engine unit 11 includes an upstream secondary air supply passage member 88a. The upstream secondary air supply passage member 88a is connected to the secondary air supply valve 83 at a downstream end portion of the upstream secondary air supply passage member 88a in the flow direction of the secondary air. The upstream secondary air supply passage member 88a includes the air inlet 51a at an upstream end portion in the flow direction of the secondary air. A part of the dedicated secondary air supply passage 85 is formed inside the upstream secondary air supply passage member 88a. The upstream secondary air supply passage member 88a is provided upstream of the secondary air supply valve 83.

The engine unit 11 includes a gas state detection device 70 which is not for the dedicated secondary air supply passage member. Hereinafter, the gas state detection device 70 which is not for the dedicated secondary air supply passage member will be simply referred to as a gas state detection device 70. The gas state detection device 70 is configured to detect an index indicating the state of gas in passage members, except the dedicated secondary air supply passage member 87 downstream of the dedicated reed valve. The detection of the index indicating the state of the gas in the passage members other than the dedicated secondary air supply passage member 87 downstream of the dedicated reed valve indicates at least one of the following (1) to (4).
(1) The oxygen density of gas in at least one of the dedicated exhaust passage member 66 or the upstream exhaust passage member 67 is detected.
(2) The temperature of gas in at least one of the downstream secondary air supply passage member 88b, the upstream secondary air supply passage member 88a, the dedicated exhaust passage member 66, the upstream exhaust passage member 67, the catalyst exhaust passage member 68, or the downstream exhaust passage member 64 is detected.
(3) The pressure of gas in at least one of the downstream secondary air supply passage member 88b or the upstream secondary air supply passage member 88a is detected.
(4) The flow rate of gas in at least one of the downstream secondary air supply passage member 88b or the upstream secondary air supply passage member 88a is detected.

In other words, the index indicating the state of gas to be detected indicates at least one of the oxygen density, the temperature, the pressure, or the flow rate of the gas in the above-described passage members.

The engine unit 11 includes a controller 90. The controller 90 includes a fuel supply amount control unit 92, a secondary air supply control unit 91, and a detection unit 96. The fuel supply amount control unit 92 is configured to control an amount of fuel supplied by the fuel supplier 55. The secondary air supply control unit 91 is configured to control the secondary air supply valve 83 to be in an open state or a closed state. The secondary air supply control unit 91 is configured to control the secondary air supply valve 83 to be in the open state when the engine main body 20 drives at least under a cold state. The detection unit 96 is configured to be able to detect clogging of the dedicated secondary air supply passage member 87 downstream of the dedicated reed valve based on a signal from the gas state detection device 70, when the secondary air supply control unit 91 controls the secondary air supply valve 83 to be in the open state.

The straddled vehicle 1 of the embodiment of the present teaching has the following characteristics. The dedicated reed valve 84 is provided for each combustion chamber 30. The dedicated reed valve 84 is connected to the downstream secondary air supply passage member 88b and the dedicated secondary air supply passage member 87 downstream of the dedicated reed valve. The secondary air supply valve 83 is connected to the upstream end portion of the downstream secondary air supply passage member 88b in the flow direction of the secondary air and the downstream end portion of the upstream secondary air supply passage member 88a in the flow direction of the secondary air. The fuel supply amount control unit 92 of the controller 90 is configured to control the secondary air supply valve 83 to be in the open state when the engine main body 20 is driven at least under the cold state. In the open state, the secondary air supply valve 83 causes the downstream secondary air supply passage member 88b to communicate with the upstream secondary air supply passage member 88a. In the closed state, the secondary air supply valve 83 disconnects the downstream secondary air supply passage member 88b from the upstream secondary air supply passage member 88a. The control of the secondary air supply valve 83 to be in the open state indicates that a signal instructing the secondary air supply valve 83 to open has been sent from the controller 90 to the secondary air supply valve 83. It does not matter whether the secondary air supply valve 83 has properly opened or not. The dedicated reed valve 84 is in the open state in the following case. A pressure difference by subtracting the pressure in the dedicated secondary air supply passage 85 in the dedicated secondary air supply passage member 87 downstream of the dedicated reed valve from the pressure in the dedicated secondary air supply passage 85 in the downstream secondary air supply passage member 88b is equal to or higher than a predetermined pressure. In the open state, the dedicated reed valve 84 causes the downstream secondary air supply passage member 88b to communicate with the dedicated secondary air supply passage member 87 downstream of the dedicated reed valve. The dedicated reed valve 84 is in the closed state in the following case. The pressure difference by subtracting the pressure in the dedicated secondary air supply passage 85 in the dedicated secondary air supply passage member 87 downstream of the dedicated reed valve from the pressure in the dedicated secondary air supply passage 85 in the downstream secondary air supply passage member 88b is lower than the predetermined pressure. In the closed state, the dedicated reed valve 84 disconnects the downstream secondary air supply passage member 88b from the dedicated secondary air supply passage member 87 downstream of the dedicated reed valve. In this way, the dedicated reed valve 84 is opened or closed based on the pressure difference between the pressure in the dedicated secondary air supply passage 85 in the downstream secondary air supply passage member 88b and the pressure in the dedicated secondary air supply passage 85 in the dedicated secondary air supply passage member 87 downstream of the dedicated reed valve. The exhaust gas is periodically exhausted from the combustion chamber 30 to the dedicated exhaust passage member 66. For this reason, the pressure in the dedicated exhaust passage member 66 periodically varies on account of the exhaust gas. Accordingly, the pressure in the dedicated secondary air supply passage member 87 downstream of the dedicated reed valve and connected to the dedicated exhaust passage member 66 periodically varies. Meanwhile, the pressure in the downstream secondary air supply passage member 88b downstream of the dedicated reed valve and connected to the upstream end portion the dedicated secondary air supply passage member 87 in the flow direction of the secondary air is equal to the atmospheric pressure. On this account, the dedicated reed valve 84 is opened and closed when the secondary air supply valve 83 is in the open state. When the dedicated reed valve 84 is in the open state, the secondary air is supplied to the dedicated exhaust passage member 66 via the dedicated secondary air supply passage member 87 downstream of the dedicated reed valve. Unburned substances in the exhaust gas are burned by using the secondary air supplied to the dedicated exhaust passage member 66. Furthermore, oxygen deficiency in the catalyst 65 is resolved. Because the oxygen density in the exhaust gas supplied to the catalyst 65 increases, the oxidation of the catalyst 65 is facilitated. It is therefore possible to further increase the temperature of the catalyst 65. The secondary air is not supplied to the dedicated exhaust passage member 66 when the dedicated reed valve 84 is in the closed state or when the secondary air supply valve 83 is in the closed state.

In addition to the above, the gas state detection device 70 is configured to detect an index indicating the state of gas in passage members, except the dedicated secondary air supply passage member 87 downstream of the dedicated reed valve. The gas in the passage members except the dedicated secondary air supply passage member 87 downstream of the dedicated reed valve is gas in at least one of the dedicated exhaust passage member 66, the upstream exhaust passage member 67, the catalyst exhaust passage member 68, the downstream exhaust passage member 64, the downstream secondary air supply passage member 88b, or the upstream secondary air supply passage member 88a. The index indicating the state of gas to be detected indicates at least one of the oxygen density of the gas, the temperature of the gas, the pressure of the gas, or the flow rate of the gas. The fuel supply amount control unit 92 of the controller 90 is configured to control the fuel supplier 55 in accordance with a required engine performance.

In addition to the above, the detection unit 96 of the controller 90 is configured to be able to detect clogging of the dedicated secondary air supply passage member downstream of the dedicated reed valve based on a signal from the gas state detection device 70, when the secondary air supply control unit 91 controls the secondary air supply valve 83 to be in the open state. When the dedicated secondary air supply passage member 87 downstream of the dedicated reed valve clogs, secondary air is not supplied from the dedicated secondary air supply passage member 87 downstream of the dedicated reed valve to the dedicated exhaust passage member 66. In other words, the secondary air supplied to the dedicated exhaust passage member 66 becomes insufficient. The secondary air includes oxygen and is colder than the exhaust gas. Furthermore, the dedicated secondary air supply passage member 87 downstream of the dedicated reed valve is disconnected from the downstream secondary air supply passage member 88b. For this reason, backward flow of the exhaust gas in the dedicated exhaust passage member 66 to the downstream secondary air supply passage member 88b via the dedicated secondary air supply passage member 87 downstream of the dedicated reed valve does not occur on account of exhaust pulse in the dedicated exhaust passage member 66. When the dedicated secondary air supply passage member 87 downstream of the dedicated reed valve clogs, the following changes occur as compared to a normal state in which the dedicated secondary air supply passage member 87 downstream of the dedicated reed valve does not clog. The air-fuel ratio estimated based on the oxygen densities of the exhaust gas in the dedicated exhaust passage member 66 and the upstream exhaust passage member 67 becomes a value on the rich side. The term "rich" indicates a state in which an amount of fuel is excessive in comparison with the stoichiometric air-fuel ratio and an air-fuel ratio estimated based on the oxygen density of the exhaust gas is lower than the stoichiometric air-fuel ratio. The stoichiometric air-fuel ratio indicates an air-fuel ratio at which oxygen and fuel in air-fuel mixture fully react with each other. The temperatures of the gas in the downstream secondary air supply passage member 88b, the upstream secondary air supply passage member 88a, the dedicated exhaust passage member 66, the upstream exhaust passage member 67, the catalyst exhaust passage member 68, and the downstream exhaust passage member 64 are lowered. Ranges of variations of the pressures of the gas in the downstream secondary air supply passage member 88b and the upstream secondary air supply passage member 88a are eliminated or decreased. The flow rates of the gas in the downstream secondary air supply passage member 88b or the upstream secondary air supply passage member 88a are eliminated or decreased. They are indexes indicating the state of the gas in the passage members other than the dedicated secondary air supply passage member 87 downstream of the dedicated reed valve. The gas state detection device 70 is configured to detect an index which indicates the state of gas including at least one of these oxygen density, temperature, pressure, or flow rate and which indicates the state of gas in the passage members other than the dedicated secondary air supply passage member 87 downstream of the dedicated reed valve. The detection unit 96 of the controller 90 is therefore able to detect clogging of the dedicated secondary air supply passage member 87 downstream of the dedicated reed valve, by using a signal of the gas state detection device 70. The detected information may be recorded on the controller 90. Based on the recorded information, it is possible to prompt a rider, etc. to perform maintenance of the dedicated secondary air supply passage 85. As a result of maintenance inside the dedicated secondary air supply passage 85, the clogging of the dedicated secondary air supply passage member 87 downstream of the dedicated reed valve is resolved. Consequently, the insufficiency of the secondary air supplied to the dedicated exhaust passage member 66 is resolved. The purification performance of purifying the exhaust gas is therefore recovered. In this way, the engine performance of the engine unit 11 including the dedicated reed valve 84 and the dedicated secondary air supply passage member 87 downstream of the dedicated reed valve and the purification performance of purifying the exhaust gas are both achieved.

The following will describe a specific example of the embodiment of the present teaching with reference to figures. Described below is an example in which a straddled vehicle of the present teaching is applied to a motorcycle 1. Hereinafter, a vehicle front-rear direction, a vehicle left-right direction, and a vehicle up-down direction indicate a front-rear direction, a left-right direction, and an up-down direction for a rider seated on a later-described seat 9 of the motorcycle 1, respectively. In this regard, it is assumed that the motorcycle is provided on a horizontal plane. The signs F, B, L, R, U, and D in the figures indicate forward, rearward, leftward, rightward, upward, and downward, respectively.

### (Specific Example of Embodiment)

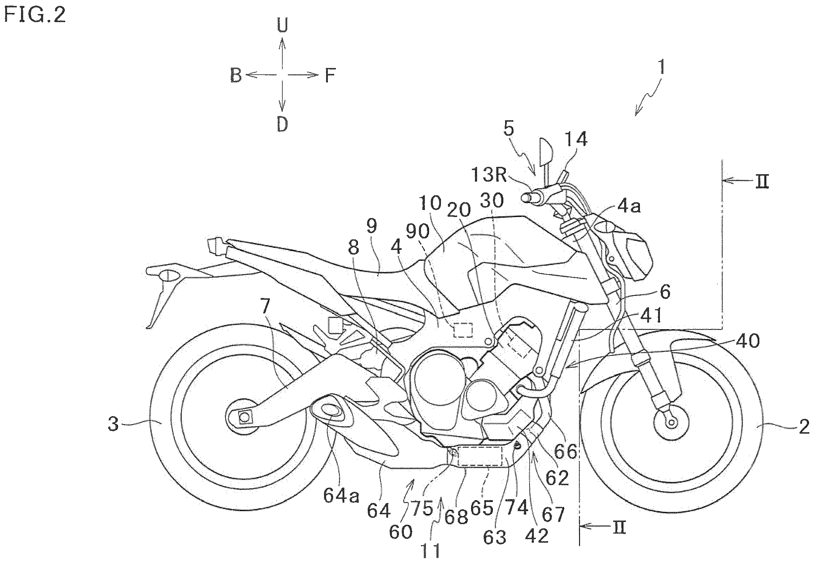

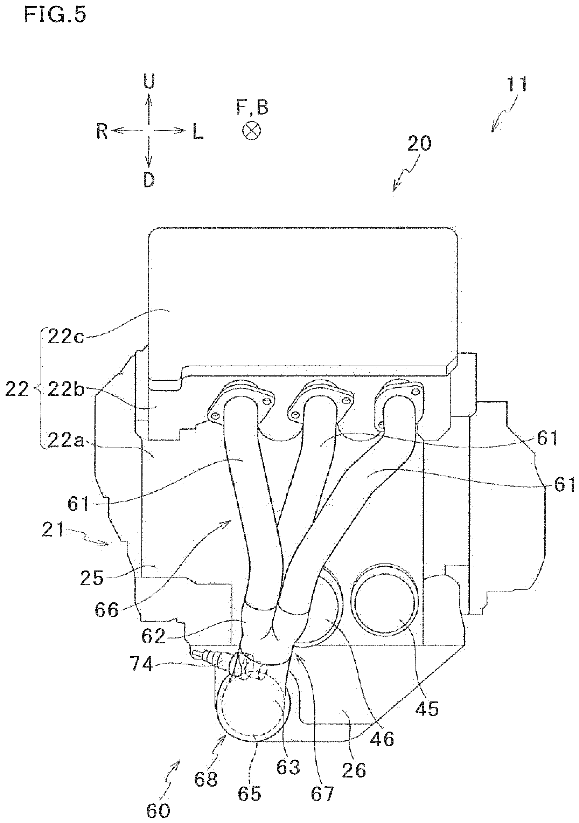

The following describes the motorcycle 1 of the specific example of the embodiment with reference to FIG. 2 to FIG. 8.

### [Overall Structure of Motorcycle]

As shown in FIG. 2, the motorcycle 1 includes a front wheel 2, a rear wheel 3, and a vehicle body frame 4. On the whole, the vehicle body frame 4 extends in the front-rear direction. The vehicle body frame 4 includes a head pipe 4a at a front portion. A steering shaft (not illustrated) is rotatably inserted into the head pipe 4a. An upper end portion of the steering shaft is connected to a handle unit 5. Upper end portions of paired front forks 6 are secured to the handle unit 5. A lower end portion of each front fork 6 supports the front wheel 2.

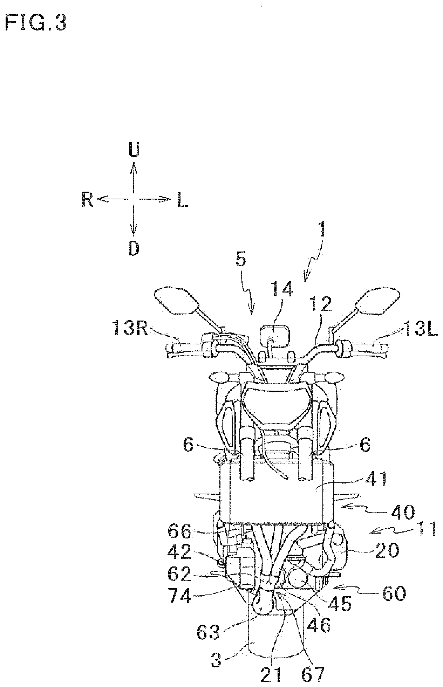

As shown in FIG. 3, the handle unit 5 includes a single handlebar 12 which extends in the left-right direction. Grips 13L and 13R are provided at left and right ends of the handlebar 12, respectively. The right grip 13R is an accelerator grip for adjusting the output of the engine. A display 14 is attached to the handlebar 12. Although not illustrated, the display 14 is configured to display vehicle speed, engine rotation speed, and the like.

As shown in FIG. 2, a pair of swingarms 7 is swingably supported by the vehicle body frame 4. Rear end portions of the swingarms 7 support the rear wheel 3. Each swingarm 7 is connected, at a portion rearward of the swing center, to the vehicle body frame 4 via a rear suspension 8.

A seat 9 and a fuel tank 10 are supported at an upper portion of the vehicle body frame 4. The fuel tank 10 is provided in front of the seat 9. An engine unit 11 is supported by the vehicle body frame 4. The engine unit 11 is provided below the upper end of the seat 9. The engine unit 11 is provided behind the front wheel 2 and in front of the rear wheel 3. The engine unit 11 may be directly or indirectly connected to vehicle body frame 4. A battery (not illustrated) is mounted on the vehicle body frame 4 to supply electric power to a later-described ECU (controller) 90 of the engine unit 11 and electronic apparatuses such as sensors.

### [Structure of Engine Unit]

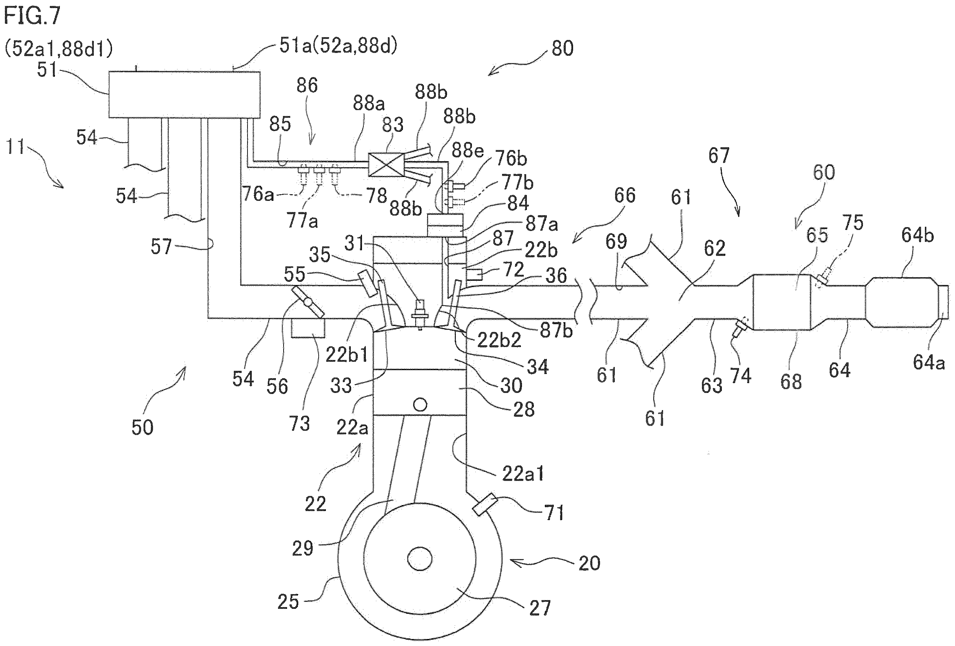

The engine unit 11 includes an engine main body 20, a water cooling unit 40, an intake passage member 50 (see FIG. 7), an exhaust passage member 60, and a secondary air supplier 80 (see FIG. 7). In this specification, a passage member is a structure forming a path. The engine unit 11 is a water-cooled engine unit. The engine unit 11 is a three-cylinder engine including three cylinders. The engine unit 11 is a four-stroke engine which repeats, in each cylinder, an intake process, a compression process, a combustion process (expansion process), and an exhaust process. The combustion process in the three-cylinder engine is performed at different timings in the respective three cylinders. FIG. 7 is a schematic diagram of the engine unit 11 and shows only one of the three cylinders of the engine main body 20 and does not show the remaining two cylinders.

Hot coolant water having absorbed the heat of the engine main body 20 flows into the water cooling unit 40. The water cooling unit 40 is configured to decrease the temperature of this hot coolant water and return the water to the engine main body 20. As shown in FIG. 2 and FIG. 3, the water cooling unit 40 includes a radiator 41, a fan (not illustrated), and a reserve tank 42. The radiator 41 is provided in front of an upper part of the engine main body 20. The fan is provided between the engine main body 20 and the radiator 41. The reserve tank 42 is provided in front of a right part of the engine main body 20. The reserve tank 42 is provided to store the coolant water. The reserve tank 42 may not be provided in front of the right part of the engine main body 20. The engine unit 11 includes a water pump (not illustrated) for circulating the coolant water. The water pump is provided inside an engine main body 20.

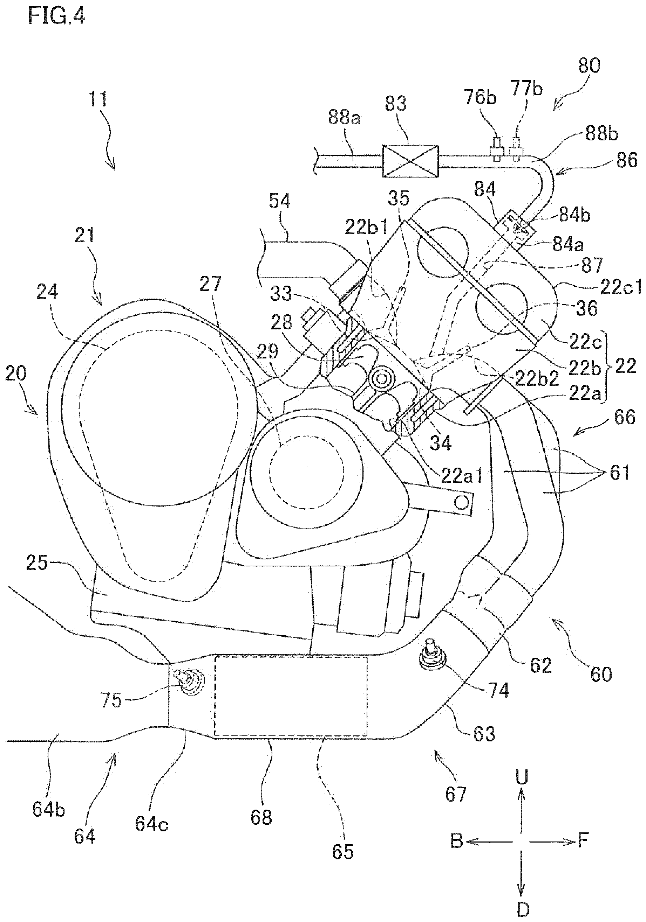

As shown in FIG. 4, the engine main body 20 includes a crankcase member 21 and a cylinder member 22. The cylinder member 22 includes a cylinder body 22a, a cylinder head 22b, and a head cover 22c. The cylinder body 22a is attached to an upper end portion of the crankcase member 21. The cylinder head 22b is attached to an upper end portion of the cylinder body 22a. The head cover 22c is attached to an upper end portion of the cylinder head 22b. FIG. 4 shows a cross section of a part of the cylinder body 22a.

The crankcase member 21 includes members such as a crankcase main body 25, a crankshaft 27, a transmission 24, a starter motor (not illustrated), and a generator (not illustrated). The crankshaft 27 is housed in the crankcase main body 25. The crankshaft 27 is connected to the starter motor and the generator.

The transmission 24 is a mechanism by which the ratio of the rotation speed of the crankshaft 27 to the rotation speed of the rear wheel 3 is changed. As shown in FIG. 4, most of the transmission 24 is provided rearward of the crankshaft 27. The transmission 24 is configured to transmit the rotation of the crankshaft 27 to the rear wheel 3. The starter motor is driven by electric power from a battery (not illustrated) and rotates the crankshaft 27 at engine start. The generator is configured to generate power by the rotational force of the crankshaft 27. The battery is charged with the generated power.

As shown in FIG. 7, an engine rotation speed sensor 71 is provided in the crankcase main body 25. The engine rotation speed sensor 71 is configured to detect the rotation speed of the crankshaft 27, i.e., the engine rotation speed. The rotation speed (engine rotation speed) of the crankshaft 27 indicates the rotation number of the crankshaft 27 per unit time.

In the cylinder body 22a, three cylinder bores 22a1 are formed to be side by side in the left-right direction. A piston 28 is slidably housed in each cylinder bore 22a1. The three pistons 28 are connected to a single crankshaft 27 via three connecting rods 29. A cooling passage in which coolant water flows is formed around the three cylinder bores 22a1.

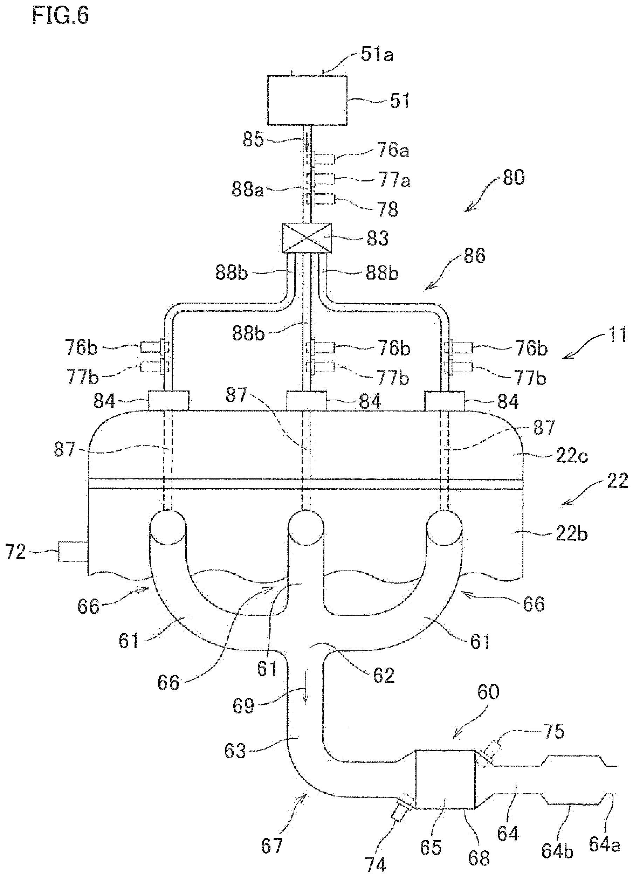

As shown in FIG. 6 and FIG. 7, an engine temperature sensor 72 is provided in the cylinder head 22b to detect the temperature of the engine main body 20. In the present embodiment, the engine temperature sensor 72 is configured to indirectly detect the temperature of the cylinder head 22b by detecting the temperature of the coolant water. The engine temperature sensor 72 may directly detect the temperature of the cylinder head 22b.

As shown in FIG. 7, a combustion chamber 30 is formed by a lower surface of the cylinder head 22b, a cylinder bore 22al, and a piston 28. In the present embodiment, irrespective of the position of the piston 28, the combustion chamber 30 is formed by the lower surface of the cylinder head 22b, the cylinder bore 22a1, and the piston 28. A leading end portion of an ignition plug 31 by which air-fuel mixture in the combustion chamber 30 is ignited is provided in a space inside the combustion chamber 30. The air-fuel mixture is air mixed with fuel. The ignition plug 31 is connected to an ignition coil (not illustrated). The ignition coil stores electric power to cause spark discharge of the ignition plug 31.

As shown in FIG. 4 and FIG. 7, an intake port 33 and an exhaust port 34 are formed in the cylinder head 22b to be open to each combustion chamber 30. The intake port 33 is opened and closed by an intake valve 35. The exhaust port 34 is opened and closed by an exhaust valve 36. Each of the intake valve 35 and the exhaust valve 36 is opened and closed by a valve driving device (not illustrated) housed in the cylinder head 22b. The valve driving device operates in sync with the crankshaft 27.

Three cylinder intake passage members 22b1 are formed in the cylinder head 22b. The intake port 33 is formed at one end of each cylinder intake passage member 22bl. The cylinder intake passage member 22b1 is formed for each combustion chamber 30. The cylinder intake passage member 22b1 is a passage member through which air is introduced into the combustion chamber 30. On the surface of the cylinder head 22b, openings at the other ends of the three cylinder intake passage members 22b1 are formed to be side by side in the left-right direction. The openings at the other ends of the three cylinder intake passage members 22b1 are formed at a rear portion of the cylinder head 22b.

Three cylinder exhaust passage members (dedicated exhaust passage members) 22b2 are formed in the cylinder head 22b. The exhaust port 34 is formed at one end of each cylinder exhaust passage member 22b2. The cylinder exhaust passage member 22b2 is formed for each combustion chamber 30. The cylinder exhaust passage member 22b2 is a passage member for exhausting combustion gas (exhaust gas) generated in the combustion chamber 30 during a combustion process. On the surface of the cylinder head 22b, openings at the other ends of the three cylinder exhaust passage members 22b2 are formed to be side by side in the left-right direction. The openings at the other ends of the three cylinder exhaust passage members 22b2 are formed at a front portion of the cylinder head 22b.

As shown in FIG. 7, the intake passage member 50 includes the three cylinder intake passage members 22b1, three independent intake passage members 54, three injectors (fuel suppliers) 55, and three throttle valves 56. Each of the three independent intake passage members 54 is provided with an air cleaner 51 at one end portion 52a1. In other words, the three independent intake passage members 54 communicate with one another via the air cleaner 51. FIG. 4 shows one independent intake passage member 54 among the three independent intake passage members 54. The air cleaner 51 is supported by the vehicle body frame 4. The air cleaner 51 has an air inlet 51a (see FIG. 7) through which air is sucked from the atmosphere. In other words, the air inlet 51a is provided at one end 52a of each of the three independent intake passage members 54. The air cleaner 51 is configured to suck air through the air inlet 51a. The air cleaner 51 includes a filter (not illustrated) to remove contaminants in the air.

The cylinder intake passage member 22b1 and the independent intake passage member 54 constitute a dedicated intake passage member. The dedicated intake passage member is provided for each combustion chamber 30. The three independent intake passage members 54 and the three cylinder intake passage members 22b1 constitute three dedicated intake passages 57. The dedicated intake passage is provided for each combustion chamber. The dedicated intake passage 57 is a passage from the air inlet 51a through which air is sucked from the atmosphere to each intake port 33. The air sucked through the air inlet 51a flows in the dedicated intake passage 57 toward the intake port 33. Hereinafter, upstream and downstream of the dedicated intake passage 57 in the flow direction of the air will be simply referred to as upstream and downstream.

The injector 55 is provided to inject fuel in the cylinder intake passage member 22b1. The injector 55 is provided for each combustion chamber 30. The injector 55 is connected to a fuel tank 10 (see FIG. 2) via a fuel hose (not illustrated). The fuel in the fuel tank 10 is supplied to the fuel hose with a pressure by a fuel pump (not illustrated).

The throttle valve 56 is provided in the independent intake passage member 54. One throttle valve 56 is provided for each combustion chamber 30. The three throttle valves 56 are opened and closed by an unillustrated motor, based on a signal from the accelerator grip 13R. The three throttle valves 56 may be connected to the accelerator grip 13R via a throttle wire. The opening degree of the throttle valve 56 is changed as the rider rotationally operates the accelerator grip 13R.

A throttle opening degree sensor (throttle position sensor) 73 is provided on the independent intake passage member 54. The throttle opening degree sensor 73 is configured to detect the position of the throttle valve 56 and output a signal indicating the opening degree of the throttle valve 56.

As shown in FIG. 4 to FIG. 7, the exhaust passage member 60 includes three dedicated exhaust passage members 66, the upstream exhaust passage member 67, a catalyst unit 68, and the downstream exhaust passage member 64. The catalyst unit is equivalent to the catalyst exhaust passage member of the present teaching. The three dedicated exhaust passage members 66 include the three cylinder exhaust passage members 22b2 and three independent exhaust passage members 61. One dedicated exhaust passage member 66 is formed of one cylinder exhaust passage member 22b2 and one independent exhaust passage member 61. The three independent exhaust passage members 61 are provided side by side in the left-right direction. One ends of the three independent exhaust passage members 61 are connected to the three cylinder exhaust passage members 22b2, respectively. With this arrangement, exhaust gas exhausted from the engine main body 20 flows into the exhaust passage member 60. Hereinafter, upstream and downstream in the flow direction of the exhaust gas will be simply referred to as upstream and downstream.

The upstream exhaust passage member 67 includes a collective member 62 and a collective exhaust passage member 63. The upstream end of the collective member 62 is connected to the downstream ends of the three independent exhaust passage members 61. The downstream end of the collective member 62 is connected to the collective exhaust passage member 63. The collective member 62 allows the three independent exhaust passage members 61 to communicate with the collective exhaust passage member 63. The downstream end of the collective exhaust passage member 63 is connected to the catalyst unit 68. A catalyst 65 is provided in the catalyst unit 68. The catalyst 65 is configured to purify exhaust gas passing the dedicated exhaust passage 69. The downstream end of the catalyst unit 68 is connected to the downstream exhaust passage member 64. The downstream exhaust passage member 64 includes a tapered portion 64c, a silencer 64b, and a discharge port 64a (see FIG. 2). The tapered portion 64c is shaped such that the inner diameter decreases from the upstream end toward the downstream end. The upstream end of the tapered portion 64c is connected to the downstream end of the catalyst unit 68. The downstream end of the tapered portion 64c is connected to the silencer 64b. The silencer 64b is a device for reducing noise generated by exhaust gas. Exhaust gas is discharged to the atmosphere through the discharge port 64a. The discharge port 64a is provided to the silencer 64b.

Three dedicated exhaust passages 69 are formed in the three dedicated exhaust passage members 66, the upstream exhaust passage member 67, the catalyst unit 68, and the downstream exhaust passage member 64. One dedicated exhaust passage 69 is formed in one dedicated exhaust passage member 66, the upstream exhaust passage member 67, the catalyst unit 68, and the downstream exhaust passage member 64. The dedicated exhaust passage 69 is formed for each combustion chamber 30. The dedicated exhaust passage 69 is a passage from the exhaust port 34 to the discharge port 64a. Combustion gas (exhaust gas) generated in the combustion chamber 30 in the combustion process is discharged to the dedicated exhaust passage 69 via the exhaust port 34. The exhaust gas flows in the dedicated exhaust passage 69 toward the discharge port 64a.

The catalyst unit 68 is provided so that the flow direction of the exhaust gas flowing in the catalyst 65 is along the front-rear direction. In the present embodiment, the flow direction of the exhaust gas flowing in the catalyst 65 is orthogonal to the left-right direction and in parallel to the horizontal direction. The catalyst 65 is formed to be substantially cylindrical prism in shape. A plurality of gaps penetrating the cylindrical prism in the axial direction are formed in the catalyst 65. The catalyst 65 is a so-called three-way catalyst. The three-way catalyst removes three substances in exhaust gas, namely hydrocarbon (HC), carbon monoxide (CO), and nitrogen oxide (NOx), by oxidation or reduction. The three-way catalyst is a type of oxidation□reduction catalysts. The catalyst 65 may be a catalyst which removes one or two of hydrocarbon, carbon monoxide, and nitrogen oxide. The catalyst 65 may not be an oxidation□reduction catalyst. The catalyst may be an oxidation catalyst which removes harmful substances by only oxidation. The catalyst may be a reduction catalyst which removes harmful substances by only reduction. The catalyst 65 includes a base and catalytic materials attached to the surface of the base. The catalytic materials are formed of a carrier and noble metal. The carrier has a function of attaching the noble metal to the base. The noble metal has a function of purifying exhaust gas. Examples of noble metals include platinum, palladium, and rhodium which remove hydrocarbon, carbon monoxide, and nitrogen oxide. The catalyst 65 of the present embodiment is a metal-based catalyst. The catalyst 65 may be a ceramic-based catalyst.

As shown in FIG. 6 and FIG. 7, an oxygen sensor 74 is provided in the upstream exhaust passage member 67 upstream of the catalyst 65. The oxygen sensor 74 is included in the gas state detection device 70. To be more specific, the oxygen sensor 74 is provided in the collective exhaust passage member 63. The oxygen sensor 74 may be provided in the dedicated exhaust passage member 66. The oxygen sensor 74 is configured to detect the oxygen density of the gas (exhaust gas) in the dedicated exhaust passage member 66 or the upstream exhaust passage member 67. In other words, the oxygen sensor 74 is configured to detect the oxygen density of the exhaust gas flowing into the catalyst 65. The oxygen density of the gas in the dedicated exhaust passage member 66 or the upstream exhaust passage member 67 is one of indexes indicating the state of the gas in the passage members other than the dedicated secondary air supply passage member 87 downstream of the dedicated reed valve. The oxygen sensor 74 is a linear A/F sensor. The linear A/F sensor is configured to output a linear detection signal corresponding to the oxygen density of exhaust gas. To put it differently, the linear A/F sensor is configured to continuously detect changes of the oxygen density of the exhaust gas. An air-fuel ratio is estimated based on a signal detected by the linear A/F sensor. The air-fuel ratio is a dimensionless number obtained by dividing the air mass of air-fuel mixture by a fuel mass.

### [Structure of Secondary Air Supplier]

As shown in FIG. 4, FIG. 6, and FIG. 7, the secondary air supplier 80 includes a secondary air supply valve 83, three dedicated reed valves 84, and a secondary air supply passage member 86. The secondary air supply passage member 86 includes the three dedicated secondary air supply passage members 87 downstream of the dedicated reed valves, the upstream secondary air supply passage member 88a, and the downstream secondary air supply passage members 88b. FIG. 3 shows the one dedicated secondary air supply passage member 87 downstream of dedicated reed valve, among the three dedicated secondary air supply passage members 87 downstream of the dedicated reed valves. Similarly, the figure shows one dedicated reed valve 84 out of the three dedicated reed valves 84.

As shown in FIG. 4, the dedicated secondary air supply passage member 87 downstream of the dedicated reed valve is formed in the cylinder head 22b and the head cover 22c. The dedicated secondary air supply passage member 87 downstream of the dedicated reed valve is formed for each combustion chamber 30. The dedicated secondary air supply passage member 87 downstream of the dedicated reed valve is provided downstream of the dedicated reed valve 84 in the flow direction of the secondary air. As shown in FIG. 7, downstream end portions 87b, in the flow direction of the secondary air, of the three dedicated secondary air supply passage members 87 downstream of the dedicated reed valves are connected to the three cylinder exhaust passage members 22b2 (dedicated exhaust passage members 66), respectively. In other words, the end portion 87b which is downstream, in the flow direction of the secondary air, of the one dedicated secondary air supply passage member 87 downstream of dedicated reed valve is connected to one cylinder exhaust passage member 22b2 (dedicated exhaust passage member 66). The dedicated reed valve 84 is formed for each combustion chamber 30. Upstream end portions 87a, in the flow direction of the secondary air, of the three dedicated secondary air supply passage members 87 downstream of the dedicated reed valves are connected to the three dedicated reed valves 84, respectively. In other words, the upstream end portion 87a, in the flow direction of the secondary air, of the one dedicated secondary air supply passage member 87 downstream of dedicated reed valve is connected to one dedicated reed valve 84. The dedicated reed valve 84 (see FIG. 7) opens to the upper end portion 22c1 (see FIG. 4 and FIG. 6) of the head cover 22c. The three dedicated reed valves 84 are provided on the upper end portion 22c1 of the head cover 22c to be side by side in the left-right direction. The three dedicated reed valves 84 are connected to downstream end portions 88e of the three downstream secondary air supply passage members 88b in the flow direction of the secondary air, respectively. To put it differently, one dedicated reed valve 84 is connected to the downstream end portion 88e of one downstream secondary air supply passage member 88b in the flow direction of the secondary air. In the open state, the dedicated reed valve 84 causes the dedicated secondary air supply passage member 87 downstream of the dedicated reed valve to communicate with the downstream secondary air supply passage member 88b. In the closed state, the dedicated reed valve 84 disconnects the dedicated secondary air supply passage member 87 downstream of the dedicated reed valve from the downstream secondary air supply passage member 88b.

As shown in FIG. 7, upstream end portions of the three downstream secondary air supply passage members 88b in the flow direction of the secondary air are connected to the secondary air supply valve 83. A downstream end portion of the upstream secondary air supply passage member 88a in the flow direction of the secondary air is connected to the secondary air supply valve 83. In the open state, the secondary air supply valve 83 causes the three downstream secondary air supply passage members 88b to communicate with the upstream secondary air supply passage member 88a. In the closed state, the secondary air supply valve 83 disconnects the three downstream secondary air supply passage members 88b from the upstream secondary air supply passage member 88a. The air cleaner 51 is provided at the upstream end portion 88dl of the upstream secondary air supply passage member 88a in the flow direction of the secondary air. The air cleaner 51 has an air inlet 51a through which air is sucked from the atmosphere. In other words, the upstream end portion 88d of the upstream secondary air supply passage member 88a in the flow direction of the secondary air has the air inlet 51a.

The secondary air supply passage member 86 is formed of the upstream secondary air supply passage member 88a, the secondary air supply valve 83, the three downstream secondary air supply passage members 88b, and the three dedicated secondary air supply passage members 87 downstream of the dedicated reed valves. The dedicated secondary air supply passage 85 is formed for each combustion chamber 30. The dedicated secondary air supply passage 85 is formed inside the secondary air supply passage member 86. Upstream and downstream of the dedicated secondary air supply passage 85 in the flow direction of the secondary air will be simply referred to as upstream and downstream. Three dedicated secondary air supply passages 85 are formed in the upstream secondary air supply passage member 88a, the secondary air supply valve 83, the three downstream secondary air supply passage members 88b, the three dedicated reed valves 84, and the three dedicated secondary air supply passage members 87 downstream of the dedicated reed valves. One dedicated secondary air supply passage 85 is formed in the upstream secondary air supply passage member 88a, the secondary air supply valve 83, one downstream secondary air supply passage member 88b, one dedicated reed valve 84, and the one dedicated secondary air supply passage member 87 downstream of dedicated reed valve. The dedicated secondary air supply passage 85 is formed for each combustion chamber 30. The dedicated secondary air supply passage 85 is a passage from the air inlet 51a to each dedicated exhaust passage member 66. The air sucked through the air inlet 51a flows in the dedicated secondary air supply passage 85 toward the dedicated exhaust passage member 66. Hereinafter, air flowing into the dedicated secondary air supply passage 85 through the air inlet 51a will be referred to as secondary air.

As shown in FIG. 6 and FIG. 7, a downstream secondary air temperature sensor 76b is provided on each of the three downstream secondary air supply passage members 88b. The downstream secondary air temperature sensor 76b is included in the gas state detection device 70. The downstream secondary air temperature sensor 76b is provided at a position downstream of the secondary air supply valve 83 and upstream of the dedicated reed valve 84. Each downstream secondary air temperature sensor 76b is configured to detect the temperature of gas in each downstream secondary air supply passage member 88b. The oxygen density of the gas in the downstream secondary air supply passage member 88b is one of indexes indicating the state of the gas in the passage members other than the dedicated secondary air supply passage member 87 downstream of the dedicated reed valve.

The secondary air supply valve 83 is controlled to be in the open state or the closed state by a later-described ECU (Electronic Control Unit) 90. The secondary air supply valve 83 is switched between the open state and the closed state. In the open state, the secondary air supply valve 83 causes the upstream secondary air supply passage member 88a to communicate with the downstream secondary air supply passage member 88b. The put it differently, in the open state, the secondary air supply valve 83 opens the dedicated secondary air supply passage 85 so as to allow the supply of the secondary air to the dedicated secondary air supply passage 85. In the closed state, the secondary air supply valve 83 disconnects the upstream secondary air supply passage member 88a from the downstream secondary air supply passage member 88b. In other words, in the closed state, the secondary air supply valve 83 closes the dedicated secondary air supply passage 85 so as to stop the supply of the secondary air to the dedicated secondary air supply passage 85. The secondary air supply valve 83 switches the dedicated secondary air supply passage 85 between an open state and a cut-off state. The secondary air supply valve 83 is provided upstream of the dedicated reed valve 84 on the dedicated secondary air supply passage 85. The secondary air supply valve 83 is, for example, an electromagnetic valve (solenoid valve).

As shown in FIG. 4, each dedicated reed valve 84 includes a housing 84a and a reed valve body 84b. The reed valve body 84b is made of an elastic body and is fixed to the inside of the housing 84a. The dedicated reed valve 84 is switched between the open state and the closed state on account of the elasticity of the reed valve body 84b. In the open state, the dedicated reed valve 84 causes the dedicated secondary air supply passage member 87 downstream of the dedicated reed valve to communicate with the downstream secondary air supply passage member 88b. In other words, in the open state, the dedicated reed valve 84 opens the dedicated secondary air supply passage 85. In the closed state, the dedicated reed valve 84 disconnects the dedicated secondary air supply passage member 87 downstream of the dedicated reed valve from the downstream secondary air supply passage member 88b. In other words, in the closed state, the dedicated reed valve 84 closes the dedicated secondary air supply passage 85. A value obtained by subtracting the pressure of the gas in the dedicated secondary air supply passage member 87 downstream of the dedicated reed valve from the pressure of the gas in the downstream secondary air supply passage member 88b is referred to as a pressure difference P. The pressure of the gas in the downstream secondary air supply passage member 88b is equal to the pressure of the gas in the dedicated secondary air supply passage 85 upstream of the dedicated reed valve 84 in the flow direction of the secondary air. The pressure of the gas in the dedicated secondary air supply passage member 87 downstream of the dedicated reed valve is equal to the pressure of the gas in the dedicated secondary air supply passage 85 downstream of the dedicated reed valve 84 in the flow direction of the secondary air. The dedicated reed valve 84 is in the open state when the pressure difference P is equal to or higher than a predetermined pressure. The dedicated reed valve 84 is in the closed state when the pressure difference P is lower than the predetermined pressure. The predetermined pressure is a positive value. With this structure, the dedicated reed valve 84 allows gas to pass only in one direction from the downstream secondary air supply passage member 88b toward the dedicated secondary air supply passage member 87 downstream of the dedicated reed valve. The dedicated reed valve 84 does not allow gas to pass in the direction from the dedicated secondary air supply passage member 87 downstream of the dedicated reed valve toward the downstream secondary air supply passage member 88b.

In the exhaust process, exhaust gas is periodically exhausted from the combustion chamber 30 to the dedicated exhaust passage member 66. Exhaust pulse therefore occurs in the dedicated exhaust passage member 66. For this reason, the pressure in the dedicated exhaust passage member 66 periodically varies. To put it differently, the pressure in the dedicated exhaust passage member 66 alternates between a positive pressure and a negative pressure on the basis of an average exhaust pressure. The average exhaust pressure is an average value of the pressure in the dedicated exhaust passage member 66. The dedicated secondary air supply passage member 87 downstream of the dedicated reed valve is connected to the dedicated exhaust passage member 66. Accordingly, the pressure in the dedicated secondary air supply passage member 87 downstream of the dedicated reed valve periodically varies. In other words, the pressure in the dedicated secondary air supply passage member 87 downstream of the dedicated reed valve also alternates between positive and negative on the basis of an average exhaust pressure. In this connection, when the secondary air supply valve 83 is in the open state, the upstream secondary air supply passage member 88a is open to the atmosphere at the air inlet 51a. The pressure of the gas in the downstream secondary air supply passage member 88b communicating with the upstream secondary air supply passage member 88a is equal to an average exhaust pressure. When the pressure in the dedicated exhaust passage member 66 is a negative pressure, the pressure of the gas in the downstream secondary air supply passage member 88b is higher than the pressure in the dedicated secondary air supply passage member 87 downstream of the dedicated reed valve. When the pressure of the gas in the downstream secondary air supply passage member 88b becomes higher by a predetermined pressure than the pressure in the dedicated secondary air supply passage member 87 downstream of the dedicated reed valve, the dedicated reed valve 84 becomes in the open state. The air sucked through the air inlet 51a passes the dedicated secondary air supply passage 85 as the secondary air and is supplied to the dedicated exhaust passage member 66. When the secondary air is supplied to the dedicated exhaust passage member 66, the oxygen density becomes high at a part upstream of the catalyst 65 in the dedicated exhaust passage 69. This facilitates, in the dedicated exhaust passage 69, the oxidation of unburned gas in the exhaust gas discharged from the combustion chamber 30 to the dedicated exhaust passage 69. As a result, unburned substances such as HC and CO in the unburned gas are burned. The unburned substances such as HC and CO in the unburned gas are therefore purified by oxidation by the secondary air. Furthermore, oxygen deficiency in the catalyst 65 is resolved and the purification by the catalyst 65 is assisted. Furthermore, because the oxygen density in the exhaust gas supplied to the catalyst 65 increases, the oxidation of the catalyst is facilitated. It is therefore possible to further increase the temperature of the catalyst 65.

### [Structure of ECU]

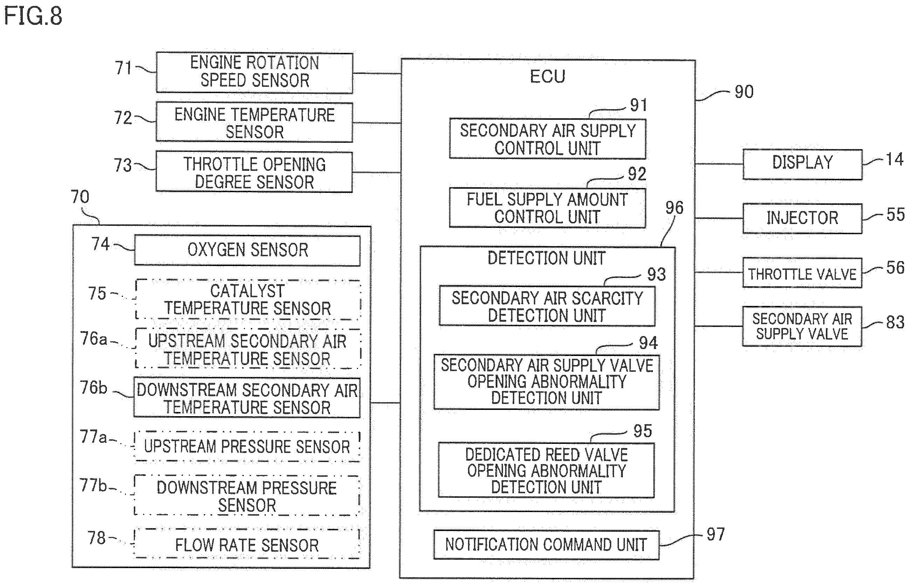

The engine unit 11 includes an ECU 90. The ECU 90 is configured to control the engine unit 11. As shown in FIG. 8, the ECU 90 is connected to sensors such as the engine rotation speed sensor 71, the engine temperature sensor 72, the throttle opening degree sensor 73, the oxygen sensor 74, and the downstream secondary air temperature sensor 76b. Furthermore, the ECU 90 is connected to members such as the ignition coil (not illustrated), the starter motor (not illustrated), and the display (notification unit) 14.

The ECU 90 is formed of a CPU, a ROM, a RAM, etc. The CPU is configured to perform information processing based on a program and data stored in the ROM and the RAM. With this arrangement, the ECU 90 realizes functions of function processors. As shown in FIG. 8, the ECU 90 includes, as function processors, the secondary air supply control unit 91, the fuel supply amount control unit 92, the detection unit 96, and a notification command unit 97. The detection unit 96 includes a secondary air scarcity detection unit 93, a secondary air supply valve opening abnormality detection unit 94, and a dedicated reed valve opening abnormality detection unit 95. The secondary air supply control unit 91 is configured to control the open/close state of the secondary air supply valve 83. The fuel supply amount control unit 92 is configured to control driving of the injector 55 and the fuel pump. By doing this, the fuel supply amount control unit 92 controls a fuel supply amount. The secondary air scarcity detection unit 93 is configured to be able to detect clogging of the dedicated secondary air supply passage member 87 downstream of the dedicated reed valve. Furthermore, the secondary air scarcity detection unit 93 is configured to be able to detect that the dedicated secondary air supply passage member 87 downstream of the dedicated reed valve is about to clog. Furthermore, the secondary air scarcity detection unit 93 is configured to be able to detect that the secondary air supply valve 83 is fixed to the closed state. The secondary air supply valve opening abnormality detection unit 94 is configured to be able to detect that the secondary air supply valve 83 is fixed to the open state. The dedicated reed valve opening abnormality detection unit 95 is configured to be able to detect that the dedicated reed valve 84 is fixed to the open state.

The ECU 90 is configured to control electric conduction to the ignition coil based on signals from the sensors 71 to 74, etc. By doing this, the ECU 90 controls ignition timings (discharge timings of the ignition plug 31). Furthermore, the ECU 90 is configured to control electric conduction to the starter motor (not illustrated). By doing this, the ECU 90 controls the start of the engine unit 11.

### [Control of Secondary Air Supply Control Unit]

The following describes an example of control by the secondary air supply control unit 91. The secondary air supply control unit 91 is configured to control the secondary air supply valve 83 to be in the open state or the closed state, based on signals from the engine rotation speed sensor 71, the engine temperature sensor 72, and the throttle opening degree sensor 73.

In this specification, the control of the secondary air supply valve 83 by the secondary air supply control unit 91 to be in the open state indicates that the secondary air supply control unit 91 sends, to the secondary air supply valve 83, a signal instructing the secondary air supply valve 83 to open. It does not matter whether the secondary air supply valve 83 has properly opened or not. In this specification, the open state indicates a state in which a valve is open. When the secondary air supply valve 83 which is normal is controlled to be in the open state, the secondary air supply valve 83 is in a below-described state. The secondary air supply valve 83 in the closed state is switched to the open state. The secondary air supply valve 83 in the open state is maintained to be in the open state. In this specification, the control of the secondary air supply valve 83 to be in the closed state by the secondary air supply control unit 91 indicates that a signal instructing the secondary air supply valve 83 to close is sent. It does not matter whether the secondary air supply valve 83 has properly been closed or not. In this specification, the closed state indicates a state in which a valve is closed. When the secondary air supply valve 83 which is normal is controlled to be in the closed state, the secondary air supply valve 83 is in a below-described state. The secondary air supply valve 83 in the open state is switched to the closed state. The secondary air supply valve 83 in the closed state is maintained to be in the closed state.

The secondary air supply control unit 91 is configured to control the secondary air supply valve 83 to be in the open state when the engine main body 20 is driven under the cold state. As a result, the secondary air is supplied from the downstream secondary air supply passage member 88b to each cylinder exhaust passage member 22b2 (dedicated exhaust passage member 66) via the dedicated secondary air supply passage member 87 downstream of the dedicated reed valve. Unburned gas is therefore burned in the dedicated exhaust passage member 66 and an amount of heat of the exhaust gas is increased.

The secondary air supply control unit 91 carries out control as described below, when the engine main body 20 is driven under a warm-up state. The secondary air supply control unit 91 controls the secondary air supply valve 83 to be in the open state, when driven in a secondary air supply driving range. As a result, the secondary air is supplied from the downstream secondary air supply passage member 88b to each cylinder exhaust passage member 22b2 (dedicated exhaust passage member 66) via the dedicated secondary air supply passage member 87 downstream of the dedicated reed valve. Unburned gas is therefore burned in the dedicated exhaust passage member 66 and an amount of heat of the exhaust gas is increased. Oxygen deficiency in the catalyst 65 is resolved. Furthermore, because the oxygen density in the exhaust gas supplied to the catalyst 65 increases, the oxidation of the catalyst 65 is facilitated. It is therefore possible to further increase the temperature of the catalyst 65. The secondary air supply control unit 91 controls the secondary air supply valve 83 to be in the closed state, when driven in a range different from the secondary air supply driving range. This makes it possible to stop the supply of the secondary air during high-speed rotation in which an amount of heat of the exhaust gas exhausted from the combustion chamber 30 is large and air supply to the dedicated exhaust passage member 66 is unnecessary.

The secondary air supply control unit 91 determines whether the engine main body 20 is in the cold state based on a signal from the engine temperature sensor 72. The driving state of the engine main body 20 is switched between the cold state and the warm-up state on the basis of an engine temperature ET1. The temperature ET1 is stored in the ECU 90 in advance. The temperature of the engine main body 20 detected by the engine temperature sensor 72 is referred to as a temperature ET. When the temperature ET is higher than the temperature ET1, the secondary air supply control unit 91 determines that the driving state of the engine main body 20 is the warm-up state. When the temperature ET is equal to or lower than the temperature ET1, the secondary air supply control unit 91 determines that the driving state of the engine main body 20 is the cold state.

The secondary air supply control unit 91 determines whether the driving range of the engine main body 20 is the secondary air supply driving range, based on signals of the engine rotation speed sensor 71 and the throttle opening degree sensor 73. The driving range of the engine main body 20 is defined by a load and an engine rotation speed. The load of the engine main body 20 is detected based on a signal of the throttle opening degree sensor 73. The engine rotation speed of the engine main body 20 is detected by the engine rotation speed sensor 71. The driving range of the engine main body 20 is divided into a low-load range and a high-load range on the basis of the opening degree of the throttle valve 56. Furthermore, the driving range of the engine main body 20 is divide into a low-rotation range and a high-rotation range on the basis of the engine rotation speed.

The driving range of the engine main body 20 is divided into a low-load range and a high-load range on the basis of the opening degree θ1 of the throttle valve 56. The opening degree θ1 is stored in the ECU 90 in advance. The opening degree of the throttle valve 56 detected by the throttle opening degree sensor 73 is referred to as an opening degree θ. When the opening degree θ is equal to or smaller than the opening degree θ1, the secondary air supply control unit 91 determines that the driving range of the engine main body 20 is the low-load range. When the opening degree θ is larger than the opening degree θ1, the secondary air supply control unit 91 determines that the driving range of the engine main body 20 is the high-load range. The opening degree θ1 may be equal to or smaller than 1/2 of the opening degree in the full-open state. The opening degree θ1 may be a fixed value or a variable which is varied based on a predetermined condition. The secondary air supply driving range is at least a part of the low-load range. To put it differently, in the secondary air supply driving range, the opening degree of the throttle valve 56 is equal to or smaller than the opening degree θ1. The secondary air supply driving range is stored in advance in the ECU 90, based on the opening degree of the throttle valve 56 and the engine rotation speed. In this specification, the full-open state indicates a state in which an opening degree is 100.

### [Control of Fuel Supply Amount Control Unit]

An example of the control by the fuel supply amount control unit 92 will be described. The fuel supply amount control unit 92 is configured to control driving of the injector 55 and the fuel pump, based on signals from sensors such as the engine rotation speed sensor 71, the engine temperature sensor 72, the throttle opening degree sensor 73, and the oxygen sensor 74. The fuel supply amount control unit 92 is configured to control the fuel supply amount by controlling the driving of the injector 55 and the fuel pump. In this specification, the control of the fuel supply amount includes control of an amount of fuel supplied from the fuel pump and control of time of injecting fuel by the injector 55.

Being similar to the secondary air supply control unit 91 described above, the fuel supply amount control unit 92 determines whether the engine main body 20 is in the cold state or the warm-up state. In other words, the fuel supply amount control unit 92 determines whether the engine main body 20 is in the cold state or the warm-up state, based on a signal of the engine temperature sensor 72. Being similar to the above-described secondary air supply control unit 91, the fuel supply amount control unit 92 determines the driving range of the engine main body 20. In other words, the fuel supply amount control unit 92 determines the driving range of the engine main body 20, based on signals of the engine rotation speed sensor 71 and the throttle opening degree sensor 73.

The fuel supply amount control unit 92 is configured to perform control as below when the engine main body 20 is driven under the cold state. When the engine main body 20 under the cold state starts, the fuel supply amount control unit 92 determines a fuel supply amount based on signals from sensors such as the engine temperature sensor 72. Thereafter, the fuel supply amount control unit 92 calculates an intake air amount based on a signal of the engine rotation speed sensor 71 and a signal of the throttle opening degree sensor 73. Based on the intake air amount, the fuel supply amount control unit 92 calculates a basic fuel supply amount. The fuel supply amount control unit 92 determines the fuel supply amount by correcting the basic fuel supply amount based on signals from sensors such as the engine temperature sensor 72. The sensors used for the correction do not include the oxygen sensor 74.

When the engine main body 20 is under the warm-up state and is driven in the secondary air supply driving range, the fuel supply amount control unit 92 performs control as below. The fuel supply amount control unit 92 calculates an intake air amount based on a signal of the engine rotation speed sensor 71 and a signal of the throttle opening degree sensor 73. Based on the intake air amount, the fuel supply amount control unit 92 calculates a basic fuel supply amount. The fuel supply amount control unit 92 determines the fuel supply amount by correcting the basic fuel supply amount based on signals from sensors such as the engine temperature sensor 72. The sensors used for the correction do not include the oxygen sensor 74.

When the engine main body 20 is under the warm-up state and is driven in a low-load range other than the secondary air supply driving range, the fuel supply amount control unit 92 performs control as below. The fuel supply amount control unit 92 calculates an intake air amount based on a signal of the engine rotation speed sensor 71 and a signal of the throttle opening degree sensor 73. Based on the intake air amount, the fuel supply amount control unit 92 calculates a basic fuel supply amount. The fuel supply amount control unit 92 determines the fuel supply amount by correcting the basic fuel supply amount based on signals from sensors such as the engine temperature sensor 72. The sensors used for the correction include the oxygen sensor 74. The fuel supply amount control unit 92 is configured to control the fuel supply amount so that the air-fuel ratio of the air-fuel mixture is equal to a predetermined air-fuel ratio. The predetermined air-fuel ratio is preferably close to a stoichiometric air-fuel ratio S. This is because the combustion efficiency and the purification efficiency of the catalyst can be improved.

When the engine main body 20 is driven in the high-load range, the fuel supply amount control unit 92 performs control as below. The fuel supply amount control unit 92 calculates an intake air amount based on a signal from the engine rotation speed sensor 71 and a signal from an intake pressure sensor (not illustrated). Based on the intake air amount, the fuel supply amount control unit 92 calculates a basic fuel supply amount. The fuel supply amount control unit 92 determines the fuel supply amount by correcting the basic fuel supply amount based on signals from sensors such as the engine temperature sensor 72. The sensors used for the correction include the oxygen sensor 74. The fuel supply amount control unit 92 is configured to control the fuel supply amount so that the air-fuel ratio of the air-fuel mixture is equal to a predetermined air-fuel ratio. The predetermined air-fuel ratio is preferably close to a stoichiometric air-fuel ratio S. This is because the combustion efficiency and the purification efficiency of the catalyst can be improved.

When the engine main body 20 is driven under the cold state, the fuel supply amount control unit 92 further performs control as below. Also when the engine main body 20 is under the warm-up state and is driven in the secondary air supply driving range, the fuel supply amount control unit 92 performs control as below. In a normal state, the fuel supply amount control unit 92 performs control to satisfy the following five conditions. In this specification, the normal state indicates that the secondary air supplier 80 is in a normal state. In other words, the normal state is a state in which the secondary air supply valve 83 and the dedicated reed valve 84 operate normally and the dedicated secondary air supply passage member 87 downstream of the dedicated reed valve does not clog or is not about to clog. When the engine main body 20 is under the cold state, the secondary air supply valve 83 is controlled to be in the open state. Also when the engine main body 20 is under the warm-up state and is driven in the secondary air supply driving range, the secondary air supply valve 83 is controlled to be in the open state.

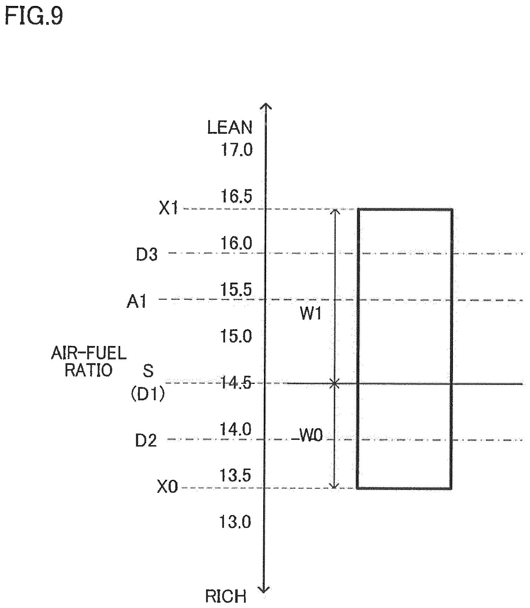

With reference to FIG. 9, the five conditions satisfied by the fuel supply amount control unit 92 will be described. The vertical axis of the graph in FIG. 9 indicates the air-fuel ratio. In the example shown in FIG. 9, the stoichiometric air-fuel ratio S is a stoichiometric air-fuel ratio of 14.5. In FIG. 9, the stoichiometric air-fuel ratio S is the border between rich and lean. Hereinafter, an air-fuel ratio estimated from the oxygen density of exhaust gas detected by the oxygen sensor 74 in the normal state in which the dedicated secondary air supply passage member 87 downstream of the dedicated reed valve does not clog is referred to as an air-fuel ratio X1. The air-fuel ratio X1 is an air-fuel ratio when secondary air is supplied to the dedicated exhaust passage member 66. In other words, the air-fuel ratio X1 is an air-fuel ratio estimated from the oxygen density of the exhaust gas detected by the oxygen sensor 74 when the secondary air supply valve 83 is in the open state. Furthermore, assume that the secondary air supplied to the dedicated exhaust passage member 66 is removed from the exhaust gas passing the oxygen sensor 74 while the supplier is in the normal state in which the dedicated secondary air supply passage member 87 downstream of the dedicated reed valve does not clog. An air-fuel ratio estimated from the oxygen density of the gas from which the secondary air has been removed is referred to as an air-fuel ratio X0. The air-fuel ratio X0 is an air-fuel ratio when secondary air is not supplied to the dedicated exhaust passage member 66. In other words, the air-fuel ratio X0 is an air-fuel ratio estimated from the oxygen density of the exhaust gas detected by the oxygen sensor 74 when the secondary air supply valve 83 is controlled to be in the closed state. In this connection, a signal from the oxygen sensor 74 varies in accordance with periodical exhaust of the exhaust gas. In the present teaching, an air-fuel ratio estimated from a signal of the oxygen sensor 74 is a positive pressure value.

The first condition is that the air-fuel ratio X1 is lean as compared to the stoichiometric air-fuel ratio S. The second condition is that the air-fuel ratio X0 is rich as compared to the air-fuel ratio X1. The third condition is that a value obtained by subtracting the air-fuel ratio X0 from the air-fuel ratio X1 is equal to or larger than one. The fourth condition is that a difference W1 between the air-fuel ratio X1 and the stoichiometric air-fuel ratio S is lager than a difference W0 between the air-fuel ratio X0 and the stoichiometric air-fuel ratio S. The fifth condition is that the difference W1 between the air-fuel ratio X1 and the stoichiometric air-fuel ratio S is equal to or larger than one.

The fuel supply amount control unit 92 performs control based on signals of sensors other than the oxygen sensor 74. In other words, the air-fuel ratio is not adjusted based on a signal detected by the oxygen sensor 74. The structure of the secondary air supplier 80 is adjusted so that control is performed while the air-fuel ratio X0 and the air-fuel ratio X1 satisfy the five conditions above, without using the oxygen sensor 74. For example, the inner diameter of the secondary air supply passage member 86, the length of the secondary air supply passage member 86, the position where the secondary air supply valve 83 is provided, the positions where the three dedicated reed valves 84 are provided, and the position where the air cleaner 51 is provided are adjusted.

### [Control of Secondary Air Scarcity Detection Unit]

The secondary air scarcity detection unit 93 is configured to be able to detect clogging of the dedicated secondary air supply passage member 87 downstream of the dedicated reed valve, based on a signal of the oxygen sensor 74. Similarly, the secondary air scarcity detection unit 93 is configured to be able to detect fixation of the dedicated reed valve 84 to the closed state based on a signal of the oxygen sensor 74. The clogging of the dedicated secondary air supply passage member 87 downstream of the downstream of the dedicated reed valve indicates that at least one dedicated secondary air supply passage member 87 downstream of the dedicated reed valve clogs among the three dedicated secondary air supply passage members 87 downstream of the dedicated reed valves. The fixation of the dedicated reed valve 84 to the closed state indicates that at least one of the three dedicated reed valves 84 is fixed to the closed state. The following describes only a case where the secondary air scarcity detection unit 93 detects clogging of the dedicated secondary air supply passage member 87 downstream of the dedicated reed valve. The fixation of the dedicated reed valve 84 to the closed state is equivalent to clogging of the dedicated secondary air supply passage member 87 downstream of the dedicated reed valve. For this reason, the description of detection of fixation of the dedicated reed valve 84 to the closed state by the secondary air scarcity detection unit 93 is omitted.

The secondary air scarcity detection unit 93 is arranged to be able to perform detection when the secondary air supply control unit 91 controls the secondary air supply valve 83 to be in the open state. The detection timing is a timing at which the engine main body 20 is driven under the cold state and in a predetermined driving range. In this specification, the detection timing is a timing at which the secondary air scarcity detection unit 93 (detection unit 96) determines whether the dedicated secondary air supply passage member 87 downstream of the dedicated reed valve clogs or not. The detection timing is not only an exact time point but also a predetermined duration from a time point. When the detection timing is a predetermined duration from a time point, a signal detected by a sensor is an average value. In this specification, a predetermined driving range is, for example, a predetermined load range and a predetermined rotation range which are set in advance. The predetermined load range indicates that a load falls within a predetermined range of loads. The predetermined rotation range indicates that an engine rotation speed falls within a predetermined range of rotation speeds.

The secondary air supplier 80 including the dedicated secondary air supply passage member 87 downstream of the dedicated reed valve is relatively close to the combustion chamber 30. It is therefore possible to secure a sufficient amount of secondary air supplied to the dedicated exhaust passage member 66 from the dedicated secondary air supply passage member 87 downstream of the dedicated reed valve, by utilizing pressure pulsation in the dedicated exhaust passage member 66. When the engine main body 20 is under the cold state, fuel is often supplied so that the air-fuel ratio is equal to the stoichiometric air-fuel ratio or is rich as compared to the stoichiometric air-fuel ratio. On this account, in the normal state, when the secondary air supply valve 83 is operated so that the secondary air supplier 80 supplies secondary air, the secondary air is supplied to the dedicated exhaust passage member 66 from the dedicated secondary air supply passage member 87 downstream of the dedicated reed valve. The oxygen density therefore becomes lean as compared to the stoichiometric air-fuel ratio. Meanwhile, in a state in which the dedicated secondary air supply passage member 87 downstream of the dedicated reed valve clogs, even if the secondary air supply valve 83 is operated so that the secondary air supplier 80 supplies secondary air, the secondary air is not supplied to the dedicated exhaust passage member 66 from the dedicated secondary air supply passage member 87 downstream of the dedicated reed valve. The oxygen density therefore becomes rich in comparison with the oxygen density in the normal state. As such, it is easy to detect a difference in oxygen density between the normal state and the state in which the dedicated secondary air supply passage member 87 downstream of the dedicated reed valve clogs.

With reference to FIG. 8, the following describes an example of control when the secondary air scarcity detection unit 93 detects clogging of the dedicated secondary air supply passage member 87 downstream of the dedicated reed valve. When the dedicated secondary air supply passage member 87 downstream of the dedicated reed valve clogs, secondary air is not supplied to the dedicated exhaust passage member 66. In other words, the secondary air including oxygen, which is supplied to the dedicated exhaust passage member 66, becomes insufficient. Therefore, at the detection timing, an air-fuel ratio estimated from the oxygen density detected by the oxygen sensor 74 is a value on the rich side as compared to the air-fuel ratio in the normal state. The air-fuel ratio estimated from the oxygen density detected by the oxygen sensor 74 at the detection timing is referred to as an air-fuel ratio A1. The secondary air scarcity detection unit 93 is configured to detect the clogging of the dedicated secondary air supply passage member 87 downstream of the dedicated reed valve based on whether the air-fuel ratio A1 is a value on the rich side as compared to the air-fuel ratio X1. To be more specific, a secondary air scarcity detection value used for detecting the clogging of the dedicated secondary air supply passage member 87 downstream of the dedicated reed valve is referred to as an air-fuel ratio D1. The air-fuel ratio D1 is a value on the lean side as compared to the air-fuel ratio X1. The air-fuel ratio D1 is a value on the rich side as compared to the air-fuel ratio X0. The air-fuel ratio D1 may be a single value or a range of values. The air-fuel ratio D1 is stored in the ECU 90 in advance. The secondary air scarcity detection unit 93 is configured to detect the clogging of the dedicated secondary air supply passage member 87 downstream of the dedicated reed valve based on whether the air-fuel ratio A1 is a value on the rich side as compared to the air-fuel ratio D1. The secondary air scarcity detection unit 93 may distinguish a case where the dedicated secondary air supply passage member 87 downstream of the dedicated reed valve clogs from a below-described case where the secondary air supply valve 83 is about to clog, based on whether the air-fuel ratio A1 is a value on the lean side as compared to a below-described air-fuel ratio D2.

When the secondary air scarcity detection unit 93 detects the clogging of the dedicated secondary air supply passage member 87 downstream of the dedicated reed valve, the notification command unit 97 sends, to the display 14, a signal for notifying the clogging of the dedicated secondary air supply passage member 87 downstream of the dedicated reed valve. Based on the signal from the notification command unit 97, the display 14 displays a warning of the clogging of the dedicated secondary air supply passage member 87 downstream of the dedicated reed valve.

In addition to the above, the secondary air scarcity detection unit 93 is configured to detect fixation of the secondary air supply valve 83 to the closed state based on a signal from the oxygen sensor 74. The secondary air scarcity detection unit 93 performs the detection when the secondary air supply control unit 91 controls the secondary air supply valve 83 to be in the open state. The detection timing is a timing at which the engine main body 20 is driven under the cold state and in a predetermined driving range. This detection timing is a timing at which the secondary air scarcity detection unit 93 diagnoses if fixation of the secondary air supply valve 83 to the closed state has occurred.

With reference to FIG. 9, the following describes an example of control when the secondary air scarcity detection unit 93 detects fixation of the secondary air supply valve 83 to the closed state. When the secondary air supply valve 83 is in the closed state, secondary air is not supplied to the dedicated exhaust passage member 66. In other words, the secondary air including oxygen, which is supplied to the dedicated exhaust passage member 66, becomes insufficient. Therefore, at the detection timing, an air-fuel ratio estimated from the oxygen density detected by the oxygen sensor 74 is a value on the rich side as compared to the air-fuel ratio in the normal state. The air-fuel ratio estimated from the oxygen density detected by the oxygen sensor 74 at the detection timing is referred to as an air-fuel ratio A1. The secondary air scarcity detection unit 93 is configured to detect clogging of the dedicated secondary air supply passage member 87 downstream of the dedicated reed valve based on whether the air-fuel ratio A1 is a value on the rich side as compared to the air-fuel ratio X1. To be more specific, a secondary air scarcity detection value used for detecting fixation of the secondary air supply valve 83 to the closed state is referred to as an air-fuel ratio D2. The air-fuel ratio D2 is a value on the lean side as compared to the air-fuel ratio X0. The air-fuel ratio D2 is a value on the rich side as compared to the air-fuel ratio X1. The air-fuel ratio D2 is equal to the air-fuel ratio D1 or on the rich side as compared to the air-fuel ratio D1. The air-fuel ratio D2 may be a single value or a range of values. The air-fuel ratio D2 is stored in the ECU 90 in advance. The secondary air scarcity detection unit 93 is configured to detect the fixation of the secondary air supply valve 83 to the closed state based on whether the air-fuel ratio A1 is a value on the rich side as compared to the air-fuel ratio D2.

When the secondary air scarcity detection unit 93 detects the fixation of the secondary air supply valve 83 to the closed state, the notification command unit 97 sends, to the display 14, a signal for notifying the fixation of the secondary air supply valve 83 to the closed state. Based on the signal from the notification command unit 97, the display 14 displays a warning of the fixation of the secondary air supply valve 83 to the closed state.

The secondary air scarcity detection unit 93 is configured to be able to detect that the dedicated secondary air supply passage member 87 downstream of the dedicated reed valve is about to clog, based on a signal of the oxygen sensor 74. When the dedicated secondary air supply passage member 87 downstream of the downstream of the dedicated reed valve is about to clog, at least one of the three dedicated secondary air supply passage member 87 downstream of the dedicated reed valve is about to clog. To put it differently, the effective flow area of the at least one of the three dedicated secondary air supply passage member 87 downstream of the dedicated reed valves has been narrowed by deposits such as soot. In this regard, in this specification, the expression "the effective flow area has been narrowed" does not encompass a case where the effective flow area is zero. The secondary air scarcity detection unit 93 performs the detection when the secondary air supply control unit 91 controls the secondary air supply valve 83 to be in the open state. The detection timing is a timing at which the engine main body 20 is driven under the cold state and in a predetermined driving range. This detection timing is a timing at which the secondary air scarcity detection unit 93 determines whether the dedicated secondary air supply passage member 87 downstream of the dedicated reed valve is about to clog or not.

With reference to FIG. 9, the following describes an example of control when the secondary air scarcity detection unit 93 detects that the dedicated secondary air supply passage member 87 downstream of the dedicated reed valve is about to clog. When the dedicated secondary air supply passage member 87 downstream of the dedicated reed valve is about to clog, the flow rate of the secondary air supplied to the dedicated exhaust passage member 66 through the dedicated secondary air supply passage member 87 downstream of the dedicated reed valve becomes smaller than a predetermined flow rate. In other words, the secondary air including oxygen, which is supplied to the dedicated exhaust passage member 66, becomes insufficient. Therefore, at the detection timing, an air-fuel ratio estimated from the oxygen density detected by the oxygen sensor 74 is a value on the rich side as compared to the air-fuel ratio in the normal state. The air-fuel ratio estimated from the oxygen density detected by the oxygen sensor 74 at the detection timing is referred to as an air-fuel ratio A1. The secondary air scarcity detection unit 93 is configured to detect that the secondary air supplied to the dedicated exhaust passage member 66 is smaller than the predetermined flow rate, based on whether the air-fuel ratio A1 is on the rich side as compared to the air-fuel ratio X1. A secondary air scarcity detection value used for detecting that the dedicated secondary air supply passage member 87 downstream of the dedicated reed valve is about to clog is referred to as an air-fuel ratio D3. A required flow rate is referred to as a flow rate F1. A predetermined flow rate is referred to as a flow rate F2. A flow rate obtained by subtracting the predetermined flow rate F2 from the required flow rate F1 is referred to as a flow rate F3. Assume that secondary air equivalent to the flow rate F3 is removed from exhaust gas passing the oxygen sensor 74. The air-fuel ratio D3 is an air-fuel ratio corresponding to the oxygen density of the gas after the removal of the secondary air equivalent to the flow rate F3. The air-fuel ratio D3 is a value on the lean side as compared to the air-fuel ratio X0 and on the rich side as compared to the air-fuel ratio X1. The air-fuel ratio D3 is a value on the lean side as compared to the air-fuel ratio D1. The air-fuel ratio D3 may be a single value or a range of values. The air-fuel ratio D3 is stored in the ECU 90 in advance. The secondary air scarcity detection unit 93 is configured to detect that the dedicated secondary air supply passage member 87 downstream of the dedicated reed valve is about to clog, based on whether the air-fuel ratio A1 is a value on the rich side as compared to the air-fuel ratio D3. Furthermore, the secondary air scarcity detection unit 93 may distinguish a case where the dedicated secondary air supply passage member 87 downstream of the dedicated reed valve clogs from a case where the dedicated secondary air supply passage member 87 downstream of the dedicated reed valve is about to clog, based on whether the air-fuel ratio A1 is a value on the lean side as compared to air-fuel ratio D1.

When the secondary air scarcity detection unit 93 detects that the dedicated secondary air supply passage member 87 downstream of the dedicated reed valve is about to clog, the notification command unit 97 sends, to the display 14, a signal for notifying that the dedicated secondary air supply passage member 87 downstream of the dedicated reed valve is about to clog. Based on the signal from the notification command unit 97, the display 14 displays a warning that the dedicated secondary air supply passage member 87 downstream of the dedicated reed valve is about to clog.

### [Control of Secondary Air Supply Valve Opening Abnormality Detection Unit]

The secondary air supply valve opening abnormality detection unit 94 is configured to be able to detect fixation of the secondary air supply valve 83 to the open state, based on a signal of the oxygen sensor 74. The fixation of the secondary air supply valve 83 to the open state indicates an abnormal state in which the secondary air supply valve 83 is fixed to a full-open state or a partially-open state. In this specification, the partially-open state indicates a state in which the opening degree of a valve is larger than 0 and smaller than 100. The secondary air supply valve opening abnormality detection unit 94 is configured to detect fixation of the secondary air supply valve 83 to the open state when the dedicated reed valve 84 is in the normal state. When the dedicated reed valve 84 is in the abnormal state, the secondary air supply valve opening abnormality detection unit 94 does not always detect fixation of the secondary air supply valve 83 to the open state. The following will describe an example of control of the secondary air supply valve opening abnormality detection unit 94.

The secondary air supply valve opening abnormality detection unit 94 is configured to be able to detect fixation of the secondary air supply valve 83 to the open state when the secondary air supply control unit 91 controls the secondary air supply valve 83 to be in the closed state. In this case, the engine main body 20 is under the warm-up state and is driven in a driving range different from the secondary air supply driving range. The detection timing is a timing at which the engine main body 20 is driven under the warm-up state and in a predetermined driving range different from the secondary air supply driving range. The predetermined driving range is, for example, a predetermined load range and a predetermined rotation range which are set in advance. At this stage, the fuel supply amount control unit 92 performs feedback control based on a signal of the oxygen sensor 74. To be more specific, the fuel supply amount control unit 92 controls driving of the injector 55 and the fuel pump so that the air-fuel ratio estimated from the oxygen density of the exhaust gas detected by the oxygen sensor 74 becomes close to a predetermined air-fuel ratio.

When the secondary air supply valve 83 is in the normal state and the secondary air supply control unit 91 controls the secondary air supply valve 83 to be in the closed state, no secondary air is supplied to the dedicated exhaust passage member 66. In this regard, when the secondary air supply valve 83 is fixed to the open state, secondary air including oxygen is supplied to the dedicated exhaust passage member 66 even though the secondary air supply control unit 91 controls the secondary air supply valve 83 to be in the closed state. The correction value of the fuel supply amount, which is obtained based on the oxygen sensor 74, continues to vary without converging. On this account, the secondary air supply valve opening abnormality detection unit 94 detects the fixation of the secondary air supply valve 83 to the open state based on a variation of the correction amount.

When the secondary air supply valve opening abnormality detection unit 94 detects the fixation of the secondary air supply valve 83 to the open state, the notification command unit 97 sends, to the display 14, a signal for notifying the fixation of the secondary air supply valve 83 to the open state. Based on the signal from the notification command unit 97, the display 14 displays a warning of the fixation of the secondary air supply valve 83 to the open state.

### [Control of Dedicated Reed Valve Opening Abnormality Detection Unit]

The dedicated reed valve opening abnormality detection unit 95 is configured to be able to detect fixation of the dedicated reed valve 84 to the open state based on a signal of the downstream secondary air temperature sensor 76b. The fixation of the dedicated reed valve 84 to the open state indicates an abnormal state in which the dedicated reed valve 84 is fixed to a full-open state or a partially-open state. The dedicated reed valve opening abnormality detection unit 95 is configured to detect fixation of the dedicated reed valve 84 to the open state when the secondary air supply valve 83 is in the normal state. The dedicated reed valve opening abnormality detection unit 95 does not always detect the fixation of the dedicated reed valve 84 in the open state when the secondary air supply valve 83 is in the abnormal state. The following will describe an example of control of the dedicated reed valve opening abnormality detection unit 95.

The dedicated reed valve opening abnormality detection unit 95 is configured to be able to detect fixation of the dedicated reed valve 84 to the open state when the secondary air supply control unit 91 controls the secondary air supply valve 83 to be in the closed state. In this case, the engine main body 20 is under the warm-up state and is driven in a driving range different from the secondary air supply driving range. The detection timing is a timing at which the engine main body 20 is driven under the warm-up state and in a predetermined driving range different from the secondary air supply driving range. This detection timing is a timing at which the secondary air supply valve opening abnormality detection unit 94 diagnoses if fixation of the secondary air supply valve 83 to the open state has occurred.

When the dedicated reed valve 84 is in the normal state and the secondary air supply control unit 91 controls the secondary air supply valve 83 to be in the closed state, backward flow of exhaust gas from the dedicated exhaust passage member 66 to the dedicated secondary air supply passage member 87 downstream of the dedicated reed valve does not occur. However, when the dedicated reed valve 84 is fixed to the open state, backward flow of hot exhaust gas from the dedicated exhaust passage member 66 to the downstream secondary air supply passage member 88b occurs via the dedicated secondary air supply passage member 87 downstream of the dedicated reed valve. In this case, the temperature of the secondary air is equal to the atmospheric temperature. The temperature of the exhaust gas is higher than the atmospheric temperature. On this account, when the valve opening abnonnality occurs in the dedicated reed valve 84, the temperature of the downstream secondary air supply passage member 88b detected by the downstream secondary air temperature sensor 76b is high as compared to cases where the dedicated reed valve 84 is in the normal state. The dedicated reed valve opening abnormality detection unit 95 therefore detects fixation of the dedicated reed valve 84 to the open state based on the temperature in the downstream secondary air supply passage member 88b detected by the downstream secondary air temperature sensor 76b.

To be more specific, the temperature in the downstream secondary air supply passage member 88b detected by the downstream secondary air temperature sensor 76b is referred to as a temperature RT. As an index for detecting fixation of the dedicated reed valve 84 to the open state, the dedicated reed valve opening abnormality detection unit 95 uses a dedicated reed valve opening abnormality detection value. The dedicated reed valve opening abnormality detection value is referred to as a temperature RT1. The temperature RT1 is the temperature in the downstream secondary air supply passage member 88b detected by the downstream secondary air temperature sensor 76b in the following case. The case is a detection timing in the normal state. In this connection, a signal from the downstream secondary air temperature sensor 76b varies in accordance with periodical exhaust of the exhaust gas. For example, the temperature of gas in the downstream secondary air supply passage member 88b, which is detected by the downstream secondary air temperature sensor 76b, is an average value of the temperature of the gas in the downstream secondary air supply passage member 88b, which is detected by the downstream secondary air temperature sensor 76b at the detection timing. The temperature RT1 is stored in the ECU 90 in advance. The dedicated reed valve opening abnormality detection unit 95 detects the fixation of the dedicated reed valve 84 to the open state when the temperature RT is higher than the temperature RT1.

When the dedicated reed valve opening abnormality detection unit 95 detects the fixation of the dedicated reed valve 84 to the open state, the notification command unit 97 sends, to the display 14, a signal for notifying the fixation of the dedicated reed valve 84 to the open state. Based on this signal, the display 14 displays a warning of fixation of the dedicated reed valve 84 to the open state.

The motorcycle 1 of the present embodiment has the following characteristics.

The ECU 90 performs control as below, when the engine main body 20 is under the cold state, or when the engine main body 20 is under the warm-up state and is driven in the secondary air supply driving range. The secondary air supply control unit 91 is configured to control the secondary air supply valve 83 to be in the open state. In the normal state, the fuel supply amount control unit 92 controls driving of the injector 55 and the fuel pump so that the first and second conditions are satisfied among the above-described five conditions. As a result, the air-fuel ratio X1 is lean as compared to the stoichiometric air-fuel ratio S. The air-fuel ratio X1 is an air-fuel ratio estimated from the oxygen density of the exhaust gas detected by the oxygen sensor 74, in the normal state. In other words, in the normal state, the air-fuel ratio estimated from the oxygen density of the exhaust gas flowing into the catalyst 65 is lean as compared to the stoichiometric air-fuel ratio S. Furthermore, in the fuel supply amount control unit 92, the air-fuel ratio X0 is rich as compared to the air-fuel ratio X1. The air-fuel ratio X0 is an air-fuel ratio estimated from the oxygen density of gas obtained by removing the secondary air supplied to the dedicated exhaust passage member 66 from the exhaust gas passing the oxygen sensor 74, in the normal state. As such, when the secondary air supplied to the dedicated exhaust passage member 66 is insufficient, the air-fuel ratio estimated from the oxygen density of the exhaust gas flowing into the catalyst 65 is rich as compared to the air-fuel ratio X1. The case where the secondary air supplied to the dedicated exhaust passage member 66 is insufficient is, for example, a case where the dedicated secondary air supply passage 85 clogs. On this account, the stoichiometric air-fuel ratio S is sandwiched between the air-fuel ratio X1 and the air-fuel ratio X0. That is to say, there is a difference W between the air-fuel ratio X1 and the air-fuel ratio X0. The difference W is calculated by subtracting the air-fuel ratio X0 from the air-fuel ratio X1. Furthermore, the secondary air scarcity detection unit 93 is configured to detect clogging of the dedicated secondary air supply passage member 87 downstream of the dedicated reed valve, based on a signal of the oxygen sensor 74. When the dedicated secondary air supply passage member 87 downstream of the dedicated reed valve clogs, secondary air including oxygen is not supplied to the dedicated exhaust passage member 66. As compared to the normal state, the air-fuel ratio estimated from the oxygen density of the exhaust gas detected by the oxygen sensor 74 is on the rich side. In other words, the air-fuel ratio estimated from the oxygen density of the exhaust gas detected by the oxygen sensor 74 is equal to the air-fuel ratio X0. The fuel supply amount control unit 92 is therefore able to detect the clogging of the dedicated secondary air supply passage member 87 downstream of the dedicated reed valve, based on a variation of the air-fuel ratio estimated from the oxygen density of the exhaust gas detected by the oxygen sensor 74. Furthermore, the ECU 90 is further able to similarly detect that the dedicated reed valve 84 is fixed to the closed state, that the secondary air supply valve 83 is fixed to the closed state, or that the dedicated secondary air supply passage member 87 downstream of the dedicated reed valve is about to clog. The detected information is recorded on the ECU 90. Based on the detected information, it is possible to prompt a rider, etc. to perform maintenance of the dedicated secondary air supply passage 85. The clogging of the dedicated secondary air supply passage member 87 downstream of the dedicated reed valve, the fixation of the dedicated reed valve 84 to the closed state, the fixation of the secondary air supply valve 83 to the closed state, or the dedicated secondary air supply passage member 87 downstream of the dedicated reed valve being about to clog is resolved by performing maintenance of the inside of the dedicated secondary air supply passage 85. Consequently, the insufficiency in the secondary air supplied to the dedicated exhaust passage member 66 is resolved. The purification performance of purifying the exhaust gas is therefore recovered. In this way, it is possible to improve both the engine performance of the engine unit 11 including the dedicated reed valve 84 and the dedicated secondary air supply passage member 87 downstream of the dedicated reed valve and the purification performance of purifying the exhaust gas.

The ECU 90 performs control as below, when the engine main body 20 is under the cold state, or when the engine main body 20 is under the warm-up state and is driven in the secondary air supply driving range. In the nonnal state, the fuel supply amount control unit 92 performs control to satisfy the third to fifth conditions among the above-described five conditions. During a period from the nonnal state to the clogging of at least a part of the dedicated secondary air supply passage member 87 downstream of the dedicated reed valve, the oxygen density of the exhaust gas detected by the oxygen sensor 74 varies further. The fuel supply amount control unit 92 is therefore able to easily detect the clogging of the dedicated secondary air supply passage member 87 downstream of the dedicated reed valve based on a signal of the oxygen sensor 74. Furthermore, the ECU 90 is further able to similarly detect that the dedicated reed valve 84 is fixed to the closed state, that the secondary air supply valve 83 is fixed to the closed state, or that the dedicated secondary air supply passage member 87 downstream of the dedicated reed valve is about to clog.

The ECU 90 performs control as follows. The secondary air supply valve opening abnormality detection unit 94 is configured to detect fixation of the secondary air supply valve 83 to the open state, based on a signal of the oxygen sensor 74. In this regard, when the secondary air supply valve 83 is fixed to the open state, secondary air is supplied to the dedicated exhaust passage member 66 even when the secondary air supply valve 83 is controlled to be in the closed state. When the secondary air supply valve 83 is fixed to the open state, there is a following change as compared to the secondary air supply valve 83 in the normal state. The following change occurs when the secondary air supply valve 83 is controlled to be in the closed state. The correction value of the fuel supply amount, which is obtained based on the oxygen sensor 74, continues to vary without converging. The secondary air supply valve opening abnormality detection unit 94 is therefore able to detect fixation of the secondary air supply valve 83 to the open state, based on a signal of the oxygen sensor 74.

The ECU 90 performs control as follows. The dedicated reed valve opening abnormality detection unit 95 is configured to detect fixation of the dedicated reed valve 84 to the open state based on a signal of the downstream secondary air temperature sensor 76b. In this regard, if the dedicated reed valve 84 is fixed to the open state, backward flow of hot exhaust gas from the dedicated exhaust passage member 66 to the downstream secondary air supply passage member 88b occurs via the dedicated secondary air supply passage member 87 downstream of the dedicated reed valve, even if the secondary air supply valve 83 is controlled to be in the closed state. On this account, when the dedicated reed valve 84 is fixed to the open state, there is a following change as compared to the dedicated reed valve 84 in the normal state. The following change occurs when the secondary air supply valve 83 is controlled to be in the closed state. The temperature of the gas in the downstream secondary air supply passage member 88b detected by the downstream secondary air temperature sensor 76b is high. The dedicated reed valve opening abnormality detection unit 95 is therefore able to detect fixation of the dedicated reed valve 84 to the open state based on a signal of the downstream secondary air temperature sensor 76b.

The ECU 90 performs control as follows. The detection timing at which the detection unit 96 diagnoses whether the clogging of the dedicated secondary air supply passage member 87 downstream of the dedicated reed valve has occurred based on a signal of the gas state detection device 70 is as follows. The timing is a timing at which the secondary air supply control unit 91 controls the secondary air supply valve 83 to be in the open state and the fuel supply amount control unit 92 causes the engine main body 20 to be driven in a predetermined driving range. When the fuel supply amount control unit 92 causes the engine main body 20 to be driven under the cold state, the controller causes the secondary air supply control unit 91 to control the secondary air supply valve 83 to be in the open state, so as to supply secondary air to the dedicated exhaust passage member 66. In other words, the secondary air supply control unit 91 typically controls the secondary air supply valve 83 to be in the open state when the fuel supply amount control unit 92 causes the engine main body 20 to be driven at least under the cold state and in the predetermined driving range. The secondary air supply valve opening abnormality detection unit 94 is typically able to detect the clogging of the dedicated secondary air supply passage member 87 downstream of the dedicated reed valve by using a signal of the oxygen sensor 74, when the secondary air supply control unit 91 supplies secondary air to the dedicated exhaust passage member 66.

### (Modification of Embodiment)

In the motorcycle 1 of the embodiment above, the gas state detection device 70 includes the oxygen sensor 74 and the downstream secondary air temperature sensor 76b. Alternatively, the gas state detection device 70 may further include at least one of below-described sensors 75, 76b, 77a, 77b, or 78. The secondary air scarcity detection unit 93 is configured to be able to detect clogging of the dedicated secondary air supply passage member 87 downstream of the dedicated reed valve, based on a signal of at least one of the sensors 74, 75, 76a, 76b, 77a, 77b, or 78. Alternatively, the secondary air scarcity detection unit 93 is configured to be able to detect fixation of the dedicated reed valve 84 to the closed state, based on a signal of at least one of the sensors 74, 75, 76a, 76b, 77a, 77b, and 78. The secondary air scarcity detection unit 93 may detect fixation of the secondary air supply valve 83 to the closed state, based on a signal of at least one of the sensors 74, 75, 76a, 76b, 77a, 77b, or 78. The secondary air scarcity detection unit 93 may detect that the dedicated secondary air supply passage member 87 downstream of the dedicated reed valve is about to clog, based on a signal of at least one of the sensors 74, 75, 76a, 76b, 77a, 77b, or 78. The secondary air supply valve opening abnormality detection unit 94 may detect fixation of the secondary air supply valve 83 to the open state, based on a signal of at least one of the sensors 74, 76a, 76b, 77a, 77b, or 78. The dedicated reed valve opening abnormality detection unit 95 may detect fixation of the dedicated reed valve 84 to the open state, based on a signal of at least one of the sensors 76a, 76b, or 77b. The following describes a motorcycle 1 of a modification of the embodiment above.

In the motorcycle 1 of the modification of the embodiment, the gas state detection device 70 may include a catalyst temperature sensor 75 as shown in FIG. 6 and FIG. 7. The catalyst temperature sensor 75 is provided in the downstream exhaust passage member 64. As shown in FIG. 4, the catalyst temperature sensor 75 is provided at the tapered portion 64c. The catalyst temperature sensor 75 may be provided in the silencer 64b. The catalyst temperature sensor 75 is configured to detect the temperature of the exhaust gas exhausted from the catalyst 65 as the temperature of the catalyst. The catalyst temperature sensor 75 may be provided in the catalyst exhaust passage member 68. In this case, the catalyst temperature sensor 75 may directly detect the temperature of the catalyst 65. The temperature of the gas in the downstream exhaust passage member 64 is an index indicating the state of gas in passage members other than the dedicated secondary air supply passage member 87 downstream of the dedicated reed valve. As shown in FIG. 8, the catalyst temperature sensor 75 is connected to the ECU 90.

As shown in FIG. 6 and FIG. 7, the gas state detection device 70 may include an upstream secondary air temperature sensor 76a. The upstream secondary air temperature sensor 76a is provided in the upstream secondary air supply passage member 88a. The upstream secondary air temperature sensor 76a is provided downstream of the air cleaner 51 and upstream of the secondary air supply valve 83. The upstream secondary air temperature sensor 76a is configured to detect the temperature of the gas in the upstream secondary air supply passage member 88a. The temperature of the gas in the upstream secondary air supply passage member 88a is one of indexes indicating the state of the gas in the passage members other than the dedicated secondary air supply passage member 87 downstream of the dedicated reed valve. As shown in FIG. 8, the upstream secondary air temperature sensor 76a is connected to the ECU 90.

As shown in FIG. 6 and FIG. 7, the gas state detection device 70 may include an upstream pressure sensor 77a. The upstream pressure sensor 77a is provided in the upstream secondary air supply passage member 88a. The upstream pressure sensor 77a is provided downstream of the air cleaner 51 and upstream of the secondary air supply valve 83. The upstream pressure sensor 77a is configured to detect the pressure of the gas in the upstream secondary air supply passage member 88a. The pressure of the gas in the upstream secondary air supply passage member 88a is one of indexes indicating the state of the gas in the passage members other than the dedicated secondary air supply passage member 87 downstream of the dedicated reed valve. The gas state detection device 70 may include three downstream pressure sensors 77b. The three downstream pressure sensors 77b are provided in the three downstream secondary air supply passage members 88b, respectively. In other words, the downstream pressure sensor 77b is provided downstream of the secondary air supply valve 83 and upstream of the dedicated reed valve 84. The downstream pressure sensor 77b is configured to detect the pressure of the gas in the downstream secondary air supply passage member 88b. The pressure of the gas in the downstream secondary air supply passage member 88b is one of indexes indicating the state of the gas in the passage members other than the dedicated secondary air supply passage member 87 downstream of the dedicated reed valve. As shown in FIG. 8, the upstream pressure sensor 77a and the downstream pressure sensor 77b are connected to the ECU 90.

As shown in FIG. 6 and FIG. 7, the gas state detection device 70 may include a flow rate sensor 78. The flow rate sensor 78 is provided downstream of the air cleaner 51 and upstream of the secondary air supply valve 83. The flow rate sensor 78 is provided in the upstream secondary air supply passage member 88a. The flow rate sensor 78 is configured to detect the flow rate of the gas in the upstream secondary air supply passage member 88a. In other words, the flow rate sensor 78 is configured to detect the flow rate of the gas passing the inside of the upstream secondary air supply passage member 88a. The flow rate of the gas in the upstream secondary air supply passage member 88a is one of indexes indicating the state of the gas in the passage members other than the dedicated secondary air supply passage member 87 downstream of the dedicated reed valve. The flow rate sensor 78 may be provided in each downstream secondary air supply passage member 88b. In such a case, the flow rate sensor 78 detects the flow rate of the gas in each downstream secondary air supply passage member 88b. As shown in FIG. 8, the flow rate sensor 78 is connected to the ECU 90. The flow rate sensor 78 is, for example, a Karman vortex flow rate sensor or a thermal flow rate sensor.

### [Modifications of Control of Secondary Air Scarcity Detection Unit]

The following describes a modification where the secondary air scarcity detection unit 93 is able to detect clogging of the dedicated secondary air supply passage member 87 downstream of the dedicated reed valve. The following description is applicable to a case where the secondary air scarcity detection unit 93 detects fixation of the dedicated reed valve 84 to the closed state.

According to one modification, the secondary air scarcity detection unit 93 is configured to be able to detect clogging of the dedicated secondary air supply passage member 87 downstream of the dedicated reed valve, based on a signal of the catalyst temperature sensor 75. When the dedicated secondary air supply passage member 87 downstream of the dedicated reed valve clogs, an amount of secondary air including oxygen supplied to the dedicated exhaust passage member 66 becomes small or zero. In other words, the secondary air including oxygen, which is supplied to the dedicated exhaust passage member 66, becomes insufficient. When the secondary air including oxygen is insufficient in the dedicated exhaust passage member 66, unburned gas in the exhaust gas exhausted to the dedicated exhaust passage 69 is not fully burned. The temperature of the catalyst 65 is therefore low as compared to the normal state. The secondary air scarcity detection unit 93 detects the clogging of the dedicated secondary air supply passage member 87 downstream of the dedicated reed valve when the temperature of the exhaust gas detected by the catalyst temperature sensor 75 is equal to or lower than a predetermined value stored in advance. The predetermined value is set based on an average value of the temperature of the exhaust gas detected in advance by the catalyst temperature sensor 75 at the detection timing in the normal state.

According to another modification, the secondary air scarcity detection unit 93 is configured to be able to detect clogging of the dedicated secondary air supply passage member 87 downstream of the dedicated reed valve, based on a signal of the downstream secondary air temperature sensor 76b. In the secondary air supplier 80, secondary air is supplied to the dedicated exhaust passage member 66 from the dedicated secondary air supply passage member 87 downstream of the dedicated reed valve. This makes it possible to burn a large amount of unburned substances in the exhaust gas, before reaching the catalyst 65. Pulsation of the pressure is significant in the dedicated exhaust passage member 66. On this account, backward flow of hot exhaust gas from the dedicated exhaust passage member 66 to the dedicated secondary air supply passage member 87 downstream of the dedicated reed valve tends to occur. Furthermore, when the engine main body 20 is under the cold state, the temperatures of components of the engine main body 20 are basically low. For this reason, the temperatures of the components of the engine main body 20 significantly vary in the normal state. Meanwhile, in a state in which the dedicated secondary air supply passage member 87 downstream of the dedicated reed valve clogs, variations of the temperatures of the components of the engine main body 20 are restrained. Furthermore, when the dedicated secondary air supply passage member 87 downstream of the dedicated reed valve clogs, the dedicated secondary air supply passage member 87 downstream of the dedicated reed valve is disconnected from the downstream secondary air supply passage member 88b. For this reason, the backward flow of the hot exhaust gas in the dedicated exhaust passage member 66 to the downstream secondary air supply passage member 88b via the dedicated secondary air supply passage member 87 downstream of the dedicated reed valve does not occur on account of exhaust pulse in the dedicated exhaust passage member 66. For this reason, as compared to the normal state, the temperature of the gas in the downstream secondary air supply passage member 88b detected by the downstream secondary air temperature sensor 76b is low. The secondary air scarcity detection unit 93 detects the clogging of the dedicated secondary air supply passage member 87 downstream of the dedicated reed valve when the temperature of the gas in the downstream secondary air supply passage member 88b detected by the secondary air temperature sensor 76 is lower than a predetermined value stored in advance. This predetermined value is set based on the temperature in the downstream secondary air supply passage member 88b detected by the downstream secondary air temperature sensor 76b in advance at the detection timing in the normal state.

According to another modification, the secondary air scarcity detection unit 93 is configured to be able to detect clogging of the dedicated secondary air supply passage member 87 downstream of the dedicated reed valve, based on a signal of the upstream pressure sensor 77a or the downstream pressure sensor 77b. Pulsation of the pressure is significant in the dedicated exhaust passage member 66. The pulsation tends to reach the dedicated secondary air supply passage member 87 downstream of the dedicated reed valve from the dedicated exhaust passage member 66. Furthermore, when the engine main body 20 is under the cold state, the intake air amount of the engine main body 20 is increased by, for example, increasing the throttle opening degree as compared to a case where the engine main body 20 is under the warm-up state. The amount of the exhaust gas exhausted to the dedicated exhaust passage member 66 therefore increases. On this account, when the engine main body 20 is under the cold state, the pulsation is significant as compared to a case where the engine main body 20 is under the warm-up state. Therefore, when the engine main body 20 is under the cold state, the pulsation tends to reach the dedicated secondary air supply passage member 87 downstream of the dedicated reed valve from the dedicated exhaust passage member 66 as compared to a case where the engine main body 20 is under the warm-up state. In the normal state, the pressure in the dedicated secondary air supply passage member 87 downstream of the dedicated reed valve significantly varies. Meanwhile, when the dedicated secondary air supply passage member 87 downstream of the dedicated reed valve clogs, the pressure in the dedicated secondary air supply passage member 87 downstream of the dedicated reed valve does not greatly vary. The range of variation of the pressure of the gas in the upstream secondary air supply passage member 88a detected by the upstream pressure sensor 77a becomes equal to or smaller than a predetermined value stored in advance. Furthermore, the range of variation of the pressure of the gas in the downstream secondary air supply passage member 88b detected by the downstream pressure sensor 77b becomes equal to or smaller than a predetermined value stored in advance. The secondary air scarcity detection unit 93 detects the clogging of the dedicated secondary air supply passage member 87 downstream of the dedicated reed valve when the range of variation of the pressure of the gas in the upstream secondary air supply passage member 88a detected by the upstream pressure sensor 77a is equal to or smaller than a predetermined value stored in advance. The secondary air scarcity detection unit 93 detects the clogging of the dedicated secondary air supply passage member 87 downstream of the dedicated reed valve when the range of variation of the pressure of the gas in the downstream secondary air supply passage member 88b detected by the downstream pressure sensor 77b is equal to or smaller than a predetermined value stored in advance. This predetermined value is set based on the range of variation of the pressure of the gas in the upstream secondary air supply passage member 88a detected by the upstream pressure sensor 77a in advance at the detection timing in the normal state. The predetermined value is set based on the range of variation of the pressure of the gas in the downstream secondary air supply passage member 88b detected by the downstream pressure sensor 77b in advance at the detection timing in the normal state.

According to another modification, the secondary air scarcity detection unit 93 is configured to be able to detect clogging of the dedicated secondary air supply passage member 87 downstream of the dedicated reed valve, based on a signal of the flow rate sensor 78. Pulsation of the pressure is significant in the dedicated exhaust passage member 66. It is therefore possible to secure a sufficient flow rate of secondary air supplied to the dedicated exhaust passage member 66 from the dedicated secondary air supply passage member 87 downstream of the dedicated reed valve, by utilizing pressure pulsation in the dedicated exhaust passage member 66. Furthermore, when the engine main body 20 is under the cold state, the intake air amount of the engine main body 20 is increased by, for example, increasing the throttle opening degree as compared to a case where the engine main body 20 is under the warm-up state. On this account, an amount of the exhaust gas exhausted to the dedicated exhaust passage member 66 increases. On this account, when the engine main body 20 is under the cold state, the pulsation is significant as compared to a case where the engine main body 20 is under the warm-up state. Therefore, when the engine main body 20 is under the cold state, the flow rate of the secondary air supplied to the dedicated exhaust passage member 66 from the dedicated secondary air supply passage member 87 downstream of the dedicated reed valve is further secured as compared to a case where the engine main body 20 is under the warm-up state. In the normal state, the flow rate of the secondary air passing the secondary air supply passage member 86 significantly varies. Meanwhile, when the dedicated secondary air supply 87 downstream of the dedicated reed valve clogs, the flow rate of the secondary air in the dedicated secondary air supply passage member 87 downstream of the dedicated reed valve is zero. Furthermore, an amount of the secondary air passing the upstream secondary air supply passage member 88a and the downstream secondary air supply passage member 88b becomes small or zero. On this account, as compared to the normal state, the flow rate of the gas in the upstream secondary air supply passage member 88a or the downstream secondary air supply passage member 88b becomes low or zero. In other words, the secondary air supplied to the dedicated exhaust passage member 66 becomes insufficient. To put it differently, the flow rate of the gas in the upstream secondary air supply passage member 88a detected by the flow rate sensor 78 becomes equal to or lower than a predetermined value which is stored in advance. The secondary air scarcity detection unit 93 detects the clogging of the dedicated secondary air supply passage member 87 downstream of the dedicated reed valve when the flow rate of the gas in the upstream secondary air supply passage member 88a detected by the flow rate sensor 78 is equal to or lower than a predetermined value stored in advance. This predetermined value is set based on the flow rate of the gas in the upstream secondary air supply passage member 88a detected by the flow rate sensor 78 in advance at the detection timing in the normal state.

The secondary air scarcity detection unit 93 may detect the clogging of the dedicated secondary air supply passage member 87 downstream of the dedicated reed valve based on a signal of at least one of the oxygen sensor 74, the catalyst temperature sensor 75, the downstream secondary air temperature sensor 76b, or the flow rate sensor 78. Because the secondary air scarcity detection unit 93 uses signals of two or more sensors, the clogging of the dedicated secondary air supply passage member 87 downstream of the dedicated reed valve is further certainly detectable. This is applicable to a case where the secondary air scarcity detection unit 93 detects fixation of the dedicated reed valve 84 to the closed state.

The following will describe a modification in which the secondary air scarcity detection unit 93 detects fixation of the secondary air supply valve 83 to the closed state. According to one modification, the secondary air scarcity detection unit 93 is configured to be able to detect fixation of the secondary air supply valve 83 to the closed state based on a signal of the catalyst temperature sensor 75. When the secondary air supply valve 83 is fixed to the closed state, secondary air including oxygen is not supplied to the dedicated exhaust passage member 66. When the secondary air including oxygen is not supplied to the dedicated exhaust passage member 66, unburned gas in the exhaust gas exhausted to the dedicated exhaust passage 69 is not fully burned. The temperature of the catalyst 65 is therefore low as compared to the normal state. The secondary air scarcity detection unit 93 detects fixation of the secondary air supply valve 83 to the closed state when the temperature of the exhaust gas detected by the catalyst temperature sensor 75 is equal to or lower than a predetermined value stored in advance. The predetermined value is, for example, set based on an average value of the temperature of the exhaust gas detected by the catalyst temperature sensor 75 in advance at the detection timing in the normal state.

According to another modification, the secondary air scarcity detection unit 93 is configured to be able to detect fixation of the secondary air supply valve 83 to the closed state based on a signal of the downstream secondary air temperature sensor 76b. When the secondary air supply valve 83 is fixed to the closed state, the upstream secondary air supply passage member 88a is disconnected from the downstream secondary air supply passage member 88b. Cold secondary air does not therefore pass the downstream secondary air supply passage member 88b. For this reason, as compared to the normal state, the temperature of the gas in the downstream secondary air supply passage member 88b detected by the downstream secondary air temperature sensor 76b is high. The secondary air scarcity detection unit 93 detects the fixation of the secondary air supply valve 83 to the closed state when the temperature of the gas in the downstream secondary air supply passage member 88b detected by the secondary air temperature sensor 76 is higher than a predetermined value stored in advance. This predetermined value is, for example, set based on the temperature of the gas in the downstream secondary air supply passage member 88b detected by the downstream secondary air temperature sensor 76b in advance at the detection timing in the normal state.

According to another modification, the secondary air scarcity detection unit 93 is configured to be able to detect fixation of the secondary air supply valve 83 to the closed state based on a signal of the upstream pressure sensor 77a. When the secondary air supply valve 83 is fixed to the closed state, the upstream secondary air supply passage member 88a is disconnected from the downstream secondary air supply passage member 88b. For this reason, the upstream secondary air supply passage member 88a is not changed by the exhaust pulse in the dedicated exhaust passage member 66. For this reason, as compared to the normal state, the pressure of the gas in the upstream secondary air supply passage member 88a detected by the upstream pressure sensor 77a is high. The secondary air scarcity detection unit 93 detects the fixation of the secondary air supply valve 83 to the closed state when the pressure of the gas in the upstream secondary air supply passage member 88a detected by the upstream pressure sensor 77a is equal to or higher than a predetermined value stored in advance. This predetermined value is, for example, set based on the pressure of the gas in the upstream secondary air supply passage member 88a detected by the upstream pressure sensor 77a in advance at the detection timing in the normal state.

According to another modification, the secondary air scarcity detection unit 93 may detect fixation of the secondary air supply valve 83 to the closed state based on a signal of the downstream pressure sensor 77b. When the secondary air supply valve 83 is fixed to the closed state, the upstream secondary air supply passage member 88a is disconnected from the downstream secondary air supply passage member 88b. For this reason, backward flow of the exhaust gas in the dedicated exhaust passage member 66 to the downstream secondary air supply passage member 88b via the dedicated secondary air supply passage member 87 downstream of the dedicated reed valve occurs on account of exhaust pulse in the dedicated exhaust passage member 66. For this reason, as compared to the normal state, the pressure of the gas in the downstream secondary air supply passage member 88b detected by the downstream secondary air temperature sensor 76b is high. The secondary air scarcity detection unit 93 detects the fixation of the secondary air supply valve 83 to the closed state when the pressure of the gas in the downstream secondary air supply passage member 88b detected by the downstream pressure sensor 77b is equal to or higher than a predetermined value stored in advance. The predetermined value is, for example, set based on the pressure of the gas in the downstream secondary air supply passage member 88b detected by the downstream pressure sensor 77b in advance at the detection timing in the normal state.

According to another modification, the secondary air scarcity detection unit 93 may detect fixation of the secondary air supply valve 83 to the closed state based on a signal of the flow rate sensor 78. When the secondary air supply valve 83 is fixed to the closed state, the upstream secondary air supply passage member 88a is disconnected from the downstream secondary air supply passage member 88b. In other words, the secondary air does not pass the upstream secondary air supply passage member 88a. The flow rate of the gas passing the upstream secondary air supply passage member 88a therefore becomes zero. To put it differently, the flow rate of the gas in the upstream secondary air supply passage member 88a detected by the flow rate sensor 78 becomes equal to or lower than a predetermined value which is stored in advance. The secondary air scarcity detection unit 93 detects the fixation of the secondary air supply valve 83 to the closed state when the flow rate of the gas in the upstream secondary air supply passage member 88a detected by the flow rate sensor 78 is equal to or lower than a predetermined value stored in advance. This predetermined value is, for example, set based on the flow rate of the gas in the upstream secondary air supply passage member 88a detected by the flow rate sensor 78 in advance at the detection timing in the normal state.

The secondary air scarcity detection unit 93 may detect fixation of the secondary air supply valve 83 to the closed state based on a signal of at least one of the oxygen sensor 74, the catalyst temperature sensor 75, the downstream secondary air temperature sensor 76b, the upstream pressure sensor 77a, the downstream pressure sensor 77b, or the flow rate sensor 78. Because the secondary air scarcity detection unit 93 uses signals of two or more sensors, the fixation of the secondary air supply valve 83 to the closed state is further certainly detectable.

The following will describe a modification in which the secondary air scarcity detection unit 93 detects that the dedicated secondary air supply passage member 87 downstream of the dedicated reed valve is about to clog. According to one modification, the secondary air scarcity detection unit 93 may detect that the dedicated secondary air supply passage member 87 downstream of the dedicated reed valve is about to clog, based on a signal of the catalyst temperature sensor 75. When the dedicated secondary air supply passage member 87 downstream of the dedicated reed valve is about to clog, the flow rate of the secondary air including oxygen, which is supplied to the dedicated exhaust passage member 66 through the dedicated secondary air supply passage member 87 downstream of the dedicated reed valve, becomes smaller than a predetermined flow rate. In other words, the secondary air including oxygen, which is supplied to the dedicated exhaust passage member 66, becomes insufficient. When the secondary air including oxygen supplied to the dedicated exhaust passage member 66 is insufficient, unburned gas in the exhaust gas exhausted to the dedicated exhaust passage 69 is not fully burned. The temperature of the catalyst 65 is therefore low as compared to the normal state. When the dedicated secondary air supply passage member 87 downstream of the dedicated reed valve is about to clog, the temperature of the exhaust gas detected by the catalyst temperature sensor 75 is lower than a predetermined value stored in advance. The secondary air scarcity detection unit 93 detects that the dedicated secondary air supply passage member 87 downstream of the dedicated reed valve is about to clog, when the temperature of the exhaust gas detected by the catalyst temperature sensor 75 is lower than a predetermined value stored in advance. The predetermined value is set based on an average value of the temperature of the exhaust gas detected by the catalyst temperature sensor 75 detected in advance, at the detection timing in the normal state.

According to another modification, the secondary air scarcity detection unit 93 may detect that the dedicated secondary air supply passage member 87 downstream of the dedicated reed valve is about to clog, based on a signal of downstream secondary air temperature sensor 76b. When the dedicated secondary air supply passage member 87 downstream of the dedicated reed valve is about to clog, the effective flow area of the dedicated secondary air supply passage member 87 downstream of the dedicated reed valve is narrowed. For this reason, backward flow of the exhaust gas in the dedicated exhaust passage member 66 to the downstream secondary air supply passage member 88b via the dedicated secondary air supply passage member 87 downstream of the dedicated reed valve on account of exhaust pulse in the dedicated exhaust passage member 66 is restrained. For this reason, as compared to the normal state, the temperature of the gas in the downstream secondary air supply passage member 88b detected by the downstream secondary air temperature sensor 76b is low. The secondary air scarcity detection unit 93 detects that the dedicated secondary air supply passage member 87 downstream of the dedicated reed valve is about to clog when the temperature of the gas in the downstream secondary air supply passage member 88b detected by the downstream secondary air temperature sensor 76b is lower than a predetermined value stored in advance. This predetermined value is, for example, set based on the temperature of the gas in the downstream secondary air supply passage member 88b detected by the downstream secondary air temperature sensor 76b in advance at the detection timing in the normal state.

According to another modification, the secondary air scarcity detection unit 93 may detect that the dedicated secondary air supply passage member 87 downstream of the dedicated reed valve is about to clog, based on a signal of the flow rate sensor 78. When the dedicated secondary air supply passage member 87 downstream of the dedicated reed valve is about to clog, the effective flow area of the dedicated secondary air supply passage member 87 downstream of the dedicated reed valve is narrowed. In short, an amount of the secondary air passing the upstream secondary air supply passage member 88a becomes small. On this account, as compared to the normal state, the flow rate of the gas passing the upstream secondary air supply passage member 88a is low. The secondary air scarcity detection unit 93 detects that the dedicated secondary air supply passage member 87 downstream of the dedicated reed valve is about to clog when the flow rate of the gas in the dedicated secondary air supply passage member 87 downstream of the dedicated reed valve detected by the flow rate sensor 78 is equal to or lower than a predetermined value stored in advance. This predetermined value is, for example, set based on the flow rate of the gas in the upstream secondary air supply passage member 88a detected by the flow rate sensor 78 in advance at the detection timing in the normal state.

The secondary air scarcity detection unit 93 may detect that the dedicated secondary air supply passage member 87 downstream of the dedicated reed valve is about to clog based on a signal of at least one of the oxygen sensor 74, the catalyst temperature sensor 75, the downstream secondary air temperature sensor 76b, or the flow rate sensor 78. Because the secondary air scarcity detection unit 93 uses signals of two or more sensors, it is possible to further certainly detect that the dedicated secondary air supply passage member 87 downstream of the dedicated reed valve is about to clog.

### [Modifications of Control of Secondary Air Supply Valve Opening Abnormality Detection Unit]

In the embodiment above, the secondary air supply valve opening abnormality detection unit 94 is configured to detect fixation of the secondary air supply valve 83 to the open state, based on a signal of the oxygen sensor 74. Alternatively, the secondary air supply valve opening abnormality detection unit 94 may detect fixation of the secondary air supply valve 83 to the open state by using a signal of the above-described sensors. According to one modification, the secondary air supply valve opening abnormality detection unit 94 may detect fixation of the secondary air supply valve 83 to the open state based on a signal of the upstream secondary air temperature sensor 76a. When the secondary air supply valve 83 is fixed to the open state, the secondary air supply valve 83 is not switched to the closed state even if the secondary air supply control unit 91 controls the secondary air supply valve 83 to be in the closed state. For this reason, cold secondary air is supplied to the upstream secondary air supply passage member 88a on account of the exhaust pulse in the dedicated exhaust passage member 66. For this reason, as compared to the normal state, the temperature of the gas in the upstream secondary air supply passage member 88a detected by the upstream secondary air temperature sensor 76a is low. The secondary air supply valve opening abnormality detection unit 94 is configured to detect fixation of the secondary air supply valve 83 to the open state when a temperature detected by the upstream secondary air temperature sensor 76a is equal to or lower than a predetermined value. The predetermined value is, for example, set based on the temperature of the gas detected by each secondary air temperature sensor 76 in advance at the detection timing in the normal state.

According to another modification, the secondary air supply valve opening abnormality detection unit 94 may detect fixation of the secondary air supply valve 83 to the open state based on a signal of the downstream secondary air temperature sensor 76b. When the secondary air supply valve 83 is fixed to the open state, the secondary air supply valve 83 is not switched to the closed state even if the secondary air supply control unit 91 controls the secondary air supply valve 83 to be in the closed state. For this reason, cold secondary air is supplied to the downstream secondary air supply passage member 88b on account of the exhaust pulse in the dedicated exhaust passage member 66. For this reason, as compared to the normal state, the temperature of the gas in the downstream secondary air supply passage member 88b detected by the downstream secondary air temperature sensor 76b is low. The secondary air supply valve opening abnormality detection unit 94 is configured to detect fixation of the secondary air supply valve 83 to the open state when a temperature detected by the downstream secondary air temperature sensor 76b is equal to or lower than a predetermined value. The predetermined value is, for example, set based on the temperature of the gas detected by the downstream secondary air temperature sensor 76b in advance at the detection timing in the normal state.

According to another modification, the secondary air supply valve opening abnormality detection unit 94 may detect fixation of the secondary air supply valve 83 to the open state based on signals of the upstream secondary air temperature sensor 76a and the downstream secondary air temperature sensor 76b. When the secondary air supply valve 83 is fixed to the open state, the secondary air supply valve 83 is not switched to the closed state even if the secondary air supply valve 83 is controlled to be in the closed state. Then cold secondary air is supplied to the upstream secondary air supply passage member 88a and the downstream secondary air supply passage member 88b. The secondary air supply valve opening abnormality detection unit 94 is configured to detect fixation of the secondary air supply valve 83 to the open state when a difference between temperatures of the gas detected by the two secondary air temperature sensors 76a and 76b is equal to or smaller than a predetermined threshold. This predetermined threshold is, for example, a difference between the temperatures of the gas detected by the secondary air temperature sensors 76a and 76b in advance at the detection timing in the normal state. The predetermined threshold is set based on a difference between the temperatures of the gas detected by the secondary air temperature sensors 76a and 76b in advance when the secondary air supply valve 83 is in the closed state.

According to another modification, the secondary air supply valve opening abnormality detection unit 94 may detect fixation of the secondary air supply valve 83 to the open state based on a signal of the upstream pressure sensor 77a. When the secondary air supply valve 83 is fixed to the open state, the secondary air supply valve 83 is not switched to the closed state even if the secondary air supply control unit 91 controls the secondary air supply valve 83 to be in the closed state. In accordance with the exhaust pulse in the dedicated exhaust passage member 66, the pressure of the gas in the upstream secondary air supply passage member 88a is changed to a negative pressure. For this reason, as compared to the normal state, the pressure of the gas in the upstream secondary air supply passage member 88a detected by the upstream pressure sensor 77a is low. The secondary air supply valve opening abnormality detection unit 94 detects the fixation of the secondary air supply valve 83 to the open state when the pressure of the gas in the upstream secondary air supply passage member 88a detected by the upstream pressure sensor 77a is higher than a predetermined value stored in advance. This predetermined value is set based on the pressure of the gas in the upstream secondary air supply passage member 88a detected by the upstream pressure sensor 77a in advance at the detection timing in the normal state. This holds true for the downstream pressure sensor 77b, and hence the explanation is omitted.

According to another modification, the secondary air supply valve opening abnormality detection unit 94 may detect fixation of the secondary air supply valve 83 to the open state based on a signal of the flow rate sensor 78. When the secondary air supply valve 83 is fixed to the open state, the secondary air supply valve 83 is not switched to the closed state even if the secondary air supply control unit 91 controls the secondary air supply valve 83 to be in the closed state. Then the secondary air is supplied to the upstream secondary air supply passage member 88a. In other words, in accordance with the exhaust pulse in the dedicated exhaust passage member 66, the gas passes the inside of the upstream secondary air supply passage member 88a and the inside of the downstream secondary air supply passage member 88b. The secondary air supply valve opening abnormality detection unit 94 detects the fixation of the secondary air supply valve 83 to the open state when the secondary air supply control unit 91 controls the secondary air supply valve 83 to be in the closed state and the flow rate of the gas in the upstream secondary air supply passage member 88a or the downstream secondary air supply passage member 88b detected by the flow rate sensor 78 is equal to or higher than a predetermined flow rate. This predetermined flow rate is, for example, set based on the flow rate of the gas in the upstream secondary air supply passage member 88a or the downstream secondary air supply passage member 88b detected by the flow rate sensor 78 in advance at the detection timing in the normal state.

The secondary air supply valve opening abnormality detection unit 94 may detect fixation of the secondary air supply valve 83 to the open state based on a signal of at least one of the oxygen sensor 74, the upstream secondary air temperature sensor 76a, the downstream secondary air temperature sensor 76b, the upstream pressure sensor 77a, the downstream pressure sensor 77b, or the flow rate sensor 78, which are described above. When the secondary air supply valve opening abnormality detection unit 94 uses signals of two or more sensors, it is possible to further certainly detect the fixation of the secondary air supply valve 83 to the open state.

### [Modifications of Control of Dedicated Reed Valve Opening Abnormality Detection Unit]

In the embodiment above, the dedicated reed valve opening abnormality detection unit 95 detects fixation of the secondary air supply valve 83 to the open state based on a signal of the downstream secondary air temperature sensor 76b. Alternatively, the dedicated reed valve opening abnormality detection unit 95 may detect fixation of the dedicated reed valve 84 to the open state based on a signal of the above-described sensors. According to one modification, the dedicated reed valve opening abnormality detection unit 95 may detect fixation of the dedicated reed valve 84 to the open state based on a signal of the upstream secondary air temperature sensor 76a. When the dedicated reed valve 84 is fixed to the open state, backward flow of hot exhaust gas into the upstream secondary air supply passage member 88a through the downstream secondary air supply passage member 88b occurs in accordance with the exhaust pulse in the dedicated exhaust passage member 66. For this reason, as compared to the normal state, the temperature of the gas in the upstream secondary air supply passage member 88a detected by the upstream secondary air temperature sensor 76a is high. The secondary air scarcity detection unit 93 detects the fixation of the dedicated reed valve 84 to the open state when the temperature of the gas in the upstream secondary air supply passage member 88a detected by the secondary air temperature sensor 76 is higher than a predetermined value stored in advance. This predetermined value is, for example, set based on the temperature of the gas in the upstream secondary air supply passage member 88a detected by the upstream secondary air temperature sensor 76a in advance at the detection timing in the normal state.

According to another modification, the dedicated reed valve opening abnormality detection unit 95 may detect fixation of the secondary air supply valve 83 to the open state based on a signal of the downstream pressure sensor 77b. When the dedicated reed valve 84 is fixed to the open state, the pressure in the downstream secondary air supply passage member 88b is changed to a negative pressure in accordance with the exhaust pulse in the dedicated exhaust passage member 66. For this reason, as compared to the normal state, the pressure of the gas in the downstream secondary air supply passage member 88b detected by the downstream pressure sensor 77b is low. The dedicated reed valve opening abnormality detection unit 95 is configured to detect fixation of the dedicated reed valve 84 to the open state when the pressure of the gas in the downstream secondary air supply passage member 88b detected by the downstream pressure sensor 77b is lower than a predetermined value stored in advance. The predetermined value is set based on the pressure of the gas in the downstream secondary air supply passage member 88b detected by the downstream pressure sensor 77b in advance at the detection timing in the normal state.

The dedicated reed valve opening abnormality detection unit 95 may detect fixation of the dedicated reed valve 84 to the open state based on a signal of at least one of the upstream secondary air temperature sensor 76a, the downstream secondary air temperature sensor 76b, or the downstream pressure sensor 77b, which are described above. When the dedicated reed valve opening abnormality detection unit 95 uses signals of two or more sensors, it is possible to further certainly detect the fixation of the dedicated reed valve 84 to the open state.

Preferred embodiments of the present teaching have been described above. However, the present teaching is not limited to the above-described embodiments, and various changes can be made within the scope of the claims. Further, modifications described below may be used in combination as needed.

In the embodiment above, the oxygen sensor is a linear A/F sensor. Alternatively, the oxygen sensor may be an O2 sensor in the present teaching.

In the embodiment above, the dedicated secondary air supply passage member 87 downstream of the dedicated reed valve is connected to the cylinder exhaust passage member 22b2. In this regard, in the present teaching, the dedicated secondary air supply passage member downstream of the dedicated reed valve is connected to a dedicated exhaust passage member. The dedicated secondary air supply passage member 87 downstream of the dedicated reed valve may therefore be connected to the independent exhaust passage member 61.

In the embodiment above, the oxygen sensor 74 is provided in the collective exhaust passage member 63 of the upstream exhaust passage member 67, which is upstream of the catalyst 65 in the upstream exhaust passage member 67. In this regard, in the present teaching, the oxygen sensor is provided in a dedicated exhaust passage member or an upstream exhaust passage member. The oxygen sensor may therefore be provided in the collective member 62. Furthermore, the oxygen sensor may be provided in at least one of the dedicated exhaust passage members 66.

In the embodiment above, the secondary air supply control unit 91, the fuel supply amount control unit 92, the detection unit 96, and the notification command unit 97 are included in the ECU 90 as function processors. Alternatively, in the present teaching, the secondary air supply control unit, the fuel supply amount control unit, the detection unit, and the notification command unit may be constructed in a controller different from the ECU.

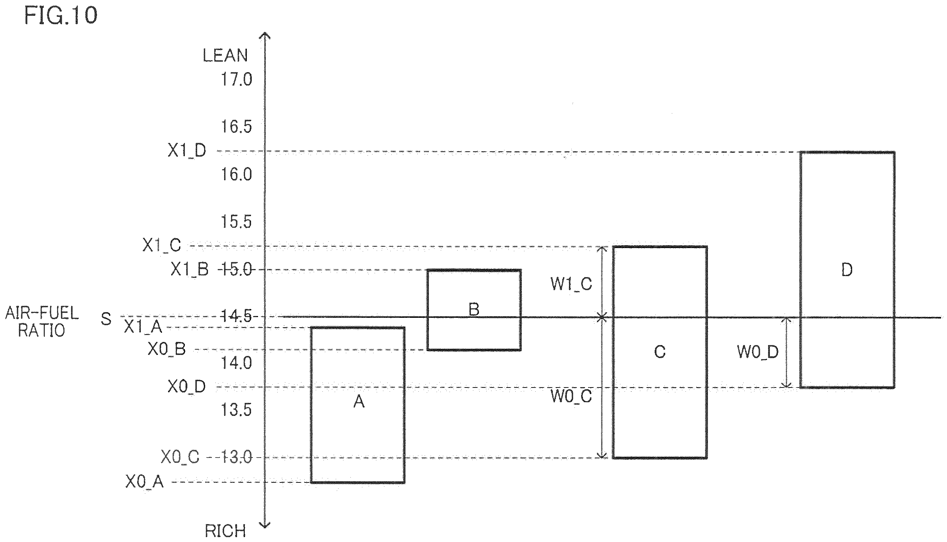

In the embodiment above, the fuel supply amount control unit 92 performs control to satisfy the above-described five conditions. Alternatively, in the present teaching, the fuel supply amount control unit may be controlled without satisfying the second condition. This modification is shown in a graph A in FIG. 10. The air-fuel ratio X0_A is an air-fuel ratio of gas obtained by removing secondary air supplied to the dedicated exhaust passage member 66 from the exhaust gas passing the oxygen sensor 74. The air-fuel ratio X1_A is an air-fuel ratio when the secondary air is supplied to the dedicated exhaust passage member 66 in the normal state in which the dedicated secondary air supply passage member 87 downstream of the dedicated reed valve does not clog. As shown in the graph A, when the fuel supply amount control unit 92 is controlled, the air-fuel ratio X0_A may not be rich as compared to the air-fuel ratio X1_A.

In addition to the above, in the present teaching, the fuel supply amount control unit may be controlled without satisfying the third condition. This modification is shown in a graph B in FIG. 10. The air-fuel ratio X1_B is an air-fuel ratio when secondary air is supplied to the dedicated exhaust passage member 66. The air-fuel ratio X0_B is an air-fuel ratio of gas obtained by removing secondary air supplied to the dedicated exhaust passage member 66 from the exhaust gas passing the oxygen sensor 74. As shown in the graph B, when the fuel supply amount control unit 92 is controlled, a value calculated by subtracting the air-fuel ratio X0_B from the air-fuel ratio X1_B may not be one or more. In this case, however, the value calculated by subtracting the air-fuel ratio X0_B from the air-fuel ratio X1_B is preferably close to 1.

In addition to the above, in the present teaching, the fuel supply amount control unit may be controlled without satisfying the fourth condition. This modification is shown in a graph C in FIG. 10. The air-fuel ratio X1_C is an air-fuel ratio when secondary air is supplied to the dedicated exhaust passage member 66. The air-fuel ratio X0_C is an air-fuel ratio of gas obtained by removing secondary air supplied to the dedicated exhaust passage member 66 from the exhaust gas passing the oxygen sensor 74. As shown in the graph C, when the fuel supply amount control unit 92 is controlled, a difference W1_C between the air-fuel ratio X1_C and the stoichiometric air-fuel ratio S may be larger than a difference W0_C between the air-fuel ratio X0_C and the stoichiometric air-fuel ratio S.

In addition to the above, in the present teaching, the fuel supply amount control unit may be controlled without satisfying the fifth condition. This modification is shown in a graph D in FIG. 10. The air-fuel ratio X1_D is an air-fuel ratio when secondary air is supplied to the dedicated exhaust passage member 66. As shown in the graph D, when the fuel supply amount control unit 92 is controlled, a difference W1_D between the air-fuel ratio X1_D and the stoichiometric air-fuel ratio S may not be one or more.

In the embodiment above, the driving range of the engine main body 20 is divided into two, namely the low-load range and the high-load range. Alternatively, in the present teaching, the driving range of the engine main body may be divided into three, namely a low-load range, a middle-load range, and a high-load range. In the present case, for example, the driving range of the engine main body is divided, in regard to the opening degrees θ of the throttle valve, into the low-load range, the middle-load range, and the high-load range on the basis of a second opening degree θ2 and a third opening degree θ3 which are determined in advance. The second opening degree θ2 is smaller than the third opening degree θ3. When the driving range of the engine main body 20 is in the low-load range, the opening degree θ of the throttle valve is smaller than the second opening degree θ2. When the driving range of the engine main body is in the middle-load range, the opening degree θ of the throttle valve is equal to or larger than the second opening degree θ2 and is smaller than the third opening degree θ3. When the driving range of the engine main body is in the high-load range, the opening degree of the throttle valve is equal to or larger than the third opening degree θ3. The low-load range may be equal to or smaller than 1/3 of the driving range of the engine main body. In other words, the second opening degree θ2 may be equal to or smaller than 1/3 of the throttle opening degree in the full-open state. The low-load range may be equal to or smaller than 1/2 of the driving range of the engine main body. In other words, the second opening degree θ2 may be equal to or smaller than 1/2 of the throttle opening degree in the full-open state. In this case, furthermore, the secondary air supply driving range may be a driving range which is at least a part of the low-load range and the middle-load range.

In the embodiment above, the notification command unit 97 is configured to display a warning on the display 14 when the secondary air scarcity detection unit 93 detects the clogging of the dedicated secondary air supply passage member 87 downstream of the dedicated reed valve. Alternatively, in the present teaching, the notification command unit may output warning sound when a detection unit (e.g., the secondary air scarcity detection unit 93) detects the clogging of the dedicated secondary air supply passage member downstream of the dedicated reed valve. The same applies to a case where a detection unit (e.g., the secondary air scarcity detection unit 93) detects the fixation of the dedicated reed valve to the closed state. The same applies to a case where a detection unit (e.g., the secondary air scarcity detection unit 93) detects the fixation of the secondary air supply valve to the closed state. The same applies to a case where a detection unit (e.g., the secondary air scarcity detection unit 93) detects that the dedicated secondary air supply passage member downstream of the dedicated reed valve is about to clog. Furthermore, the same applies to a case where a detection unit (e.g., the secondary air supply valve opening abnormality detection unit 94) detects an abnormality in the secondary air supply valve in the open state. Furthermore, the same applies to a case where a detection unit (e.g., the dedicated reed valve opening abnormality detection unit 95) detects an abnormality in the dedicated reed valve in the open state.

In the embodiment above, the detection timing of the secondary air scarcity detection unit 93 is a timing at which the secondary air supply control unit 91 controls the secondary air supply valve 83 to be in the open state and the fuel supply amount control unit 92 causes the engine main body 20 to be under the cold state and driven in a predetermined driving range. Alternatively, in the present teaching, the detection timing at which the clogging of the dedicated secondary air supply passage member downstream of the dedicated reed valve is detected by the detection unit may be a timing at which the secondary air supply control unit controls the secondary air supply valve to be in the open state and the fuel supply amount control unit causes the engine main body to be under the warm-up state and driven in a predetermined driving range in the secondary air supply driving range.

In the present teaching, the detection timing at which the clogging of the dedicated secondary air supply passage member downstream of the dedicated reed valve is detected by the detection unit may be a timing at which the secondary air supply control unit controls the secondary air supply valve to be in the open state and the fuel supply amount control unit is driven in a predetermined driving range. The detection timing at which the clogging of the dedicated secondary air supply passage member downstream of the dedicated reed valve is detected by the detection unit may be a timing at which the secondary air supply control unit controls the secondary air supply valve to be in the open state and a predetermined time has elapsed from at timing at which the secondary air supply valve is controlled to be in the open state by the secondary air supply control unit. The predetermined time may be a single period of time or plural periods of time. This is applicable to the detection timing at which the detection unit detects fixation of the dedicated reed valve to the closed state. This is applicable to the detection timing at which the detection unit detects fixation of the secondary air supply valve to the closed state. This is applicable to the detection timing at which the detection unit detects that the dedicated secondary air supply passage member downstream of the dedicated reed valve is about to clog.

In the present teaching, the detection timing at which the clogging of the dedicated secondary air supply passage member downstream of the dedicated reed valve is detected by the detection unit may be a timing at which the engine main body is under the warm-up state and driven in a predetermined driving range different from the secondary air supply driving range. In this case, the secondary air supply control unit controls the secondary air supply valve to be in the open state at the detection timing. Then a detection unit (e.g., the secondary air scarcity detection unit 93) detects the clogging of the dedicated secondary air supply passage member downstream of the dedicated reed valve. In other words, in this case, secondary air is not typically supplied to the dedicated exhaust passage member downstream of the dedicated reed valve. However, even in such a case, as the secondary air is supplied to the dedicated exhaust passage member, the detection unit (e.g., the secondary air scarcity detection unit 93) is able to detect the clogging of the dedicated secondary air supply passage member downstream of the dedicated reed valve. This is applicable to the detection timing at which the detection unit detects fixation of the dedicated reed valve to the closed state. This is applicable to the detection timing at which the detection unit detects fixation of the secondary air supply valve to the closed state. This is applicable to the detection timing at which the detection unit detects that the dedicated secondary air supply passage member downstream of the dedicated reed valve is about to clog.

In the embodiment above, the secondary air supply control unit 91 controls the secondary air supply valve 83 to be in the open state, when the engine main body 20 is under the warm-up state and driven in the secondary air supply driving range. Alternatively, in the present teaching, the secondary air supply control unit may control the secondary air supply valve to be in the closed state when the engine main body is in the warm-up state and driven in the secondary air supply driving range. In other words, the secondary air supply control unit may control the secondary air supply valve to be in the closed state when the engine main body is driven under the warm-up state. To put it differently, the secondary air supply control unit may control the secondary air supply valve to be in the open state only when the engine main body is driven under the cold state.

In the embodiment above, the secondary air scarcity detection unit 93 is configured to detect the clogging of the dedicated secondary air supply passage member 87 downstream of the dedicated reed valve by using a secondary air non-supply detection value. Alternatively, in the present teaching, a detection unit (e.g., the secondary air scarcity detection unit 93) may detect the clogging of the dedicated secondary air supply passage member downstream of the dedicated reed valve by using a below-described secondary air non-supply detection threshold as an index. To be more specific, for example, a detection unit (e.g., the secondary air scarcity detection unit 93) may compare either a difference between the air-fuel ratio X0 and the air-fuel ratio A1 or a difference between the air-fuel ratio X1 and the air-fuel ratio A1 with a predetermined secondary air non-supply detection threshold. The secondary air non-supply detection threshold is stored in the controller in advance.

In the present teaching, the detection unit may not be able to detect an abnormality in the open state of the secondary air supply valve. In other words, the detection unit may not include the secondary air supply valve opening abnormality detection unit 94 of the embodiment above. Furthermore, the detection unit may not be able to detect an abnormality in the open state of the dedicated reed valve. In other words, the detection unit may not include the dedicated reed valve opening abnormality detection unit 95 of the embodiment above. When the ECU 90 does not include the dedicated reed valve opening abnormality detection unit 95 in the embodiment above, the gas state detection device 70 may not include the downstream secondary air temperature sensor 76b.

In the embodiment above, the secondary air scarcity detection unit 93 is configured to detect that the dedicated secondary air supply passage member 87 downstream of the dedicated reed valve is about to clog. Alternatively, in the present teaching, a detection unit (e.g., the secondary air scarcity detection unit 93) may not detect that the dedicated secondary air supply passage 7 downstream of the dedicated reed valve is about to clog.

In the embodiment above, the secondary air scarcity detection unit 93 detects that the secondary air supply valve 83 is fixed to the closed state. Alternatively, in the present teaching, a detection unit (e.g., the secondary air scarcity detection unit 93) may not detect that the secondary air supply valve is fixed to the closed state.

In the embodiment above, the secondary air supply passage member 86 includes the upstream secondary air supply passage member 88a and the plural downstream secondary air supply passage members 88b. In this regard, in the present teaching, the secondary air supplier may include only the plural downstream secondary air supply passage members. In such a case, an air cleaner is provided at an upstream end portion in the flow direction of secondary air of each of the plural downstream secondary air supply passage members. Furthermore, dedicated reed valves are connected to downstream end portions of the plural downstream secondary air supply passage members in the flow direction of the secondary air. One secondary air supply valve is provided in each of the downstream secondary air supply passage members. The secondary air supply valve is provided in the downstream secondary air supply passage member which is downstream of the air cleaner in the flow direction of the secondary air.

In the embodiment above, the secondary air supply passage member 86 includes the upstream secondary air supply passage member 88a and the plural downstream secondary air supply passage members 88b. Alternatively, in the present teaching, the secondary air supply passage member may include only the upstream secondary air supply passage member. In this case, a communication portion which allows plural dedicated reed valves to communicate with one another is provided at a downstream end portion of the upstream secondary air supply passage member in the flow direction of the secondary air.

In the embodiment above, the air cleaner 51 is provided at the upstream end portion 88dlof the upstream secondary air supply passage member 88a in the flow direction of the secondary air. Furthermore, the air cleaner 51 is provided at one end portion 52a of a collective intake passage member 52. Alternatively, in the present teaching, different air cleaners may be provided in the upstream secondary air supply passage member and the collective intake passage member, respectively.

In the embodiment above, the catalyst 65 is provided at a right part of the motorcycle 1. The position of the catalyst, however, is not limited to this. In the present teaching, the catalyst may be provided at a left part or at the center in the vehicle width direction of the straddled vehicle (motorcycle).

In the embodiment above, one dedicated exhaust passage member 66 is connected to one combustion chamber 30. Alternatively, in the present teaching, plural dedicated exhaust passage members may be connected to one combustion chamber. Also in this case, one dedicated reed valve is provided for one combustion chamber.

In the embodiment above, the injector is equivalent to the fuel supplier of the present teaching. In the present teaching, however, the fuel supplier is not limited to the injector. The fuel supplier of the present teaching is only required to be a device configured to supply fuel to the inside of a combustion chamber. The fuel supplier of the present teaching may be a carburetor configured to supply fuel to a combustion chamber by a negative pressure, for example.

In the present teaching, the engine unit may be an air-cooled engine.

In the embodiment above, one combustion chamber 30 is provided for one cylinder bore 22al. Alternatively, in the present teaching, a main combustion chamber and an auxiliary combustion chamber may be provided for one cylinder bore. In this case, one combustion chamber of the present teaching is formed of the main combustion chamber and the auxiliary combustion chamber.

In the embodiment above, the combustion chambers 30 are disposed side by side in the left-right direction. In other words, the engine unit 11 of the embodiment above is a parallel engine in which three cylinders are lined up in the vehicle width direction. Alternatively, in the present teaching, the combustion chambers may be disposed side by side in the front-rear direction. In other words, the engine unit may be a straight engine in which cylinders are lined up in the front-rear direction. In this case, open ends of the three cylinder intake passage members 22b1 are formed in the left or right face of the cylinder head 22b. Furthermore, open ends of the three cylinder exhaust passage members 22b2 are formed in the left or right face of the cylinder head 22b. Alternatively, in the present teaching, the engine may be a combination of the parallel type and the straight type.

The engine main body 20 of the embodiment above includes three combustion chambers 30. In other words, the engine unit 11 of the embodiment above is a three-cylinder engine. Alternatively, in the present teaching, the engine unit may be a multi-cylinder engine which is not a three-cylinder engine. To put it differently, in the present teaching, the number of combustion chambers in the engine unit may be two, four, or more than four.

In the present teaching, when the number of combustion chambers is four or more, exhaust gas exhausted from all combustion chambers may not be merged in an exhaust passage member. The following shows an example in which the number of combustion chambers is four. The exhaust gas exhausted from the two right combustion chambers may not be merged with the exhaust gas exhausted from the two left combustion chambers. One catalyst is provided for the two right combustion chambers and another catalyst is provided for the two left combustion chambers.

In the present teaching, the engine main body may be a so-called V engine when the number of combustion chambers is four or more. For example, a V4 engine includes four combustion chambers, and two of these combustion chambers are provided at a front portion whereas the remaining two are provided at a rear portion. The combustion chambers provided at the front portion of the V engine are termed front combustion chambers. The front combustion chambers are disposed side by side in the left-right direction. The combustion chambers provided at the rear portion of the V engine are termed rear combustion chambers. The rear combustion chambers are disposed side by side in the left-right direction. The front combustion chambers are encompassed in the "at least one combustion chamber" of the present teaching.

In the present teaching, when the engine main body is a V engine, the exhaust passage member may be structured so that the exhaust gas exhausted from a rear combustion chamber is merged with the exhaust gas exhausted from a front combustion chamber. For example, a downstream end portion in the flow direction of exhaust gas of a dedicated exhaust passage member communicating with the rear combustion chamber may be connected to an upstream exhaust passage member. In this case, the exhaust gas exhausted from the rear combustion chamber is purified by a catalyst. Alternatively, for example, the exhaust passage member may be structured so that the exhaust gas exhausted from a rear combustion chamber is not merged with the exhaust gas exhausted from a front combustion chamber. In this case, a catalyst for purifying exhaust gas exhausted from the rear combustion chamber is provided in addition to the catalyst. The rear combustion chamber is encompassed in the "at least one combustion chamber" of the present teaching.

A secondary air supply passage member is connected to each of the dedicated exhaust passage member of the front combustion chamber and the dedicated exhaust passage member of the rear combustion chamber. In this case, in the secondary air supply passage member of the front combustion chamber, a communication portion for causing two dedicated reed valves to communicate with each other may be provided at a downstream end portion in the flow direction of secondary air of one downstream secondary air supply passage member. Furthermore, in the secondary air supply passage member of the rear combustion chamber, a communication portion for causing two dedicated reed valves to communicate with each other may be provided at a downstream end portion in the flow direction of secondary air of one downstream secondary air supply passage member. A shared secondary air supply passage member may be connected to the dedicated exhaust passage member of the front combustion chamber and the dedicated exhaust passage member of the rear combustion chamber.

In the embodiment above, the engine unit 11 is a multi-cylinder engine including three combustion chambers 30. The engine unit 11 includes three dedicated reed valves 84 and one secondary air supply valve 83. Alternatively, in the present teaching, the engine unit may include secondary air supply valves for the respective combustion chambers. In such a case, the dedicated reed valves for the respective combustion chambers are connected to the secondary air supply valves for the respective combustion chambers, at downstream secondary air supply passage members for the respective combustion chambers. The secondary air supply valves for the respective combustion chambers may be connected to upstream secondary air supply passage members for the respective combustion chambers. Air cleaners for the respective combustion chambers may be provided in the upstream secondary air supply passage members for the respective combustion chambers. An upstream secondary air supply passage member including a collective member may be connected to at least a part of the secondary air supply valves for the respective combustion chambers. One air cleaner may be provided in the upstream secondary air supply passage member including the collective member.

In the present teaching, the number of secondary air supply valves in the engine unit may be smaller than the number of combustion chambers. In such a case, a part of dedicated reed valves for the respective combustion chambers is connected to one secondary air supply valve at a downstream secondary air supply passage member including a collective member. The secondary air supply valves may be connected to upstream secondary air supply passage members for the respective secondary air supply valves. Air cleaners for the respective upstream secondary air supply passage members may be provided in the upstream secondary air supply passage members. Furthermore, at least a part of the secondary air supply valves may be connected to an upstream secondary air supply passage member including a collective member. One air cleaner may be provided in the upstream secondary air supply passage member including the collective member.

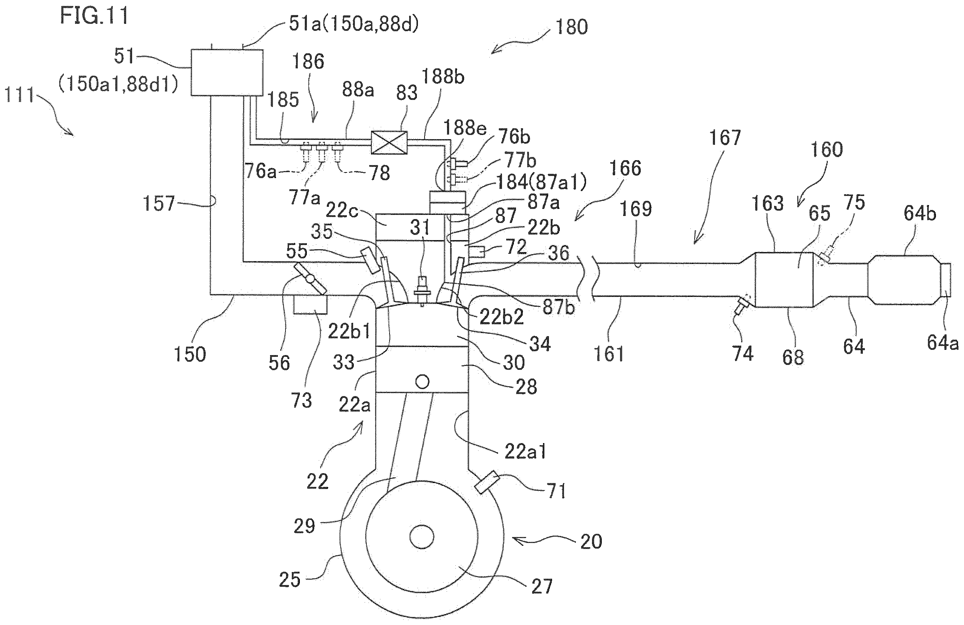

The engine main body 20 of the embodiment above includes plural combustion chambers 30. The engine unit 11 of the embodiment above is a multi-cylinder engine. Alternatively, in the present teaching, the engine unit may be a single-cylinder engine. The following will describe a modification in which the engine unit is a single-cylinder engine, with reference to FIG. 11. It is noted that items identical with those in the engine unit 11 in the embodiment above are indicated by the same reference numerals and detailed descriptions thereof are suitably omitted. An engine unit 111 shown in FIG. 11 includes an engine main body 20, a water cooling unit 40 (see FIG. 2), an intake passage member 150, an exhaust passage member 160, and a secondary air supplier 180.

The intake passage member 150 includes a throttle valve 56. An air cleaner 51 is provided at one end portion 150a1 of the intake passage member 150. In other words, one end 150a of the intake passage member 150 has an air inlet 51a. The intake passage member 150 is connected to an open end of a cylinder intake passage member 22b1.

The exhaust passage member 160 includes a dedicated exhaust passage member 166, an upstream exhaust passage member 167, a catalyst unit 68, and a downstream exhaust passage member 64. The dedicated exhaust passage member 166 includes a cylinder exhaust passage member 22b2. A downstream end portion in the flow direction of exhaust gas of the dedicated exhaust passage member 166 is connected to an upstream exhaust passage member 161. The border between the dedicated exhaust passage member 166 and the upstream exhaust passage member 161 is at any position of an exhaust passage member 160 which is upstream of the catalyst unit 68 in the flow direction of the exhaust gas. A downstream end portion in the flow direction of exhaust gas of the upstream exhaust passage member 161 is connected to the catalyst unit 68. The dedicated exhaust passage member 166, the catalyst unit 68, and the downstream exhaust passage member 64 constitute a dedicated exhaust passage 169. The oxygen sensor 74 is provided in an upstream exhaust passage member 161 upstream of the catalyst 65.

A secondary air supplier 180 includes one secondary air supply valve 83, one dedicated reed valve 184, and a secondary air supply passage member 186. The secondary air supply passage member 186 includes a one dedicated secondary air supply passage member 87 downstream of dedicated reed valve, one upstream secondary air supply passage member 88a, and one downstream secondary air supply passage member 188b. The downstream secondary air supply passage member 188b is connected to a dedicated reed valve 184 at a downstream end portion 188e of the downstream secondary air supply passage member 188b in the flow direction of the secondary air. The downstream secondary air supply passage member 188b is connected to the secondary air supply valve 83 at an upstream end portion of the downstream secondary air supply passage member 188b in the flow direction of the secondary air. One dedicated secondary air supply passage 185 is formed in the one dedicated secondary air supply passage member 87 downstream of dedicated reed valve, one upstream secondary air supply passage member 88a, and one downstream secondary air supply passage member 188b. A downstream secondary air temperature sensor 76b is provided in the downstream secondary air supply passage member 188b which is downstream of the secondary air supply valve 83 in the flow direction of the exhaust gas.

In the present teaching, the straddled vehicle may include a pump which is provided on an upstream secondary air supply passage member to forcibly supply secondary air to a dedicated secondary air supply passage.

In the present teaching, the straddled vehicle may be arranged such that a bypass passage is provided at a throttle valve (56) of an intake passage member (150) and an idle rotation speed control valve, etc. is provided in the bypass passage. In such a case, the fuel supply amount control unit calculates an intake air amount based on a signal of an engine rotation speed sensor, a signal of a throttle opening degree sensor, and a signal of the idle rotation speed control valve. The secondary air supply control unit determines a driving range of the engine main body based on a signal of the throttle opening degree sensor and a signal of the idle rotation speed control valve.

In the present teaching, warnings displayed by the notification device based on the following signals sent from the notification command unit may be different from one another or identical with one another. One of the signals sent from the notification command unit is a signal notifying clogging of a dedicated secondary air supply passage member downstream of a dedicated reed valve. One of the signals sent from the notification command unit is a signal notifying fixation of a dedicated reed valve to the closed state. One of the signals sent from the notification command unit is a signal notifying fixation of a secondary air supply valve to the closed state. One of the signals sent from the notification command unit is a signal notifying that a dedicated secondary air supply passage member downstream of a dedicated reed valve is about to clog. One of the signals sent from the notification command unit is a signal notifying an abnormality of a secondary air supply valve in the open state. One of the signals sent from the notification command unit is a signal notifying an abnormality of a dedicated reed valve in the open state.

The straddled vehicle of the present teaching is, for example, a motorcycle. The motorcycle encompasses, for example, a scooter and an underbone vehicle. It should be noted that the straddled vehicle in the present teaching is not limited to the motorcycle. The straddled vehicle indicates all types of vehicles on which a rider rides in a manner of straddling on a saddle. The straddled vehicles of the present teaching include motorcycles, tricycles, four-wheeled buggies (ATVs: All Terrain Vehicles), personal water crafts, snowmobiles, etc. The number of front wheels in the straddled vehicle may be two or more. The number of rear wheels in the straddled vehicle may be two or more.

### [Reference Signs List]

1 motorcycle (straddled vehicle)
4 vehicle body frame
9 seat
11 engine unit
14 display (notification unit)
20 engine main body
30 combustion chamber
51a air inlet
55 injector (fuel supplier)
60 exhaust passage member
64 downstream exhaust passage member
64a discharge port
65 catalyst
66 dedicated exhaust passage member
67 upstream exhaust passage member
68 catalyst exhaust passage member
69 dedicated exhaust passage
70 gas state detection device which is not for dedicated secondary air supply passage member
83 secondary air supply valve
84 dedicated reed valve
85 dedicated secondary air supply passage
86 secondary air supply passage member
87 dedicated secondary air supply passage member downstream of dedicated reed valve
88a upstream secondary air supply passage member
88b downstream secondary air supply passage member
90 ECU (controller)
91 secondary air supply control unit
92 fuel supply amount control unit
96 detection unit
97 notification command unit

## Claims

1. A straddled vehicle (1) comprising:
a vehicle body frame (4);
a seat (9) supported by the vehicle body frame (4); and
an engine unit (11) provided below an upper end of the seat (9) and supported by the vehicle body frame (4),
the engine unit (11) including:
at least one combustion chamber (30) formed inside an engine main body (20);
a fuel supplier (55) provided for each of the at least one combustion chamber (30) and configured to supply fuel to the corresponding combustion chamber (30);
a catalyst (65) configured to purify exhaust gas passing a dedicated exhaust passage (69) which is provided for each combustion chamber (30) and between the combustion chamber (30) and a discharge port (64a) though which the exhaust gas is discharged to atmosphere;
a dedicated reed valve (84) which is provided for each of the at least one combustion chamber (30) and in a dedicated secondary air supply passage (85) supplying, as secondary air, air sucked through an air inlet (51a) through which air is sucked from the atmosphere to the dedicated exhaust passage (69), the dedicated reed valve (84) being in an open state when a pressure difference by subtracting a pressure in the dedicated secondary air supply passage (85) downstream of the dedicated reed valve (84) in a flow direction of the secondary air from a pressure in the dedicated secondary air supply passage (85) upstream of the dedicated reed valve (84) in the flow direction of the secondary air is equal to or higher than a predetermined pressure and opening the dedicated secondary air supply passage (85), and the dedicated reed valve (84) being in a closed state when the pressure difference by subtracting the pressure in the dedicated secondary air supply passage (85) downstream of the dedicated reed valve (84) in the flow direction of the secondary air from the pressure in the dedicated secondary air supply passage (85) upstream of the dedicated reed valve (84) in the flow direction of the secondary air is lower than the predetermined pressure and closing the dedicated secondary air supply passage (85);
a secondary air supply valve (83) which is provided in the dedicated secondary air supply passage (85) upstream of the dedicated reed valve (84) in the flow direction of the secondary air, the secondary air supply valve (83) in an open state opening the dedicated secondary air supply passage (85) to allow the secondary air to be supplied to the dedicated secondary air supply passage (85), and the secondary air supply valve (83) in a closed state closing the dedicated secondary air supply passage (85) to stop supply of the secondary air to the dedicated secondary air supply passage (85);
a dedicated exhaust passage member (66) which is provided for each of the at least one combustion chamber (30) and is connected to the combustion chamber (30) at an upstream end portion of the dedicated exhaust passage member (66) in a flow direction of the exhaust gas, a part of the dedicated exhaust passage (69) being formed inside the dedicated exhaust passage member (66);
an upstream exhaust passage member (67) which is connected to the dedicated exhaust passage member (66) at an upstream end portion of the upstream exhaust passage member (67) in the flow direction of the exhaust gas and is provided upstream of the catalyst (65) in the flow direction of the exhaust gas, a part of the dedicated exhaust passage (69) being formed inside the upstream exhaust passage member (67);
a catalyst exhaust passage member (68) which is connected to the upstream exhaust passage member (67) at an upstream end portion of the catalyst exhaust passage member (68) in the flow direction of the exhaust gas and includes the catalyst (65) in which a part of the dedicated exhaust passage (69) is formed;
a downstream exhaust passage member (64) which is connected to the catalyst exhaust passage member (68) at an upstream end portion of the downstream exhaust passage member (64) in the flow direction of the exhaust gas, includes the discharge port (64a) at a downstream end portion of the downstream exhaust passage member (64) in the flow direction of the exhaust gas, and is provided downstream of the catalyst (65) in the flow direction of the exhaust gas, a part of the dedicated exhaust passage (69) being formed in the downstream exhaust passage member (64);
a dedicated secondary air supply passage member (87) which is provided for each of the at least one combustion chamber (30), is connected to the dedicated exhaust passage member (66) at a downstream end portion of the dedicated secondary air supply passage member (87) in the flow direction of the secondary air, is connected to the dedicated reed valve (84) at an upstream end portion of the dedicated secondary air supply passage member (87) in the flow direction of the secondary air, and is provided downstream of the dedicated reed valve (84) in the flow direction of the secondary air, a part of the dedicated secondary air supply passage (85) being formed in the dedicated secondary air supply passage member (87);
a downstream secondary air supply passage member (88b) which is connected to the dedicated reed valve (84) at a downstream end portion of the downstream secondary air supply passage member (88b) in the flow direction of the secondary air, which is connected to the secondary air supply valve (83) at an upstream end portion of the downstream secondary air supply passage member (88b) in the flow direction of the secondary air, in which a part of the dedicated secondary air supply passage (85) is formed, and which is downstream of the secondary air supply valve (83) in the flow direction of the secondary air;
an upstream secondary air supply passage member (88a) which is connected to the secondary air supply valve (83) at a downstream end portion of the upstream secondary air supply passage member (88a) in the flow direction of the secondary air, which includes the air inlet (51a) at an upstream end portion of the upstream secondary air supply passage member (88a) in the flow direction of the secondary air, in which a part of the dedicated secondary air supply passage (85) is formed, and which is upstream of the secondary air supply valve (83) in the flow direction of the secondary air;
a gas state detection device (70) which is not for the dedicated secondary air supply passage member (87) and is configured to detect an index indicating a state of gas in a passage member other than the dedicated secondary air supply passage member (87) downstream of the dedicated reed valve (84), the index indicating the state of the gas being at least one of (1) oxygen density of gas in the dedicated exhaust passage member (66) and the upstream exhaust passage member (67), (2) a temperature of gas in the downstream secondary air supply passage member (88b), the upstream secondary air supply passage member (88a), the catalyst exhaust passage member (68), and the downstream exhaust passage member (64), (3) a pressure of gas in the downstream secondary air supply passage member (88b) and the upstream secondary air supply passage member (88a), or (4) a flow rate of gas in the downstream secondary air supply passage member (88b) and the upstream secondary air supply passage member (88a); and
a controller (90) which includes (a) a fuel supply amount control unit (92) configured to control an amount of fuel supplied by the fuel supplier (55); (b) a secondary air supply control unit (91) which is configured to control the secondary air supply valve (83) to be in the open state or the closed state and control the secondary air supply valve (83) to be in the open state when the engine main body (20) is driven at least under a cold state; and (c) a detection unit (96) configured to be able to detect clogging of the dedicated secondary air supply passage member (87) downstream of the dedicated reed valve (84) based on a signal of the gas state detection device (70) which is not for the dedicated secondary air supply passage member (87), when the secondary air supply control unit (91) controls the secondary air supply valve (83) to be in the open state.

2. The straddled vehicle (1) according to claim 1, wherein, the secondary air supply control unit (91) is configured to control the secondary air supply valve (83) to be in the open state when the engine main body (20) is under a warm-up state and is driven in a driving range which is at least a part of a low-load range.

3. The straddled vehicle (1) according to claim 1 or 2, wherein, in the controller (90),
when the secondary air supply control unit (91) controls the secondary air supply valve (83) to be in the open state,
the fuel supply amount control unit (92) is configured to control the fuel supplier (55) so that, in a normal state in which the dedicated secondary air supply passage member (87) downstream of the dedicated reed valve (84) does not clog, (i) an air-fuel ratio estimated from a signal of the gas state detection device (70), which is not for the dedicated secondary air supply passage member (87) and is configured to at least one of oxygen densities of gas in the dedicated exhaust passage member (66) or the upstream exhaust passage member (67), is lean as compared to a stoichiometric air-fuel ratio and (ii) an air-fuel ratio estimated from oxygen density of gas obtained by removing the secondary air supplied to the dedicated exhaust passage member (66) from exhaust gas passing the gas state detection device (70), which is not for the dedicated secondary air supply passage member (87) and is configured to detect at least one of oxygen densities of the gas in the dedicated exhaust member or the upstream exhaust passage member (67), is rich as compared to an air-fuel ratio in the normal state, and
the detection unit (96) is configured to be able to detect the clogging of the dedicated secondary air supply passage member (87) downstream of the dedicated reed valve (84) based on a signal of the gas state detection device (70), which is not for the dedicated secondary air supply passage member (87) and is configured to detect at least one of oxygen densities of the gas in the dedicated exhaust member or the upstream exhaust passage member (67).

4. The straddled vehicle (1) according to any one of claims 1 to 3, wherein, in the controller (90),
when the secondary air supply control unit (91) controls the secondary air supply valve (83) to be in the open state,
the fuel supply amount control unit (92) is configured to control the fuel supplier (55) so that, in a normal state in which the dedicated secondary air supply passage member (87) downstream of the dedicated reed valve (84) does not clog, a difference between the air-fuel ratio estimated from the signal of the gas state detection device (70), which is not for the dedicated secondary air supply passage member (87) and is configured to detect at least one of oxygen densities of the gas in the dedicated exhaust passage member (66) or the upstream exhaust passage member (67), and the air-fuel ratio estimated from the oxygen density of the gas obtained by removing the secondary air supplied to the dedicated exhaust passage member (66) from the exhaust gas passing the gas state detection device (70), which is not for the dedicated secondary air supply passage member (87) and is configured to detect at least one of oxygen densities of the gas in the dedicated exhaust passage member (66) or the upstream exhaust passage member (67) is one or more.

5. The straddled vehicle (1) according to any one of claims 1 to 4, wherein, in the controller (90),
when the secondary air supply control unit (91) controls the secondary air supply valve (83) to be in the open state,
the fuel supply amount control unit (92) is configured to control the fuel supplier (55) so that, in a normal state in which the dedicated secondary air supply passage member (87) downstream of the dedicated reed valve (84) does not clog, a difference between the air-fuel ratio estimated from the signal of the gas state detection device (70), which is not for the dedicated secondary air supply passage member (87) and is configured to detect at least one of oxygen densities of the gas in the dedicated exhaust passage member (66) or the upstream exhaust passage member (67), and the stoichiometric air-fuel ratio is larger than a difference between the air-fuel ratio estimated from the oxygen density of the gas obtained by removing the secondary air supplied to the dedicated exhaust passage member (66) from the exhaust gas passing the gas state detection device (70), which is not for the dedicated secondary air supply passage member (87) and is configured to detect at least one of oxygen densities of the gas in the dedicated exhaust passage member (66) or the upstream exhaust passage member (67), and the stoichiometric air-fuel ratio.

6. The straddled vehicle (1) according to any one of claims 1 to 5, wherein, in the controller (90),
when the secondary air supply control unit (91) controls the secondary air supply valve (83) to be in the open state,
the fuel supply amount control unit (92) is configured to control the fuel supplier (55) so that, in a normal state in which the dedicated secondary air supply passage member (87) downstream of the dedicated reed valve (84) does not clog, a difference between the air-fuel ratio estimated from the oxygen density of the gas obtained by removing the secondary air supplied to the dedicated exhaust passage member (66) from the exhaust gas passing the gas state detection device (70), which is not for the dedicated secondary air supply passage member (87) and is configured to detect at least one of oxygen densities of the gas in the dedicated exhaust passage member (66) or the upstream exhaust passage member (67), and the stoichiometric air-fuel ratio is one or more.

7. The straddled vehicle (1) according to any one of claims 1 to 6, wherein, in the controller (90),
when the secondary air supply control unit (91) controls the secondary air supply valve (83) to be in the open state,
the detection unit (96) is configured to be able to detect either fixation of the dedicated reed valve (84) to the closed state or the clogging of the dedicated secondary air supply passage member (87) downstream of the dedicated reed valve (84) based on a signal of the gas state detection device (70) which is not for the dedicated secondary air supply passage member (87) by detecting at least one the following changes as compared to a normal state:
a) the air-fuel ratio estimated based on the oxygen densities of the exhaust gas in the dedicated exhaust passage member (66) and the upstream exhaust passage member (67) becomes a value on the rich side,
b) the temperatures of the gas in the downstream secondary air supply passage member (88b), the upstream secondary air supply passage member (88a), the dedicated exhaust passage member (66), the upstream exhaust passage member (67), the catalyst exhaust passage member (68), and the downstream exhaust passage member (64) are lowered,
c) ranges of variations of pressures of the gas in the downstream secondary air supply passage member (88b) and the upstream secondary air supply passage member (88a) are eliminated or decreased, and
d) the flow rates of the gas in the downstream secondary air supply passage member (88b) and the upstream secondary air supply passage member (88a) are eliminated or decreased.

8. The straddled vehicle (1) according to any one of claims 1 to 7, wherein, in the controller (90),
when the secondary air supply control unit (91) controls the secondary air supply valve (83) to be in the open state,
the detection unit (96) is configured to be able to detect fixation of the secondary air supply valve (83) to the closed state based on a signal of the gas state detection device (70) which is not for the dedicated secondary air supply passage member (87) by detecting at least one of the following changes as compared to a normal state:
e) the air-fuel ratio estimated based on the oxygen densities of the gas in the dedicated exhaust passage member (66) and the upstream exhaust passage member (56) becomes a value on the rich side,
f) the temperatures of the gas in the dedicated exhaust passage member (66), the upstream exhaust passage member (67), the catalyst exhaust passage member (68), and the downstream exhaust passage member (64) become low and the temperature of the downstream secondary air supply passage member (88b) becomes high, and
g) the pressure of the gas in the upstream secondary air supply passage member (88a) becomes high, and
h) the flow rates of the gas in the downstream secondary air supply passage member (88b) and the upstream secondary air supply passage member (88a) are eliminated.

9. The straddled vehicle (1) according to any one of claims 1 to 8, wherein, in the controller (90),
when the secondary air supply control unit (91) controls the secondary air supply valve (83) to be in the closed state,
the detection unit (96) is configured to be able to detect fixation of the secondary air supply valve (83) to the open state based on a signal of the gas state detection device (70) which is not for the dedicated secondary air supply passage member (87) by detecting at least one the following changes as compared to a normal state:
i) the pressures of the gas in the downstream secondary air supply passage member (88b) and the upstream secondary air supply passage member (88a) change to negative pressures and become low, and
j) the flow rates of the gas in the downstream secondary air supply passage member (88b) and the upstream secondary air supply passage member (88a) become high *{[0037]}.*

10. The straddled vehicle (1) according to any one of claims 1 to 9, wherein, in the controller (90),
when the secondary air supply control unit (91) controls the secondary air supply valve (83) to be in the closed state,
the detection unit (96) is configured to be able to detect fixation of the dedicated reed valve (84) to the open state based on a signal of the gas state detection device (70) which is not for the dedicated secondary air supply passage member (87) by detecting at least one the following changes as compared to a normal state:
k) the temperatures of the gas in the downstream secondary air supply passage member (88b) and the upstream secondary air supply passage member (88a) become high, and
1) the pressure in the downstream secondary air supply passage member (88a) varies not only to a negative pressure but also to a positive pressure and becomes high.

11. The straddled vehicle (1) according to any one of claims 1 to 10, wherein, in the controller (90),
when the secondary air supply control unit (91) controls the secondary air supply valve (83) to be in the open state,
the detection unit (96) is configured to be able to detect that the dedicated secondary air supply passage member (87) downstream of the dedicated reed valve (84) is about to clog based on a signal of the gas state detection device (70) which is not for the dedicated secondary air supply passage member (87) by detecting that the flow rate of the secondary air supplied to the dedicated exhaust passage member (66) through the dedicated secondary air supply passage member (88b) becomes smaller than a predetermined flow rate.

12. The straddled vehicle (1) according to any one of claim 1 to 11, further comprising a notification unit (14),
the controller (90) further including a notification command unit which is configured to send, to the notification unit (14), at least a signal notifying clogging of the dedicated secondary air supply passage member (87) downstream of the dedicated reed valve (84), when the detection unit (96) detects the clogging of the dedicated secondary air supply passage member (87) downstream of the dedicated reed valve (84).

13. The straddled vehicle (1) according to any one of claims 1 to 12, wherein the detection unit (96) is configured to determine whether the dedicated secondary air supply passage member (87) downstream of the dedicated reed valve (84) clogs based on a signal of the gas state detection device (70), which is not for the dedicated secondary air supply passage member (87), at a timing at which the secondary air supply control unit (91) controls the secondary air supply valve (83) to be in the open state and the fuel supply amount control unit (92) causes the engine main body (20) to be driven in a predetermined driving range.

14. The straddled vehicle (1) according to any one of claims 1 to 12, wherein, the detection unit (96) is configured to determine whether the dedicated secondary air supply passage member (87) downstream of the dedicated reed valve (84) clogs based on a signal of the gas state detection device (70), which is not for the dedicated secondary air supply passage member (87), at a timing at which the fuel supply amount control unit (92) controls the engine main body (20) to be driven in the warm-up state and in a predetermined driving range different from the driving range which is at least a part of the low-load range, and the secondary air supply control unit (91) controls the secondary air supply valve (83) to be in the open state.

## Patentansprüche

1. Ein Grätschsitzfahrzeug (1), das folgende Merkmale aufweist:
einen Fahrzeugkörperrahmen (4);
einen Sitz (9), der von dem Fahrzeugkörperrahmen (4) getragen wird; und
eine Motoreinheit (11), die unter einem oberen Ende des Sitzes (9) vorgesehen ist und von dem Fahrzeugkörperrahmen (4) getragen wird,
wobei die Motoreinheit (11) folgende Merkmale umfasst:
zumindest eine Verbrennungskammer (30), die innerhalb eines Motorhauptkörpers (20) gebildet ist;
eine Kraftstoffzufuhreinrichtung (55), die für jede der zumindest einen Verbrennungskammer (30) vorgesehen ist und dazu ausgebildet ist, der entsprechenden Verbrennungskammer (30) Kraftstoff zuzuführen;
einen Katalysator (65), der dazu ausgebildet ist, Abgas zu reinigen, das einen fest zugeordneten Ablassdurchgang (69) passiert, der für jede Verbrennungskammer (30) und zwischen der Verbrennungskammer (30) und einer Ausströmungsöffnung (64a) vorgesehen ist, durch die das Abgas in die Atmosphäre ausgeströmt wird;
ein fest zugeordnetes Membranventil (84), das für jede der zumindest einen Verbrennungskammer (30) und in einem fest zugeordneten Sekundärluftzufuhrdurchgang (85) vorgesehen ist, das als Sekundärluft Luft zuführt, die durch einen Lufteinlass (51a) gesaugt wird, durch den Luft aus der Atmosphäre zu dem fest zugeordneten Ablassdurchgang (69) gesaugt wird, wobei das fest zugeordnete Membranventil (84) in einem offenen Zustand ist, wenn eine Druckdifferenz durch Subtrahieren eines Drucks in dem fest zugeordneten Sekundärluftzufuhrdurchgang (85), der dem fest zugeordneten Membranventil (84) in einer Flussrichtung der Sekundärluft nachgelagert ist, von einem Druck in dem fest zugeordneten Sekundärluftzufuhrdurchgang (85), der dem fest zugeordneten Membranventil (84) in der Flussrichtung der Sekundärluft vorgelagert ist, gleich oder höher als ein vorbestimmter Druck ist, und den fest zugeordneten Sekundärluftzufuhrdurchgang (85) öffnet, und wobei das fest zugeordnete Membranventil (84) in einem geschlossenen Zustand ist, wenn die Druckdifferenz durch Subtrahieren des Drucks in dem fest zugeordneten Sekundärluftzufuhrdurchgang (85), der dem fest zugeordneten Membranventil (84) in der Flussrichtung der Sekundärluft nachgelagert ist, von dem Druck in dem fest zugeordneten Sekundärluftzufuhrdurchgang (85), der dem fest zugeordneten Membranventil (84) in der Flussrichtung der Sekundärluft vorgelagert ist, niedriger ist als der vorbestimmte Druck, und den fest zugeordneten Sekundärluftzufuhrdurchgang (85) schließt;
ein Sekundärluftzufuhrventil (83), das in dem fest zugeordneten Sekundärluftzufuhrdurchgang (85) vorgesehen ist, der dem fest zugeordneten Membranventil (84) in der Flussrichtung der Sekundärluft vorgelagert ist, wobei das Sekundärluftzufuhrventil (83) in einem offenen Zustand den fest zugeordneten Sekundärluftzufuhrdurchgang (85) öffnet, um zu ermöglichen, dass die Sekundärluft dem fest zugeordneten Sekundärluftzufuhrdurchgang (85) zugeführt wird, und wobei das Sekundärluftzufuhrventil (83) in einem geschlossenen Zustand den fest zugeordneten Sekundärluftzufuhrdurchgang (85) schließt, um eine die Zufuhr der Sekundärluft an den fest zugeordneten Sekundärluftzufuhrdurchgang (85) anzuhalten;
ein fest zugeordnetes Ablassdurchgangsbauglied (66), das für jede der zumindest einen Verbrennungskammer (30) vorgesehen ist und an einem vorgelagerten Endabschnitt des fest zugeordneten Ablassdurchgangsbauglieds (66) in einer Flussrichtung des Abgases mit der Verbrennungskammer (30) verbunden ist, wobei ein Teil des fest zugeordneten Ablassdurchgangs (69) innerhalb des fest zugeordneten Ablassdurchgangsbauglieds (66) gebildet ist;
ein vorgelagertes Ablassdurchgangsbauglied (67), das an einem vorgelagerten Endabschnitt des vorgelagerten Ablassdurchgangsbauglied (67) in der Flussrichtung des Abgases mit dem fest zugeordneten Ablassdurchgangsbauglied (66) verbunden ist und dem Katalysator (65) in der Flussrichtung des Abgases vorgelagert vorgesehen ist, wobei ein Teil des fest zugeordneten Ablassdurchgangs (69) innerhalb des vorgelagerten Ablassdurchgangsbauglieds (67) gebildet ist;
ein Katalysatorablassdurchgangsbauglied (68), das an einem vorgelagerten Endabschnitt des Katalysatorablassdurchgangsbauglieds (68) in der Flussrichtung des Abgases mit dem vorgelagerten Ablassdurchgangsbauglied (67) verbunden ist und den Katalysator (65) umfasst, in dem ein Teil des fest zugeordneten Ablassdurchgangs (69) gebildet ist;
ein nachgelagertes Ablassdurchgangsbauglied (64), das an einem vorgelagerten Endabschnitt des nachgelagerten Ablassdurchgangsbauglieds (64) in der Flussrichtung des Abgases mit dem Katalysatorablassdurchgangsbauglied (68) verbunden ist, an einem nachgelagerten Endabschnitt des nachgelagerten Ablassdurchgangsbauglieds (64) in der Flussrichtung des Abgases die Ausströmungsöffnung (64a) umfasst und dem Katalysator (65) in der Flussrichtung des Abgases nachgelagert vorgesehen ist, wobei ein Teil des fest zugeordneten Ablassdurchgangs (69) in dem nachgelagerten Ablassdurchgangsbauglied (64) gebildet ist;
ein fest zugeordnetes Sekundärluftzufuhrdurchgangsbauglied (87), das für jede der zumindest einen Verbrennungskammer (30) vorgesehen ist, an einem nachgelagerten Endabschnitt des fest zugeordneten Sekundärluftzufuhrdurchgangsbauglieds (87) in der Flussrichtung der Sekundärluft mit dem fest zugeordneten Ablassdurchgangsbauglied (66) verbunden ist, an einem vorgelagerten Endabschnitt des fest zugeordneten Sekundärluftzufuhrdurchgangsbauglieds (87) in der Flussrichtung der Sekundärluft mit dem fest zugeordneten Membranventil (84) verbunden ist und dem fest zugeordneten Membranventil (84) in der Flussrichtung der Sekundärluft nachgelagert vorgesehen ist, wobei ein Teil des fest zugeordneten Sekundärluftzufuhrdurchgangs (85) in dem fest zugeordneten Sekundärluftzufuhrdurchgangsbauglied (87) gebildet ist;
ein nachgelagertes Sekundärluftzufuhrdurchgangsbauglied (88b), das an einem nachgelagerten Endabschnitt des nachgelagerten Sekundärluftzufuhrdurchgangsbauglieds (88b) in der Flussrichtung der Sekundärluft mit dem fest zugeordneten Membranventil (84) verbunden ist, das an einem vorgelagerten Endabschnitt des nachgelagerten Sekundärluftzufuhrdurchgangsbauglieds (88b) in der Flussrichtung der Sekundärluft mit dem Sekundärluftzufuhrventil (83) verbunden ist, in dem ein Teil des fest zugeordneten Sekundärluftzufuhrdurchgangs (85) gebildet ist und das dem Sekundärluftzufuhrventil (83) in der Flussrichtung der Sekundärluft nachgelagert ist;
ein vorgelagertes Sekundärluftzufuhrdurchgangsbauglied (88a), das an einem nachgelagerten Endabschnitt des vorgelagerten Sekundärluftzufuhrdurchgangsbauglieds (88a) in der Flussrichtung der Sekundärluft mit dem Sekundärluftzufuhrventil (83) verbunden ist, das an einem vorgelagerten Endabschnitt des vorgelagerten Sekundärluftzufuhrdurchgangsbauglieds (88a) in der Flussrichtung der Sekundärluft den Lufteinlass (51a) umfasst, in dem ein Teil des fest zugeordneten Sekundärluftzufuhrdurchgangs (85) gebildet ist und das dem Sekundärluftzufuhrventil (83) in der Flussrichtung der Sekundärluft vorgelagert ist;
eine Gaszustandserfassungsvorrichtung (70), die nicht für das fest zugeordnete Sekundärluftzufuhrdurchgangsbauglied (87) ist und dazu ausgebildet ist, einen Index zu erfassen, der einen Zustand von Gas in einem anderen Durchgangsbauglied als dem fest zugeordneten Sekundärluftzufuhrdurchgangsbauglied (87) anzeigt, das dem fest zugeordneten Membranventil (84) nachgelagert ist, wobei der Index, der den Zustand des Gases anzeigt, zumindest entweder (1) eine Sauerstoffdichte von Gas in dem fest zugeordneten Ablassdurchgangsbauglied (66) und dem vorgelagerten Ablassdurchgangsbauglied (67), (2) eine Temperatur von Gas in dem nachgelagerten Sekundärluftzufuhrdurchgangsbauglied (88b), dem vorgelagerten Sekundärluftzufuhrdurchgangsbauglied (88a), dem Katalysatorablassdurchgangsbauglied (68) und dem nachgelagerten Ablassdurchgangsbauglied (64), (3) ein Druck von Gas in dem nachgelagerten Sekundärluftzufuhrdurchgangsbauglied (88b) und dem vorgelagerten Sekundärluftzufuhrdurchgangsbauglied (88a) oder (4) eine Flussrate von Gas in dem nachgelagerten Sekundärluftzufuhrdurchgangsbauglied (88b) und dem vorgelagerten Sekundärluftzufuhrdurchgangsbauglied (88a) ist; und
eine Steuerung (90), die (a) eine Kraftstoffzufuhrmengensteuereinheit (92), die dazu ausgebildet ist, eine Menge von durch die Kraftstoffzufuhreinrichtung (55) zugeführtem Kraftstoff zu steuern; (b) eine Sekundärluftzufuhrsteuereinheit (91), die dazu ausgebildet ist, das Sekundärluftzufuhrventil (83) dahin gehend zu steuern, in dem offenen Zustand oder dem geschlossenen Zustand zu sein, und das Sekundärluftzufuhrventil (83) dahin gehend zu steuern, in dem offenen Zustand zu sein, wenn der Motorhauptkörper (20) zumindest in einem kalten Zustand angetrieben wird; und (c) eine Erfassungseinheit (96) umfasst, die dazu ausgebildet ist, in der Lage zu sein, ein Verstopfen des fest zugeordneten Sekundärluftzufuhrdurchgangsbauglieds (87), das dem fest zugeordneten Membranventil (84) nachgelagert ist, auf der Basis eines Signals der Gaszustandserfassungsvorrichtung (70) zu erfassen, die nicht für das fest zugeordnete Sekundärluftzufuhrdurchgangsbauglied (87) ist, wenn die Sekundärluftzufuhrsteuereinheit (91) das Sekundärluftzufuhrventil (83) dahin gehend steuert, in dem offenen Zustand zu sein.

2. Das Grätschsitzfahrzeug (1) gemäß Anspruch 1, bei dem die Sekundärluftzufuhrsteuereinheit (91) dazu ausgebildet ist, das Sekundärluftzufuhrventil (83) dahin gehend zu steuern, in dem offenen Zustand zu sein, wenn der Motorhauptkörper (20) in einem Warmlaufzustand ist und in einem Antriebsbereich angetrieben wird, der zumindest ein Teil eines Niedriglastbereichs ist.

3. Das Grätschsitzfahrzeug (1) gemäß Anspruch 1 oder 2, bei dem bei der Steuerung (90), wenn die Sekundärluftzufuhrsteuereinheit (91) das Sekundärluftzufuhrventil (83) dahin gehend steuert, in dem offenen Zustand zu sein,
die Kraftstoffzufuhrmengensteuereinheit (92) dazu ausgebildet ist, die Kraftstoffzufuhreinrichtung (55) zu steuern, so dass in einem Normalzustand, in dem das fest zugeordnete Sekundärluftzufuhrdurchgangsbauglied (87), das dem fest zugeordneten Membranventil (84) nachgelagert ist, nicht verstopft, (i) ein Luft-Kraftstoff-Verhältnis, das aus einem Signal der Gaszustandserfassungsvorrichtung (70) geschätzt wird, die nicht für das fest zugeordnete Sekundärluftzufuhrdurchgangsbauglied (87) ist und dazu ausgebildet ist, zumindest eine der Sauerstoffdichten von Gas in dem fest zugeordneten Ablassdurchgangsbauglied (66) oder dem vorgelagerten Ablassdurchgangsbauglied (67), im Vergleich zu einem stöchiometrischen Luft-Kraftstoff-Verhältnis mager ist, und (ii) ein Luft-Kraftstoff-Verhältnis, das aus einer Sauerstoffdichte von Gas geschätzt wird, das erhalten wird, indem die dem fest zugeordneten Ablassdurchgangsbauglied (66) zugeführte Sekundärluft aus einem Abgas entfernt wird, das die Gaszustandserfassungsvorrichtung (70) passiert, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassbauglied oder dem vorgelagerten Ablassdurchgangsbauglied (67) zu erfassen, im Vergleich zu einem Luft-Kraftstoff-Verhältnis in dem Normalzustand reich ist, und
die Erfassungseinheit (96) dazu ausgebildet ist, in der Lage zu sein, das Verstopfen des fest zugeordneten Sekundärluftzufuhrdurchgangsbauglieds (87), das dem fest zugeordneten Membranventil (84) nachgelagert ist, auf der Basis eines Signals der Gaszustandserfassungsvorrichtung (70) zu erfassen, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassbauglied oder dem vorgelagerten Ablassdurchgangsbauglied (67) zu erfassen.

4. Das Grätschsitzfahrzeug (1) gemäß einem der Ansprüche 1 bis 3, bei dem bei der Steuerung (90),
wenn die Sekundärluftzufuhrsteuereinheit (91) das Sekundärluftzufuhrventil (83) dahin gehend steuert, in dem offenen Zustand zu sein,
die Kraftstoffzufuhrmengensteuereinheit (92) dazu ausgebildet ist, die Kraftstoffzufuhreinrichtung (55) zu steuern, so dass in einem Normalzustand, in dem das fest zugeordnete Sekundärluftzufuhrdurchgangsbauglied (87), das dem fest zugeordneten Membranventil (84) nachgelagert ist, nicht verstopft, eine Differenz zwischen dem Luft-Kraftstoff-Verhältnis, das aus dem Signal der Gaszustandserfassungsvorrichtung (70) geschätzt wird, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassdurchgangsbauglied (66) oder dem vorgelagerten Ablassdurchgangsbauglied (67) zu erfassen, und dem Luft-Kraftstoff-Verhältnis, das aus der Sauerstoffdichte des Gases geschätzt wird, das erhalten wird, indem die dem fest zugeordneten Ablassdurchgangsbauglied (66) zugeführte Sekundärluft aus dem Abgas entfernt wird, das die Gaszustandserfassungsvorrichtung (70) passiert, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassdurchgangsbauglied (66) oder dem vorgelagerten Ablassdurchgangsbauglied (67) zu erfassen, eins oder mehr beträgt.

5. Das Grätschsitzfahrzeug (1) gemäß einem der Ansprüche 1 bis 4, bei dem bei der Steuerung (90),
wenn die Sekundärluftzufuhrsteuereinheit (91) das Sekundärluftzufuhrventil (83) dahin gehend steuert, in dem offenen Zustand zu sein,
die Kraftstoffzufuhrmengensteuereinheit (92) dazu ausgebildet ist, die Kraftstoffzufuhreinrichtung (55) zu steuern, so dass in einem Normalzustand, in dem das fest zugeordnete Sekundärluftzufuhrdurchgangsbauglied (87), das dem fest zugeordneten Membranventil (84) nachgelagert ist, nicht verstopft, eine Differenz zwischen dem Luft-Kraftstoff-Verhältnis, das aus dem Signal der Gaszustandserfassungsvorrichtung (70) geschätzt wird, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassdurchgangsbauglied (66) oder dem vorgelagerten Ablassdurchgangsbauglied (67) zu erfassen, und dem stöchiometrischen Luft-Kraftstoff-Verhältnis größer ist als eine Differenz zwischen dem Luft-Kraftstoff-Verhältnis, das aus der Sauerstoffdichte des Gases geschätzt wird, das erhalten wird, indem die dem fest zugeordneten Ablassdurchgangsbauglied (66) zugeführte Sekundärluft aus dem Abgas entfernt wird, das die Gaszustandserfassungsvorrichtung (70) passiert, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassdurchgangsbauglied (66) oder dem vorgelagerten Ablassdurchgangsbauglied (67) zu erfassen, und dem stöchiometrischen Luft-Kraftstoff-Verhältnis.

6. Das Grätschsitzfahrzeug (1) gemäß einem der Ansprüche 1 bis 5, bei dem bei der Steuerung (90),
wenn die Sekundärluftzufuhrsteuereinheit (91) das Sekundärluftzufuhrventil (83) dahin gehend steuert, in dem offenen Zustand zu sein,
die Kraftstoffzufuhrmengensteuereinheit (92) dazu ausgebildet ist, die Kraftstoffzufuhreinrichtung (55) zu steuern, so dass in einem Normalzustand, in dem das fest zugeordnete Sekundärluftzufuhrdurchgangsbauglied (87), das dem fest zugeordneten Membranventil (84) nachgelagert ist, nicht verstopft, eine Differenz zwischen dem Luft-Kraftstoff-Verhältnis, das aus der Sauerstoffdichte des Gases geschätzt wird, das erhalten wird, indem die dem fest zugeordneten Ablassdurchgangsbauglied (66) zugeführte Sekundärluft aus dem Abgas entfernt wird, das die Gaszustandserfassungsvorrichtung (70) passiert, die nicht für das fest zugeordnete Sekundärluftzufuhrdurchgangsbauglied (87) ist und dazu ausgebildet ist, zumindest eine der Sauerstoffdichten des Gases in dem fest zugeordneten Ablassdurchgangsbauglied (66) oder dem vorgelagerten Ablassdurchgangsbauglied (67) zu erfassen, und dem stöchiometrischen Luft-Kraftstoff-Verhältnis eins oder mehr beträgt.

7. Das Grätschsitzfahrzeug (1) gemäß einem der Ansprüche 1 bis 6, bei dem bei der Steuerung (90),
wenn die Sekundärluftzufuhrsteuereinheit (91) das Sekundärluftzufuhrventil (83) dahin gehend steuert, in dem offenen Zustand zu sein,
die Erfassungseinheit (96) dazu ausgebildet ist, in der Lage zu sein, entweder eine Fixierung des fest zugeordneten Membranventils (84) an den geschlossenen Zustand oder das Verstopfen des fest zugeordneten Sekundärluftzufuhrdurchgangsbauglieds (87), das dem fest zugeordneten Membranventil (84) nachgelagert ist, auf der Basis eines Signals der Gaszustandserfassungsvorrichtung (70), die nicht für das fest zugeordnete Sekundärluftzufuhrdurchgangsbauglied (87) ist, durch Erfassen zumindest einer der folgenden Veränderungen im Vergleich zu einem Normalzustand zu erfassen:
a) das Luft-Kraftstoff-Verhältnis, das auf der Basis der Sauerstoffdichten des Abgases in dem fest zugeordneten Ablassdurchgangsbauglied (66) und dem vorgelagerten Ablassdurchgangsbauglied (67) geschätzt wird, wird ein Wert auf der reichen Seite,
b) die Temperaturen des Gases in dem nachgelagerten Sekundäriuftzufuhrdurchgangsbauglied (88b), dem vorgelagerten Sekundärluftzufuhrdurchgangsbauglied (88a), dem fest zugeordneten Ablassdurchgangsbauglied (66), dem vorgelagerten Ablassdurchgangsbauglied (67), dem Katalysatorablassdurchgangsbauglied (68) und dem nachgelagerten Ablassdurchgangsbauglied (64) werden gesenkt,
c) Druckschwankungsbereiche des Gases in dem nachgelagerten Sekundärluftzufuhrdurchgangsbauglied (88b) und dem vorgelagerten Sekundärluftzufuhrdurchgangsbauglied (88a) werden beseitigt oder verringert und
d) die Flussraten des Gases in dem nachgelagerten Sekundärluftzufuhrdurchgangsbauglied (88b) und dem vorgelagerten Sekundärluftzufuhrdurchgangsbauglied (88a) werden beseitigt oder verringert.

8. Das Grätschsitzfahrzeug (1) gemäß einem der Ansprüche 1 bis 7, bei dem bei der Steuerung (90),
wenn die Sekundärluftzufuhrsteuereinheit (91) das Sekundärluftzufuhrventil (83) dahin gehend steuert, in dem offenen Zustand zu sein,
die Erfassungseinheit (96) dazu ausgebildet ist, in der Lage zu sein, eine Fixierung des Sekundärluftzufuhrventils (83) an den geschlossenen Zustand auf der Basis eines Signals der Gaszustandserfassungsvorrichtung (70), die nicht für das fest zugeordnete Sekundärluftzufuhrdurchgangsbauglied (87) ist, durch Erfassen zumindest einer der folgenden Veränderungen im Vergleich zu einem Normalzustand zu erfassen:
e) das Luft-Kraftstoff-Verhältnis, das auf der Basis der Sauerstoffdichten des Gases in dem fest zugeordneten Ablassdurchgangsbauglied (66) und dem vorgelagerten Ablassdurchgangsbauglied (56) geschätzt wird, wird ein Wert auf der reichen Seite,
f) die Temperaturen des Gases in dem fest zugeordneten Ablassdurchgangsbauglied (66), dem vorgelagerten Ablassdurchgangsbauglied (67), dem Katalysatorablassdurchgangsbauglied (68) und dem nachgelagerten Ablassdurchgangsbauglied (64) werden niedrig und die Temperatur des nachgelagerten Sekundärluftzufuhrdurchgangsbauglieds (88b) wird hoch und
g) der Druck des Gases in dem vorgelagerten Sekundärluftzufuhrdurchgangsbauglied (88a) wird hoch und
h) die Flussraten des Gases in dem nachgelagerten Sekundärluftzufuhrdurchgangsbauglied (88b) und dem vorgelagerten Sekundärluftzufuhrdurchgangsbauglied (88a) werden beseitigt.

9. Das Grätschsitzfahrzeug (1) gemäß einem der Ansprüche 1 bis 8, bei dem bei der Steuerung (90),
wenn die Sekundärluftzufuhrsteuereinheit (91) das Sekundärluftzufuhrventil (83) dahin gehend steuert, in dem geschlossenen Zustand zu sein,
die Erfassungseinheit (96) dazu ausgebildet ist, in der Lage zu sein, eine Fixierung des Sekundärluftzufuhrventils (83) an den offenen Zustand auf der Basis eines Signals der Gaszustandserfassungsvorrichtung (70), die nicht für das fest zugeordnete Sekundärluftzufuhrdurchgangsbauglied (87) ist, durch Erfassen zumindest einer der folgenden Veränderungen im Vergleich zu einem Normalzustand zu erfassen:
i) die Drücke des Gases in dem nachgelagerten Sekundärluftzufuhrdurchgangsbauglied (88b) und dem vorgelagerten Sekundärluftzufuhrdurchgangsbauglied (88a) ändern sich zu negativen Drücken und werden niedrig und
j) die Flussraten des Gases in dem nachgelagerten Sekundärluftzufuhrdurchgangsbauglied (88b) und dem vorgelagerten Sekundärluftzufuhrdurchgangsbauglied (88a) werden hoch *{**[0037]}.***

10. Das Grätschsitzfahrzeug (1) gemäß einem der Ansprüche 1 bis 9, bei dem bei der Steuerung (90),
wenn die Sekundärluftzufuhrsteuereinheit (91) das Sekundärluftzufuhrventil (83) dahin gehend steuert, in dem geschlossenen Zustand zu sein,
die Erfassungseinheit (96) dazu ausgebildet ist, in der Lage zu sein, eine Fixierung des fest zugeordneten Membranventils (84) an den offenen Zustand auf der Basis eines Signals der Gaszustandserfassungsvorrichtung (70), die nicht für das fest zugeordnete Sekundärluftzufuhrdurchgangsbauglied (87) ist, durch Erfassen zumindest einer der folgenden Veränderungen im Vergleich zu einem Normalzustand zu erfassen:
k) die Temperaturen des Gases in dem nachgelagerten Sekundärluftzufuhrdurchgangsbauglied (88b) und dem vorgelagerten Sekundärluftzufuhrdurchgangsbauglied (88a) werden hoch und
I) der Druck in dem nachgelagerten Sekundärluftzufuhrdurchgangsbauglied (88a) wechselt nicht nur zu einem negativen Druck, sondern auch zu einem positiven Druck und wird hoch.

11. Das Grätschsitzfahrzeug (1) gemäß einem der Ansprüche 1 bis 10, bei dem bei der Steuerung (90),
wenn die Sekundärluftzufuhrsteuereinheit (91) das Sekundärluftzufuhrventil (83) dahin gehend steuert, in dem offenen Zustand zu sein,
die Erfassungseinheit (96) dazu ausgebildet ist, in der Lage zu sein, zu erfassen, dass das fest zugeordnete Sekundärluftzufuhrdurchgangsbauglied (87), das dem fest zugeordneten Membranventil (84) nachgelagert ist, kurz davor ist, zu verstopfen, auf der Basis eines Signals der Gaszustandserfassungsvorrichtung (70), die nicht für das fest zugeordnete Sekundärluftzufuhrdurchgangsbauglied (87) ist, durch Erfassen, dass die Flussrate der Sekundärluft, die dem fest zugeordneten Ablassdurchgangsbauglied (66) durch das fest zugeordnete Sekundärluftzufuhrdurchgangsbauglied (88b) zugeführt wird, kleiner wird als eine vorbestimmte Flussrate.

12. Das Grätschsitzfahrzeug (1) gemäß einem der Ansprüche 1 bis 11, das ferner eine Mitteilungseinheit (14) aufweist,
wobei die Steuerung (90) ferner eine Mitteilungsbefehlseinheit umfasst, die dazu ausgebildet ist, zumindest ein Signal, das ein Verstopfen des fest zugeordneten Sekundärluftzufuhrdurchgangsbauglieds (87) meldet, das dem fest zugeordneten Membranventil (84) nachgelagert ist, an die Mitteilungseinheit (14) zu senden, wenn die Erfassungseinheit (96) das Verstopfen des fest zugeordneten Sekundärluftzufuhrdurchgangsbauglieds (87) erfasst, das dem fest zugeordneten Membranventil (84) nachgelagert ist.

13. Das Grätschsitzfahrzeug (1) gemäß einem der Ansprüche 1 bis 12, wobei die Erfassungseinheit (96) dazu ausgebildet ist, zu bestimmen, ob das fest zugeordnete Sekundärluftzufuhrdurchgangsbauglied (87), das dem fest zugeordneten Membranventil (84) nachgelagert ist, verstopft, auf der Basis eines Signals der Gaszustandserfassungsvorrichtung (70), die nicht für das fest zugeordnete Sekundärluftzufuhrdurchgangsbauglied (87) ist, zu einer Zeit, zu der die Sekundärluftzufuhrsteuereinheit (91) das Sekundärluftzufuhrventil (83) dahin gehend steuert, in dem offenen Zustand zu sein, und die Kraftstoffzufuhrmengensteuereinheit (92) bewirkt, dass der Motorhauptkörper (20) in einem vorbestimmten Antriebsbereich angetrieben wird.

14. Das Grätschsitzfahrzeug (1) gemäß einem der Ansprüche 1 bis 12, wobei die Erfassungseinheit (96) dazu ausgebildet ist, zu bestimmen, ob das fest zugeordnete Sekundärluftzufuhrdurchgangsbauglied (87), das dem fest zugeordneten Membranventil (84) nachgelagert ist, verstopft, auf der Basis eines Signals der Gaszustandserfassungsvorrichtung (70), die nicht für das fest zugeordnete Sekundärluftzufuhrdurchgangsbauglied (87) ist, zu einer Zeit, zu der die Kraftstoffzufuhrmengensteuereinheit (92) den Motorhauptkörper (20) dahin gehend steuert, in dem Warmlaufzustand und in einem vorbestimmten Antriebsbereich angetrieben zu werden, der sich von dem Antriebsbereich unterscheidet, der zumindest ein Teil des Schwachlastbereichs ist, und die Sekundärluftzufuhrsteuereinheit (91) das Sekundärluftzufuhrventil (83) dahin gehend steuert, in dem offenen Zustand zu sein.

## Revendications

1. Véhicule à selle (1) comprenant:
un châssis de carrosserie de véhicule (4);
un siège (9) supporté par le châssis de carrosserie de véhicule (4); et
une unité moteur (11) prévue sous une extrémité supérieure du siège (9) et supportée par le châssis de carrosserie de véhicule (4),
l'unité de moteur (11) comportant:
au moins une chambre de combustion (30) formée à l'intérieur d'un corps principal de moteur (20);
un moyen d'alimentation de carburant (55) prévu pour chacune des au moins une chambre de combustion (30) et configuré pour alimenter du carburant vers la chambre de combustion correspondante (30);
un catalyseur (65) configuré pour purifier les gaz d'échappement passant par un passage d'échappement dédié (69) qui est prévu pour chaque chambre de combustion (30) et entre la chambre de combustion (30) et un orifice de décharge (64a) à travers lequel les gaz d'échappement sont évacués à l'atmosphère;
une soupape à clapet dédiée (84) qui est prévue pour chacune des au moins une chambre de combustion (30) et dans un passage d'alimentation d'air secondaire dédié (85) alimentant, comme air secondaire, de l'air aspiré à travers une entrée d'air (51a) à travers laquelle de l'air est aspiré de l'atmosphère vers le passage d'échappement dédié (69), la soupape à clapet dédiée (84) se trouvant dans un état ouvert lorsqu'une différence de pression en soustrayant une pression dans le passage d'alimentation d'air secondaire dédié (85) en aval de la soupape à clapet dédiée (84) dans une direction de circulation de l'air secondaire d'une pression dans le passage d'alimentation d'air secondaire dédié (85) en amont de la soupape à clapet dédiée (84) dans la direction de circulation de l'air secondaire est égale ou supérieure à une pression prédéterminée et ouvrant le passage d'alimentation d'air secondaire dédié (85), et la soupape à clapet dédiée (84) se trouvant dans un état fermé lorsque la différence de pression en soustrayant la pression dans le passage d'alimentation d'air secondaire dédié (85) en aval de la soupape à clapet dédiée (84) dans la direction de circulation de l'air secondaire de la pression dans le passage d'alimentation d'air secondaire dédié (85) en amont de la soupape à clapet dédiée (84) dans la direction de circulation de l'air secondaire est inférieure à la pression prédéterminée et fermant le passage d'alimentation d'air secondaire dédié (85);
une soupape d'alimentation d'air secondaire (83) qui est prévue dans le passage d'alimentation d'air secondaire dédié (85) en amont de la soupape à clapet dédiée (84) dans la direction de circulation de l'air secondaire, la soupape d'alimentation d'air secondaire (83) dans un état ouvert ouvrant le passage d'alimentation d'air secondaire dédié (85) pour permettre que l'air secondaire soit alimenté vers le passage d'alimentation d'air secondaire dédié (85), et la soupape d'alimentation d'air secondaire (83) dans un état fermé fermant le passage d'alimentation d'air secondaire dédié (85) pour arrêter l'alimentation de l'air secondaire vers le passage d'alimentation d'air secondaire dédié (85);
un élément de passage d'échappement dédié (66) qui est prévu pour chacune des au moins une chambre de combustion (30) et est connecté à la chambre de combustion (30) au niveau d'une partie d'extrémité amont de l'élément de passage d'échappement dédié (66) dans une direction de circulation des gaz d'échappement, une partie du passage d'échappement dédié (69) étant formée à l'intérieur de l'élément de passage d'échappement dédié (66);
un élément de passage d'échappement amont (67) qui est connecté à l'élément de passage d'échappement dédié (66) au niveau d'une partie d'extrémité amont de l'élément de passage d'échappement amont (67) dans la direction de circulation des gaz d'échappement et est prévu en amont du catalyseur (65) dans la direction de circulation des gaz d'échappement, une partie du passage d'échappement dédié (69) étant formée à l'intérieur de l'élément de passage d'échappement amont (67);
un élément de passage d'échappement de catalyseur (68) qui est connecté à l'élément de passage d'échappement amont (67) au niveau d'une partie d'extrémité amont de l'élément de passage d'échappement de catalyseur (68) dans la direction de circulation des gaz d'échappement et comporte le catalyseur (65) dans lequel est formée une partie du passage d'échappement dédié (69);
un élément de passage d'échappement aval (64), qui est connecté à l'élément de passage d'échappement de catalyseur (68) au niveau d'une partie d'extrémité amont de l'élément de passage d'échappement aval (64) dans la direction de circulation des gaz d'échappement, comporte l'orifice de décharge (64a) au niveau d'une partie d'extrémité aval de l'élément de passage d'échappement aval (64) dans la direction de circulation des gaz d'échappement, et est prévu en aval du catalyseur (65) dans la direction de circulation des gaz d'échappement, une partie du passage d'échappement dédié (69) étant formée dans l'élément de passage d'échappement aval (64);
un élément de passage d'alimentation d'air secondaire dédié (87) qui est prévu pour chacune des au moins une chambre de combustion (30) est connecté à l'élément de passage d'échappement dédié (66) au niveau d'une partie d'extrémité aval de l'élément de passage d'alimentation d'air secondaire dédié (87) dans la direction de circulation de l'air secondaire, est connecté à la soupape à clapet dédiée (84) au niveau d'une partie d'extrémité amont de l'élément de passage d'alimentation d'air secondaire dédié (87) dans la direction de circulation de l'air secondaire, et est prévu en aval de la soupape à clapet dédiée (84) dans la direction de circulation de l'air secondaire, une partie du passage d'alimentation d'air secondaire dédié (85) étant formée dans l'élément de passage d'alimentation d'air secondaire dédié (87);
un élément de passage d'alimentation d'air secondaire aval (88b) qui est connecté à la soupape à clapet dédiée (84) au niveau d'une partie d'extrémité aval de l'élément de passage d'alimentation d'air secondaire aval (88b) dans la direction de circulation de l'air secondaire, qui est connecté à la soupape d'alimentation d'air secondaire (83) au niveau d'une partie d'extrémité amont de l'élément de passage d'alimentation d'air secondaire aval (88b) dans la direction de circulation de l'air secondaire, dans lequel est formée une partie du passage d'alimentation d'air secondaire dédié (85), et qui se trouve en amont de la soupape d'alimentation d'air secondaire (83) dans la direction de circulation de l'air secondaire;
un élément de passage d'alimentation d'air secondaire amont (88a) qui est connecté à la soupape d'alimentation d'air secondaire (83) au niveau d'une partie d'extrémité aval de l'élément de passage d'alimentation d'air secondaire amont (88a) dans la direction de circulation de l'air secondaire, qui comporte l'entrée d'air (51a) au niveau d'une partie d'extrémité amont de l'élément de passage d'alimentation d'air secondaire amont (88a) dans la direction de circulation de l'air secondaire, dans lequel est formée une partie du passage d'alimentation d'air secondaire dédié (85), et qui se trouve en amont de la soupape d'alimentation d'air secondaire (83) dans la direction de circulation de l'air secondaire;
un dispositif de détection d'état de gaz (70) qui n'est pas destiné à l'élément de passage d'alimentation d'air secondaire dédié (87) et est configuré pour détecter un indice indiquant un état de gaz dans un élément de passage autre que l'élément de passage d'alimentation d'air secondaire dédié (87) en aval de la soupape à clapet dédiée (84), l'indice indiquant l'état de gaz qui est au moins l'un parmi (1) la densité d'oxygène des gaz dans l'élément de passage d'échappement dédié (66) et dans l'élément de passage d'échappement amont (67), (2) une température de gaz dans l'élément de passage d'alimentation d'air secondaire aval (88b), dans l'élément de passage d'alimentation d'air secondaire amont (88a), dans l'élément de passage d'échappement de catalyseur (68) et dans l'élément de passage d'échappement aval (64), (3) une pression de gaz dans l'élément de passage d'alimentation d'air secondaire aval (88b) et dans l'élément de passage d'alimentation d'air secondaire amont (88a), ou (4) un débit de gaz dans l'élément de passage d'alimentation d'air secondaire aval (88b) et dans l'élément de passage d'alimentation d'air secondaire amont (88a); et
un moyen de commande (90) qui comporte (a) une unité de commande de quantité d'alimentation de carburant (92) configurée pour commander une quantité de carburant alimentée par le moyen d'alimentation de carburant (55); (b) une unité de commande d'alimentation d'air secondaire (91) qui est configurée pour commander la soupape d'alimentation d'air secondaire (83) de manière à se trouver à l'état ouvert ou l'état fermé et pour commander la soupape d'alimentation d'air secondaire (83) de manière à se trouver à l'état ouvert lorsque le corps principal de moteur (20) est entraîné au moins dans un état froid; et (c) une unité de détection (96) configurée pour pouvoir détecter le colmatage de l'élément de passage d'alimentation d'air secondaire dédié (87) en aval de la soupape à clapet dédiée (84) sur base d'un signal du dispositif de détection d'état de gaz (70) qui n'est pas destiné à l'élément de passage d'alimentation d'air secondaire dédié (87) lorsque l'unité de commande d'alimentation d'air secondaire (91) commande que la soupape d'alimentation d'air secondaire (83) de manière à se trouver à l'état ouvert.

2. Véhicule à selle (1) selon la revendication 1, dans lequel l'unité de commande d'alimentation d'air secondaire (91) est configurée pour commander la soupape d'alimentation d'air secondaire (83) de manière à se trouver à l'état ouvert lorsque le corps principal de moteur (20) se trouve dans un état de préchauffage et est entraîné dans une plage de conduite qui est au moins une partie d'une plage de faible charge.

3. Véhicule à selle (1) selon la revendication 1 ou 2, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de commande de quantité d'alimentation de carburant (92) est configurée pour commander le moyen d'alimentation de carburant (55) de sorte que, dans un état normal dans lequel l'élément de passage d'alimentation d'air secondaire dédié (87) en aval de la soupape à clapet dédiée (84) ne se colmate pas, (i) un rapport air-carburant estimé à partir d'un signal du dispositif de détection d'état de gaz (70), qui n'est pas destiné à l'élément de passage d'alimentation d'air secondaire dédié (87) et est configuré pour au moins l'une des densités d'oxygène des gaz dans l'élément de passage d'échappement dédié (66) ou dans l'élément de passage d'échappement amont (67), soit pauvre en comparaison avec un rapport air-carburant stœchiométrique et (ii) un rapport air-carburant estimé à partir de la densité d'oxygène des gaz obtenu en éliminant l'air secondaire alimenté vers l'élément de passage d'échappement dédié (66) des gaz d'échappement passant par le dispositif de détection d'état de gaz (70), qui n'est pas destiné à l'élément de passage d'alimentation d'air secondaire dédié (87) et est configuré pour détecter au moins l'une des densités d'oxygène des gaz dans l'élément d'échappement dédié ou dans l'élément de passage d'échappement amont (67) soit riche en comparaison avec un rapport air-carburant à l'état normal, et
l'unité de détection (96) est configurée de manière à être à même de détecter le colmatage de l'élément de passage d'alimentation d'air secondaire dédié (87) en aval de la soupape à clapet dédiée (84) sur base d'un signal du dispositif de détection d'état de gaz (70), qui n'est pas destiné à l'élément de passage d'alimentation d'air secondaire dédié (87) et est configuré pour détecter au moins l'une des densités d'oxygène des gaz dans l'élément d'échappement dédié ou dans l'élément de passage d'échappement amont (67).

4. Véhicule à selle (1) selon l'une quelconque des revendications 1 à 3, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de commande de quantité d'alimentation de carburant (92) est configurée pour commander le moyen d'alimentation de carburant (55) de sorte que, dans un état normal dans lequel l'élément de passage d'alimentation d'air secondaire dédié (87) en aval de la soupape à clapet dédiée (84) ne se colmate pas, une différence entre le rapport air-carburant estimé à partir du signal du dispositif de détection d'état de gaz (70), qui n'est pas destiné à l'élément de passage d'alimentation d'air secondaire dédié (87) et est configuré pour détecter au moins l'une des densités d'oxygène des gaz dans l'élément de passage d'échappement dédié (66) ou dans l'élément de passage d'échappement amont (67), et le rapport air-carburant estimé à partir de la densité d'oxygène des gaz obtenu en éliminant l'air secondaire alimenté vers l'élément de passage d'échappement dédié (66) des gaz d'échappement passant par le dispositif de détection d'état de gaz (70), qui n'est pas destiné à l'élément de passage d'alimentation d'air secondaire dédié (87) et est configuré pour détecter au moins l'une des densités d'oxygène des gaz dans l'élément de passage d'échappement dédié (66) ou dans l'élément de passage d'échappement amont (67) soit de 1 ou plus.

5. Véhicule à selle (1) selon l'une quelconque des revendications 1 à 4, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de commande de quantité d'alimentation de carburant (92) est configurée pour commander le moyen d'alimentation de carburant (55) de sorte que, dans un état normal dans lequel l'élément de passage d'alimentation d'air secondaire dédié (87) en aval de la soupape à clapet dédiée (84) ne se colmate pas, une différence entre le rapport air-carburant estimé à partir du signal du dispositif de détection d'état de gaz (70), qui n'est pas destiné à l'élément de passage d'alimentation d'air secondaire dédié (87) et est configuré pour détecter au moins l'une des densités d'oxygène des gaz dans l'élément de passage d'échappement dédié (66) ou dans l'élément de passage d'échappement amont (67), et le rapport air-carburant stœchiométrique soit supérieure à une différence entre le rapport air-carburant estimé à partir de la densité d'oxygène des gaz obtenu en éliminant l'air secondaire alimenté vers l'élément de passage d'échappement dédié (66) des gaz d'échappement passant par le dispositif de détection d'état de gaz (70), qui n'est pas destiné à l'élément de passage d'alimentation d'air secondaire dédié (87) et est configuré pour détecter au moins l'une des densités d'oxygène des gaz dans l'élément de passage d'échappement dédié (66) ou dans l'élément de passage d'échappement amont (67), et le rapport stœchiométrique air-carburant.

6. Véhicule à selle (1) selon l'une quelconque des revendications 1 à 5, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de commande de quantité d'alimentation de carburant (92) est configurée pour commander le moyen d'alimentation de carburant (55) de sorte que, dans un état normal dans lequel l'élément de passage d'alimentation d'air secondaire dédié (87) en aval de la soupape à clapet dédiée (84) ne se colmate pas, une différence entre le rapport air-carburant estimé à partir de la densité d'oxygène des gaz obtenu en éliminant l'air secondaire alimenté vers l'élément de passage d'échappement dédié (66) des gaz d'échappement passant par le dispositif de détection d'état de gaz (70), qui n'est pas destiné à l'élément de passage d'alimentation d'air secondaire dédié (87) et est configuré pour détecter au moins l'une des densités d'oxygène des gaz dans l'élément de passage d'échappement dédié (66) ou dans l'élément de passage d'échappement amont (67), et le rapport air-carburant stœchiométrique soit de 1 ou plus.

7. Véhicule à selle (1) selon l'une quelconque des revendications 1 à 6, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de détection (96) est configurée pour pouvoir détecter soit la fixation de la soupape à clapet dédiée (84) à l'état fermé, soit le colmatage de l'élément de passage d'alimentation d'air secondaire dédié (87) en aval de la soupape à clapet dédiée (84) sur base d'un signal du dispositif de détection d'état de gaz (70) qui n'est pas destiné à l'élément de passage d'alimentation d'air secondaire dédié (87) en détectant au moins l'un des changements suivants par rapport à un état normal:
a) le rapport air-carburant estimé sur base des densités d'oxygène des gaz d'échappement dans l'élément de passage d'échappement dédié (66) et dans l'élément de passage d'échappement amont (67) devient une valeur du côté riche,
b) les températures des gaz dans l'élément de passage d'alimentation d'air secondaire aval (88b), dans l'élément de passage d'alimentation d'air secondaire amont (88a), dans l'élément de passage d'échappement dédié (66), dans l'élément de passage d'échappement amont (67), dans l'élément de passage d'échappement de catalyseur (68) et dans l'élément de passage d'échappement aval (64) sont abaissées,
c) les plages de variations de pressions des gaz dans l'élément de passage d'alimentation d'air secondaire aval (88b) et dans l'élément de passage d'alimentation d'air secondaire amont (88a) sont éliminées ou diminuées, et
d) les débits des gaz dans l'élément de passage d'alimentation d'air secondaire aval (88b) et dans l'élément de passage d'alimentation d'air secondaire amont (88a) sont éliminés ou diminués.

8. Véhicule à selle (1) selon l'une quelconque des revendications 1 à 7, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de détection (96) est configurée pour être à même de détecter la fixation de la soupape d'alimentation d'air secondaire (83) à l'état fermé sur base d'un signal du dispositif de détection d'état de gaz (70) qui n'est pas destiné à l'élément de passage d'alimentation d'air secondaire dédié (87) en détectant au moins l'un des changements suivants en comparaison avec un état normal:
e) le rapport air-carburant estimé sur base des densités d'oxygène des gaz dans l'élément de passage d'échappement dédié (66) et dans l'élément de passage d'échappement amont (56) devient une valeur du côté riche,
f) les températures des gaz dans l'élément de passage d'échappement dédié (66), dans l'élément de passage d'échappement amont (67), dans l'élément de passage d'échappement de catalyseur (68) et dans l'élément de passage d'échappement aval (64) deviennent basses et la température de l'élément de passage d'alimentation d'air secondaire aval (88b) devient élevée, et
g) la pression des gaz dans l'élément de passage d'alimentation d'air secondaire amont (88a) devient élevée, et
h) les débits des gaz dans l'élément de passage d'alimentation d'air secondaire aval (88b) et dans l'élément de passage d'alimentation d'air secondaire amont (88a) sont éliminés.

9. Véhicule à selle (1) selon l'une quelconque des revendications 1 à 8, dans lequel, dans le moyen de commande (90),
lorsque l'unité de commande d'alimentation d'air secondaire (91) commande la soupape d'alimentation d'air secondaire (83) de manière à se trouver dans l'état fermé,
l'unité de détection (96) est configurée pour être à même de détecter la fixation de la soupape d'alimentation d'air secondaire (83) à l'état ouvert sur base d'un signal du dispositif de détection d'état de gaz (70) qui n'est pas destiné à l'élément de passage d'alimentation d'air secondaire dédié (87) en détectant au moins l'un des changements suivants en comparaison avec un état normal:
i) les pressions des gaz dans l'élément de passage d'alimentation d'air secondaire aval (88b) et dans l'élément de passage d'alimentation d'air secondaire amont (88a) changent à des pressions négatives et deviennent basses, et
j) les débits des gaz dans l'élément de passage d'alimentation d'air secondaire aval (88b) et dans l'élément de passage d'alimentation d'air secondaire amont (88a) deviennent élevés ***{[0037]}.***

10. Véhicule à selle (1) selon l'une quelconque des revendications 1 à 9, dans lequel, dans le moyen de commande (90),
lorsque l'unité de commande d'alimentation d'air secondaire (91) commande la soupape d'alimentation d'air secondaire (83) de manière à se trouver à l'état fermé,
l'unité de détection (96) est configurée pour être à même de détecter la fixation de la soupape à clapet dédiée (84) à l'état ouvert sur base d'un signal du dispositif de détection d'état de gaz (70) qui n'est pas destiné à l'élément de passage d'alimentation d'air secondaire dédié (87) en détectant au moins l'un des changements suivants en comparaison avec un état normal:
k) les températures des gaz dans l'élément de passage d'alimentation d'air secondaire aval (88b) et dans l'élément de passage d'alimentation d'air secondaire amont (88a) deviennent élevées, et
1) la pression dans l'élément de passage d'alimentation d'air secondaire aval (88a) varie non seulement à une pression négative, mais également à une pression positive et devient élevée.

11. Véhicule à selle (1) selon l'une quelconque des revendications 1 à 10, dans lequel, dans le moyen de commande (90),
lorsque l'unité de commande d'alimentation d'air secondaire (91) commande la soupape d'alimentation d'air secondaire (83) de manière à se trouver à l'état ouvert,
l'unité de détection (96) est configurée pour être à même de détecter que l'élément de passage d'alimentation d'air secondaire dédié (87) aval de la soupape à clapet dédiée (84) est sur le point de se colmater sur base d'un signal du dispositif de détection d'état de gaz (70) qui n'est pas destiné à l'élément de passage d'alimentation d'air secondaire dédié (87) en détectant que le débit de l'air secondaire alimenté vers l'élément de passage d'échappement dédié (66) à travers l'élément de passage d'alimentation d'air secondaire dédié (88b) devient inférieur à un débit prédéterminé.

12. Véhicule à selle (1) selon l'une quelconque des revendications 1 à 11, comprenant par ailleurs une unité de notification (14),
le moyen de commande (90) comportant par ailleurs une unité de commande de notification qui est configurée pour envoyer à l'unité de notification (14) au moins un signal notifiant le colmatage de l'élément de passage d'alimentation d'air secondaire dédié (87) en aval de la soupape à clapet dédiée (84) lorsque l'unité de détection (96) détecte le colmatage de l'élément de passage d'alimentation d'air secondaire dédié (87) en aval de la soupape à clapet dédiée (84).

13. Véhicule à selle (1) selon l'une quelconque des revendications 1 à 12, dans lequel l'unité de détection (96) est configurée pour déterminer si l'élément de passage d'alimentation d'air secondaire dédié (87) en aval de la soupape à clapet dédiée (84) se colmate sur base d'un signal du dispositif de détection d'état de gaz (70), qui n'est pas destiné à l'élément de passage d'alimentation d'air secondaire dédié (87), à un moment auquel l'unité de commande d'alimentation d'air secondaire (91) commande la soupape d'alimentation d'air secondaire (83) de manière à se trouver à l'état ouvert et l'unité de commande de quantité d'alimentation de carburant (92) amène le corps principal de moteur (20) à être entraîné dans une plage de conduite prédéterminée.

14. Véhicule à selle (1) selon l'une quelconque des revendications 1 à 12, dans lequel l'unité de détection (96) est configurée pour déterminer si l'élément de passage d'alimentation d'air secondaire dédié (87) en aval de la soupape à clapet dédiée (84) se colmate sur base d'un signal du dispositif de détection d'état de gaz (70), qui n'est pas destiné à l'élément de passage d'alimentation d'air secondaire dédié (87), à un moment auquel l'unité de commande de quantité d'alimentation de carburant (92) commande le corps principal du moteur (20) de manière à être entraîné à l'état de préchauffage et dans une plage de conduite prédéterminée différente de la plage de conduite qui est au moins une partie de la plage à faible charge, et l'unité de commande d'alimentation d'air secondaire (91) commande la soupape d'alimentation d'air secondaire (83) de manière à se trouver à l'état ouvert.
